(19)

Europäisches Patentamt

European Patent Office

Office européen des brevets

(11) **EP 2 183 321 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(21) Anmeldenummer: **08774643.4**

(22) Anmeldetag: **02.07.2008**

(51) Int Cl.:
**C08L 83/08** (2006.01)      **C09D 4/00** (2006.01)
**C09D 183/08** (2006.01)      **C04B 41/49** (2006.01)
**C23C 22/28** (2006.01)      **C08K 5/09** (2006.01)
**C04B 41/00** (2006.01)      **C03C 17/30** (2006.01)
**C04B 41/64** (2006.01)

(86) Internationale Anmeldenummer:
**PCT/EP2008/058509**

(87) Internationale Veröffentlichungsnummer:
**WO 2009/030538 (12.03.2009 Gazette 2009/11)**

(54) **WÄSSRIGE SILANSYSTEME BASIEREND AUF BIS(TRIALKOXYSILYLALKYL)AMINEN**

AQUEOUS SILANE SYSTEMS BASED ON BIS(TRIALKOXYSILYLALKYL)AMINES

SYSTÈMES DE SILANES AQUEUX À BASE DE BIS(TRIALCOXYSILYLALKYL)AMINES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.08.2007 DE 102007040807**
**01.02.2008 DE 102008007261**

(43) Veröffentlichungstag der Anmeldung:
**12.05.2010 Patentblatt 2010/19**

(60) Teilanmeldung:
**14182564.6 / 2 813 550**

(73) Patentinhaber: **Evonik Degussa GmbH**
**45128 Essen (DE)**

(72) Erfinder:
• ALBERT, Philipp
  79539 Lörrach (DE)
• JUST, Eckhard
  79618 Rheinfelden (DE)
• WASSMER, Christian
  79688 Hausen (DE)
• STANDKE, Burkhard
  79540 Lörrach (DE)

(56) Entgegenhaltungen:
EP-A- 0 716 127          EP-A- 1 031 593
WO-A-00/39177          DE-A1- 10 335 178
US-A1- 2003 049 486

EP 2 183 321 B1

## Beschreibung

Die Erfindung betrifft eine wässrige Zusammensetzung bis-aminofunktioneller Siliciumverbindungen, die im Wesentlichen frei von organischen Lösungsmitteln ist und auch beim Vernetzen im Wesentlichen keinen Alkohol mehr freisetzt sowie Verfahren zu deren Herstellung als auch deren Verwendung beispielsweise zur Hydrophobierung oder Oleophobierung von Metall- oder Glasoberflächen. Zunehmendes Interesse finden wässrige Silansysteme, die weniger bzw. keine organischen Lösungsmittel enthalten und deshalb umweltfreundlicher sind. Allerdings lassen sich stabile, wässrige Silansysteme nicht einfach durch Mischen von Silanen mit Wasser herstellen, denn viele Silane sind in der wässrigen Phase nicht löslich und hydrolysieren und kondensieren bei Kontakt mit Wasser.

Beispielsweise beschreibt die DE 10 2005 004 872 A1 die Herstellung von wässrigen Öl-in-Wasser Emulsionen basierend auf Alkoxysilanen und deren kondensierten Polymeren in Gegenwart eines Emulgators. Hergestellt wird die Emulsion in einem Hochdruck-Homogenisator. Zur Anwendung kommen die wässrigen Emulsionen bei der Oberflächenbehandlung von z. B. porösen, mineralischen Baustoffen. Bei der Anwendung werden durch die Hydrolyse nach wie vor Alkohole freigesetzt.

Die Herstellung von wasserlöslichen Aminopolysiloxanen wird in EP 0 590 270 A2 beschrieben. Die Aminosilane werden in einer 50-%igen alkoholischen Lösung mit einer entsprechenden Wassermenge versetzt, die dem 0,25- bis 4-fachen molaren Siliciumgehalt der eingesetzten Silane entspricht, und bei 60 °C anhydrolysiert. Unter den erwähnten Verfahrensbedingungen kommt es bei Verwendung größeren Wassermengen bei der Synthese der Hydrolysate zu Ausfällungen. Die erhaltenen Produkte sind anschließend in Wasser löslich. Nachteilig ist der hohe Gehalt an organischen Lösungsmitteln und der damit einhergehende niedrige Flammpunkt. Die Härtung einer verdünnten wässrigen Polysiloxanmischung erfolgt bei 80 °C.

DE 103 35 178 A1 offenbart die Herstellung von wasserverdünnbaren Silansystemen, z. B. einer Mischung aus 3-Aminopropyltrialkoxysilan und Bis(trialkoxysilylpropyl)amin in alkoholischen Lösemitteln. Diese Silanmischung wird mit einer definierten molaren Wassermenge partiell hydrolysiert. Die Silanmischung ist mit einem Alkoholgehalt von 25 bis 99,99 % nicht VOC frei (volatile organic compound).

In US 5 051 129 wird eine Zusammensetzung einer wässrigen Lösung eines wasserlöslichen Aminosilans und eines Alkyltrialkoxysilans offenbart. Die Herstellung erfolgt durch Zugabe einer definierten Menge Wasser zur Silanmischung und anschließender Temperierung bei 60 °C. Die so hergestellte Silanmischung wird in einem bestimmten Verhältnis in Wasser gelöst und dient zur Hydrophobierung von Oberflächen.

EP 0 716 128 A1 offenbart wasserbasierte Organopolysiloxan enthaltende Zusammensetzungen, Verfahren zu deren Herstellung als auch deren Verwendung. Durch Mischen von wasserlöslichen Aminoalkylalkoxysilanen mit Alkyltrialkoxysilanen und/oder Dialkyldialkoxysilanen und Zugabe von Wasser bei einem definierten pH-Wert entstehen Organopolysiloxan enthaltende Zusammensetzungen. Der entstandene Hydrolysealkohol wird destillativ entfernt. Es werden deshalb VOC-freie wässrige Polysiloxan enthaltende Zusammensetzungen erhalten, die zur Hydrophobierung von Oberflächen, mineralischen Baustoffen und weiteren Anwendungen eingesetzt werden können.

Wässrige Silansysteme bestehend aus Reaktionsprodukten der Umsetzung von Aminoalkyltrialkoxysilanen und Bis-Silylaminosilanen offenbart EP 1 031 593 A2. Diese wässrige Lösungen, basierend auf der alleinigen Hydrolyse von Bis-Silylaminosilanen, sollen nicht applikationsfähig sein, da sie zum Gelieren und Ausflocken neigen.

In WO 00/39177 A2 wird die Anwendung von Bis-Silylaminosilanen und/oder Bis-Silylpolysulfanen in wässrigen, alkoholhaltigen Lösungen beschrieben. Die Silane werden mit Wasser, einem Alkohol und optional Essigsäure gemischt und mindestens 24 h hydrolysiert. Anschließend erfolgt die Anwendung auf Metallen.

US 6,955,728 B1 beschreibt die Anwendung von Acetoxysilanen in Kombination mit anderen Silanen in wässrigen Lösungen und die Anwendung auf Metallen. Unter anderem werden auch Bis(trialkyoxysilylpropyl)amine in Kombination mit Acetoxysilanen eingesetzt. Über die Stabilität der wässrigen Lösungen wird keine Aussage gemacht. Zum Verkauf werden unhydrolysierte Konzentrate in Form eines 2-komponentigen Systems bzw. ein wasserfreies, vorgemischtes Konzentrat empfohlen, um eine Kondensation der Silane zu unterbinden. Die wässrigen Lösungen enthalten nach dem Vermischen immer den Hydrolysealkohol.

WO 2006/010666 A1 betrifft wässrige Systeme aus Blockcokondensaten, die aus Alkyltrialkoxysilanen und einem Co-Kondensat aus einem fluorierten Silan mit einem Aminosilan und gegebenenfalls einem Co-Kondensat aus einem Aminosilan mit einem Alkylsilan hergestellt werden.

In WO 2004/076717 A1 werden Bis-Silylaminosilane in Kombination mit weiteren Silanen und einem Metallchelat in wässrigen Lösungen eingesetzt. Die Silane werden durch eine Alterung von mindestens 2 Wochen in wässrigen Konzentraten teilweise hydrolysiert. Anschließend wird ein Metallchelat zugesetzt und mit Wasser weiter verdünnt. Darüber hinaus enthalten alle wässrigen Formulierungen nach wie vor den Alkohol aus der Hydrolyse. Die wässrigen Systeme werden zur Vorbehandlung von Metalloberflächen eingesetzt.

WO 2004/076718 A1 betrifft ein Verfahren zur Beschichtung einer metallischen Oberfläche mit einer wässrigen Lösung, die ein partiell hydrolysiertes Silan wie z. B. Bis-Silylaminosilan und ein partiell hydrolysiertes Fluor-haltiges Silan enthält. Durch den Einsatz des Fluor-haltigen Silans wird die Hydrophobie und die Korrosionsbeständigkeit des Beschichtungssystems verbessert. Der Hydrolysealkohol wird nicht aus den Systemen entfernt.

US 5 206 285 beschreibt die Herstellung und Anwendung von wasserbasierten Additionsprodukten aus einem Epoxy- und einem primären Aminosilan. Die wässrigen Silansysteme sind nicht lösungsmittelfrei. Sie werden zur Metallbeschichtung eingesetzt und sollen die Korrosionsbeständigkeit verbessern.

In EP 1 760 128 A1 wird eine wässrige, aus zwei Komponenten bestehende, Haftvermittlerzusammensetzung offenbart, wobei eine der Komponenten Organosiloxane ohne Si-O-Si-Bindungen und ein wasserfreies Tensid umfasst und die zweite Komponente wässrig ist. Ferner wird deren Verwendung in Verfahren zum Verkleben oder Abdichten beansprucht. Eine Komponente des Haftvermittlers kann ein Bis-Silylaminosilan enthalten.

DE 10 2004 037 045 A1 beansprucht wässrige Silan-Nanokomposite, die aus Glycidyloxypropylalkoxysilanen und wässrigen Kieselsolen in Anwesenheit eines Hydrolysekatalysators hergestellt werden. Die wässrigen Systeme sind praktisch lösungsmittelfrei und sind für Metallbeschichtungen geeignet. Nachteilig sind die hohen Vernetzungstemperaturen von 200 °C.

Aufgabe der vorliegenden Erfindung war es, wässrige und VOC-freie Zusammensetzungen auf Basis von bis-aminofunktionellen Alkoxysilanen bereitzustellen, die vielfältig einsetzbar sind, insbesondere gute hydrophobe, korrosionsschützende und/oder primernde Eigenschaften aufweisen, und bevorzugt bei niedrigen Temperaturen vernetzen.

Gelöst wird die Aufgabe gemäß den Patentansprüchen.

Überraschend wurde gefunden, dass stabile wässrige, im Wesentlichen alkoholfreie Zusammensetzungen basierend auf Siliciumverbindungen aus bis-aminofunktionellen Alkoxysilanen mit organofunktionellen, insbesondere mit alkylfunktionellen Alkoxysilanen erhalten werden können, wobei die Siliciumverbindungen insbesondere im Wesentlichen vollständig hydrolysiert vorliegen. Zudem vernetzen diese Zusammensetzungen bereits bei niedrigen Temperaturen.

Als vernetzen wird die Kondensation der Siliciumverbindungen untereinander, und insbesondere die Kondensation mit Funktionalitäten von Substraten verstanden. Hierdurch, und gegebenenfalls durch Wechselwirkungen oder Reaktionen, wie beispielsweise eine Komplexbildung, der Aminofunktionen der Siliciumverbindungen mit Funktionalitäten von Substraten, bilden sich stabile, Kochwasser beständige Schichten aus.

Auf eine Glasplatte, Metalloberfläche oder andere Substratoberflächen aufgetragen, vernetzt die Co-Kondensate enthaltende Zusammensetzung schnell mit dem Substrat und bildet eine hydrophobe Schicht hoher Festigkeit aus. So lösen sich die bei Raumtemperatur vernetzten Silansysteme auch in kochendem Wasser nicht wieder von der Glas- oder Metalloberfläche ab. Auch Silansysteme basierend auf Co-Kondensaten aus bis-aminofunktionellen Alkoxysilanen, wie Bis(triethoxysilan)amin bzw. Bis(trimethoxysilan)amin, mit n-Propyltriethoxysilan, n-Propyltrimethoxysilan (PTMO), 3-Glycidoxypropyltriethoxysilan (GLYEO) 3-Glycidoxypropyltrimethoxysilan (GLYMO), 3-Aminopropyltriethoxysilan (AMEO), 3-Aminopropyltrimethoxysilan (AMMO), Methacryloxypropyltriethoxysilan (MEEO), Methacryloxypropyltrimethoxysilan (MEMO), N-(n-Butyl)-3-aminopropyltriethoxysian, Vinyltrimethoxysilan (VTMO), N-(n-Butyl)-3-aminopropyltrimethoxysian (Dynasylan® 1189), 3-Mercaptopropyltrimethoxysilan (MTMO), 3-Mercaptopropyltrietoxysilan (MTEO), N-2-Aminoethyl-3-Aminopropyltrimethoxysilane (DAMO), Polyethylenglycolfunktionalisierte Alkoxysilane, Tetraethoxysilan (Dynasylan A), Tetramethoxysilan (Dynasylan M), Methyltriethoxysilan (MTES), Methyltrimethoxysilan (MTMS), Bis(triethoxysilylpropyl)tetrasulfan (Si 69), Bis(triethoxysilylpropyl)disulfan (Si 266), Bis(trimethoxysilylpropyl)disulfan Bis(trimethoxysilylpropyl)tetrasulfan, Vinyltriethoxysilan (VTEO), 1-Aminomethyltriethoxysilyn, 1-Aminomethyltrimethoxysilyn, 1-Methacryloxy-methyltrimethoxysilan 1-Methacryloxymethyltriethoxysilan, 1-Mercaptomethyl-triethoxysilan, 1-Mercaptomethyltrimethoxysilan, Isobutyltrimethoxysilan, Isobutyltriethoxysilan, Octyltriethoxysilan (Dynasylan® OTEO), Octyltrimethoxysilan, Hexadecyltriethoxysilan, Hexadecyltrimethoxysilan, Phenyltrimethoxysilan, Phenyltriethoxysilan, 2-Aminoethyl-3-aminopropyl-methyldimethoxysilane, 2-Aminoethyl-3-aminopropylmethyldiethoxysilane, Ureidopropyltrimethoxysilan, Ureidopropyltriethoxysilan, Tridecafluorooctyltriethoxysilan, Tridecafluorooctyltrimethoxysilan, Dynasylan® 1151 (alkoholfreies Aminosilanhydrolysat), Dynasylan® HS 2627 (alkoholfreies Co-Kondensat aus Aminosilan und Alkylsilan), Dynasylan® HS 2776 (wässriges, alkoholfreies Co-Kondensat aus Diaminosilan und Alkylsilan), Dynasylan® HS 2909 (wässriges, alkoholfreies Co-Kondensat aus Aminosilan und Alkylsilan), Dynasylan® HS 2926 (wässriges, alkoholfreies Produkt basierend auf Epoxysilan), Dynasylan® SIVO 110 (wässriges, alkoholfreies Produkt aus Epoxysilan), weisen diese hohe Festigkeit auf einer Substratschicht auf.

Von besonderer Relevanz ist es, dass die Hydrophobie und Reaktivität der gehärteten Oberfläche durch die spezielle Kombination der Silane gezielt eingestellt werden kann. Vorraussetzung ist jedoch immer das Vorliegen mindestens einer bis-aminofunktionellen Verbindung bzw. dessen Hydrolyse- und/oder Kondensationsprodukten in der im Wesentlichen lösemittelfreien Zusammensetzung, wie beispielsweise von Bis(trialkoxysilan)amin, um die niedrige Härtungstemperatur zu erhalten. Daher härten selbst wässrige Silansysteme auf Basis anders substituierter Alkoxysilane bei niedrigen Temperaturen aus, sofern als weitere Komponente eine bis-aminofunktionelle Verbindung vorliegt. Selbst durch Co-Kondensation mit Fluorsilanen sind wässrige Silansysteme herstellbar, die bei Raumtemperatur härten, d. h. insbesondere mit den reaktiven Funktionalitäten der Substratoberfläche vernetzten und/oder Wechselwirkungen oder Reaktionen eingehen, und stabile oleophobe Oberflächen bilden.

Gemäß einer Ausführungsform ist es möglich, durch Verwendung der erfindungsgemäßen, wässrigen, im Wesentlichen lösungsmittelfreien bis-aminofunktionelle Siliciumverbindungen enthaltenden Zusammensetzung zusammen in Mischungen mit weiteren Silansystemen, die Produkteigenschaften dieser Silansysteme positiv zu modifizieren. Beispielsweise kann die Härtungstemperatur dieser Silansysteme ohne nachteiligen Einfluss auf die Performance gesenkt werden.

Das Anwendungsspektrum der erfindungsgemäßen wässrigen Silansysteme ist sehr vielseitig, so können sie als Hydrophobierungsmittel auf unterschiedlichsten Substraten wie z. B. Glas oder Beton, Ziegelstein, Sandstein etc. eingesetzt werden. In der Kombination mit Fluorsilanen - als Co-Kondensat oder Mischung - können zudem Substrate mit zusätzlich oleophoben und Anti-Graffiti- und/oder Anti-Fingerprint-Eigenschaften erhalten werden. Weitere Anwendungsgebiete ergeben sich in der Primerung von Substratoberflächen, wie beispielsweise Glas, Metall, Beton, Sandstein, Ziegelstein und weitere anorganische Substrate etc. Durch die Primerung von z. B. Metalloberflächen wird die Haftung der Deckschicht und damit auch ein verbesserter Korrosionsschutz erzielt. Des Weiteren können die wässrigen Silansysteme auf Basis von bis-aminofunktionellen Silanverbindungen auch zur Gesteinsverfestigung oder in wässrigen Lack-Formulierungen eingesetzt werden.

Die im Folgenden angegebenen Gehalte in Gewichtsprozent in der Zusammensetzung (Endprodukt) spiegeln den Anteil der eingesetzten Alkoxysilanverbindung(en) vor der erfindungsgemäßen Umsetzung und Entfernen des Hydrolysealkohols aus dem Reaktionsgemisch wider.

Erfindungsgemäße Zusammensetzungen, im weiteren auch Silansysteme genannt, enthalten wasserlösliche bis-aminofunktionelle Siliciumverbindungen, insbesondere alkoxygruppenfreie Siliciumverbindungen, und Wasser, insbesondere sind die Siliciumverbindungen aus Alkoxysilanen abgeleitet, und weisen vernetzende Strukturelemente auf, die kettenförmige, cyclische, vernetzte und/oder raumvernetzte Strukturen bilden, wobei beispielsweise mindestens eine Struktur in idealisierter Form der allgemeinen Formel I entspricht, bzw. gemäß der idealisierten Formel I darstellbar ist, siehe auch Schema I,

$$(R^2O[(Y)_2Si(A)Si(Y)_2O]_a[Si(C)(R^5)_y(OR^4)_{1-y}O]_c[Si(D)(R^7)_u(OR^6)_{1-u}O]_d[Si(E)(R^8)_v(OR^9)_{1-v}O]_wR^9 \bullet (HX)_e \quad (I)$$

wobei in den aus Alkoxysilanen abgeleiteten Strukturelementen

- A einem Bis-Aminoalkyl-Rest,
- C einem Alkyl-Rest,
- D einem Epoxy- oder Ether-Rest und
- E einem organofunktionellen Rest entsprechen,
- Y entspricht $OR^1$ oder in vernetzten und/oder raumvernetzten Strukturen unabhängig voneinander $OR^1$ oder $O_{1/2}$,
- wobei $R^1$, $R^2$, $R^4$, $R^6$ und/oder $R^9$ Wasserstoff und $R^3$, $R^5$, $R^7$ und/oder $R^8$ organofunktionellen Resten entsprechen,
- HX eine Säure darstellt, wobei X ein anorganischer oder organischer Säure-Rest ist,
- mit $0 \leq x \leq 1$, $0 \leq y \leq 1$, $0 \leq u \leq 1$, $v = 0$ oder $1$, $a \geq 1$, $c \geq 0$, $d \geq 0$, $w \geq 0$, $e \geq 0$, insbesondere ist $e \geq 1$, und $(a+c+d+w) \geq 2$,
- wobei die Zusammensetzung frei von organischen Lösemitteln ist und beim Vernetzen keinen Alkohol mehr freisetzt, wobei der Gehalt an organischen Lösungsmitteln kleiner 5 Gew.-% ist, und einen pH-Wert zwischen 1 und 5,4 aufweist. Insbesondere weist die Zusammensetzung einen Flammpunkt oberhalb 90 °C auf.

Unter einem Strukturelement, einer monomeren Siloxan- oder Bis-Siloxan-Einheit, wird vorliegend die einzelne Baueinheit M, D, T oder Q verstanden, d. h. das alkoxysubstituierte Silan, das daraus gebildete hydrolysierte Silan und/oder das Kondensationsprodukt. Erfindungsgemäß bilden die Strukturelemente, insbesondere die folgenden Strukturelemente $[(Y)_2Si(A)Si(Y)_2O]_a$, $(Y)[(Y)_2Si(A)Si(Y)_2O]_a$, $[Si(C)(R^5)_y(OR^4)_{1-y}O]_c$, $[Si(C)(R^5)_y(OR^4)_{1-y}O]R^4_c$, $[Si(D)(R^7)_u(OR^6)_{1-u}O]_d$, $[Si(D)(R^7)_u(OR^6)_{1-u}O]R^6_d$, $[Si(E)(R^8)_v(OR^9)_{1-v}O]_w$ und/oder $[Si(E)(R^8)_v(OR^9)_{1-v}O]R^9$, kettenförmige, cyclische, vernetzte und/oder raumvernetzte Strukturen mit statistischer und/oder regelloser Verteilung der Strukturelemente und/oder Blockkondensate der Strukturelemente aus, siehe beispielsweise Schema I. Die allgemeine Formel I gibt nicht die tatsächlich vorliegende Struktur oder Zusammensetzung wieder. Sie entspricht einer idealisierten Darstellungsmöglichkeit. Die Zusammensetzung enthält bevorzugt Siliciumverbindungen, die durch statistische und/oder regellose Co-Hydrolyse und/oder Co-Kondensation und/oder Blockkondensation der genannten Strukturelemente, basierend auf den erfindungsgemäß mit A, C, D oder E-Resten substituierten Alkoxysilanen, entstehen und/oder sich unter den gewählten Versuchsbedingungen bilden.

Das Substitutionsmuster gilt entsprechen auch für die nicht in idealisierter Form dargestellten kettenförmigen, cyclischen, vernetzten und/oder raumvernetzten Silansysteme/Siliciumverbindungen, wobei Y einem $OR^1$ oder in vernetzten und/oder raumvernetzten Strukturen unabhängig voneinander $OR^1$ oder $O_{1/2}$ - in einer Siloxanbindung - entspricht, $R^1$, $R^2$, $R^4$, $R^6$ und/oder $R^9$ entsprechen im Wesentlichen Wasserstoff, wobei in vernetzten und/oder raumvernetzten Strukturen auch aus den Resten $OR^2$, $OR^4$, $OR^6$ und/oder $OR^9$ jeweils unabhängig voneinander Siloxanbindungen mit $O_{1/2}$ gebildet werden können bzw. diese Reste unabhängig voneinander als $O_{1/2}$ vorliegen können und $R^3$,

$R^5$, $R^7$ und/oder $R^8$ entsprechen organofunktionellen Resten, A einem Bis-Aminoalkyl-Rest, B einem Aminoalkyl-Rest, C einem Alkyl-Rest, D einem Epoxy- oder Ether-Rest und E einem organofunktionellen Rest. In Schema I sind beispielhaft, nicht abschließend, mögliche idealisierte Darstellungsvarianten der allgemeinen Formel I dargestellt.

Schema I: Beispielhafte, nicht abschließend dargestellte, mögliche idealisierte Abbildungsvarianten der allgemeinen Formel I

$(R^2O)[(R^2O)_{1-x}(R^3)_xSi(B)O]_b[(Y)_2Si(A)Si(Y)_2O]_a[Si(C)(R^5)_y(OR^4)_{1-y}O]_c[Si(D)(R^7)_u(OR^6)_{1-u}O]_d[Si(E)(R^8)_v(OR^9)_{1-v}O]_wR^9$ $\bullet$ $(HX)_e$

$(R^2O)[(R^2O)_{1-x}(R^3)_xSi(B)O]_b[Si(C)(R^5)_y(OR^4)_{1-y}O]_c[(Y)_2Si(A)Si(Y)_2O]_a[Si(D)(R^7)_u(OR^6)_{1-u}O]_d[Si(E)(R^8)_v(OR^9)_{1-v}O]_wR^9$ $\bullet$ $(HX)_e$

$(R^2O)[(R^2O)_{1-x}(R^3)_xSi(B)O]_b[Si(C)(R^5)_y(OR^4)_{1-y}O]_c[Si(D)(R^7)_u(OR^6)_{1-u}O]_d[(Y)_2Si(A)Si(Y)_2O]_a[Si(E)(R^8)_v(OR^9)_{1-v}O]_wR^9$ $\bullet$ $(HX)_e$

$(R^2O)[(R^2O)_{1-x}(R^3)_xSi(B)O]_b(Y)_2Si(A)Si(Y)_2O]_a[Si(C)(R^5)_y(OR^4)_{1-y}O]_c[(Y)_2Si(A)Si(Y)_2O]_a[Si(D)(R^7)_u(OR^6)_{1-u}O]_d[Si(E)(R^8)_v(OR^9)_{1-v}O]_wR^9$ $\bullet$ $(HX)_e$

$(R^4O)[(R^4O)_{1-y}(R^5)_ySi(C)O]_c[Si(B)(OR^2)_{1-x}(R^3)_xO]_b[Si(D)(R^7)_u(OR^6)_{1-u}O]_d[(Y)_2Si(A)Si(Y)_2O]_a[Si(E)(R^8)_v(OR^9)_{1-v}O]_wR^9$ $\bullet$ $(HX)_e$

$(R^4O)[(R^4O)_{1-y}(R^5)_ySi(C)O]_c[(Y)_2Si(A)Si(Y)_2O]_a[Si(B)(OR^2)_{1-x}(R^3)_xO]_b[(Y)_2Si(A)Si(Y)_2O]_a[Si(E)(R^8)_v(OR^9)_{1-v}O]_w[Si(D)(R^7)_u(OR^6)_{1-u}O]_d$ $R^6$ $\bullet$ $(HX)_e$

$(Y)[(Y)_2Si(A)Si(Y)_2O]_a(R^4O)[(R^4O)_{1-y}(R^5)_ySi(C)O]_c[Si(B)(OR^2)_{1-x}(R^3)_xO]_b[Si(E)(R^8)_v(OR^9)_{1-v}O]_w[Si(D)(R^7)_u(OR^6)_{1-u}O]_d$ $R^6$ $\bullet$ $(HX)_e$

$(R^4O)[(R^4O)_{1-y}(R^5)_ySi(C)O]_c[(Y)_2]Si(A)Si(Y)_2O]_a[Si(B)(OR^2)_{1-x}(R^3)_xO]_b[Si(E)(R^8)_v(OR^9)_{1-v}O]_w[Si(D)(R^7)_u(OR^6)_{1-u}O]_d[(Y)_2Si(A)Si(Y)_2O]_aR^1$ $\bullet$ $(HX)_e$

Als Zusammensetzung, die im Wesentlichen frei von organischen Lösungsmitteln ist, sollen Zusammensetzungen verstanden werden, die bis auf sehr geringe Gehalte keine organischen Lösungsmittel, insbesondere keine Alkohole, wie Methanol, Ethanol oder Propanol, mehr enthalten. Definitionsgemäß wurde auch der bei der Hydrolyse der Alkoxysilane gebildete Hydrolysealkohol aus diesen Zusammensetzungen nahezu vollständig entfernt. Als im Wesentlichen frei von organischen Lösungsmitteln, insbesondere frei von Alkoholen und/oder Alkoxy-Gruppen, d. h. es wird auch beim Vernetzten im Wesentlichen kein Alkohol mehr freigesetzt, gilt eine Zusammensetzung, wenn der Gehalt kleiner 5 Gew.-%, insbesondere kleiner 4 Gew.-%, bevorzugt unter 2 Gew.-%, insbesondere unter 1 Gew.-%, besonders bevorzugt unter 0,5 Gew.-% oder unter 0,1 Gew.-% beträgt. Insbesondere beträgt der Gehalt der Siliciumverbindung 1 bis 40 Gew.-%, insbesondere 5 bis 40 Gew.-%, bevorzugt 7,5 bis 40 Gew.-%, besonders bevorzugt 12,5 bis 40 Gew.-%.

Erfindungsgemäße bis-aminofunktionelle Zusammensetzungen enthalten mindestens ein bis-aminofunktionelles Strukturelement, basierend auf einem bis-aminofunktionellen Silan der Formel II und vernetzen bei Temperaturen ab 0 °C, insbesondere ab 5 °C, bevorzugt zwischen 5 und 30 °C, besonders bevorzugt zwischen 15 und 25 °C. Zusammensetzungen mit hervorragenden Eigenschaften vernetzen zwischen 5 und 30 °C innerhalb von 24 Stunden, insbesondere innerhalb von 12 Stunden, bevorzugt innerhalb von 2 Stunden.

Bis-aminofunktionelle Zusammensetzungen gemäß der Erfindung enthalten mindestens ein bis-aminofunktionelles Strukturelement, basierend auf einem Bis(trialkoxysilan)amin, wobei die Zähler der Strukturelemente a $\geq$ 1, c $\geq$ 1, d $\geq$ 0, w $\geq$ 0 und e $\geq$ 1 sind. Bevorzugt sind Kombinationen von mindestens einem Bis(trialkoxysilylalkyl)amin, Bis-N,N'-(trialkoxysilylalkyl)alkylendiamin und/oder Bis-N,N'-(trialkoxysilylalkyl)dialkylentriamin, insbesondere von Bis(triethoxysilylpropyl)-amin $((H_5C_2O)_3Si(CH_2)_3NH(CH_2)_3Si(OC_2H_5)_3$, Bis-AMEO), Bis(trimethoxysilylpropyl)-amin $((H_3CO)_3Si(CH_2)_3NH(CH_2)_3Si(OCH_3)_3$, Bis-AMMO), Bis-DAMO $((H_3CO)_3Si(CH_2)_3NH(CH_2)_2NH(CH_2)_3Si(OCH_3)_3)$ und/oder Bis-TRIAMO $((H_3CO)_3Si(CH_2)_3NH(CH_2)_2NH(CH_2)_2NH(CH_2)_3Si(OCH_3)_3)$, wobei Bis(triethoxysilyl-propyl)amin $((H_5C_2O)_3Si(CH_2)_3NH(CH_2)_3Si(OC_2H_5)_3$, Bis-AMEO) besonders bevorzugt ist, mit einem Alkylalkoxysilan, insbesondere mit n-Propyltriethoxysilan (PTEO), n-Propyltrimethoxysilan (PTMO), Dimethyldimethoxysilan (DMDMO), Dimethyldiethoxysilan, n-Octyltrialkoxysilan, Isobutyltrimethoxysilan, Isobutyltriethoxysilan, Octyltriethoxysilan (Dynasylan® OTEO), Octyltrimethoxysilan, Hexadecyltriethoxysilan, Hexadecyltrimethoxysilan, Phenyltrimethoxysilan, Phenyltriethoxysilan und/oder Methyltriethoxysilan, wobei die Silane sowohl Methoxy als auch Ethoxy substituiert sein können. Zweckmäßige Gewichtsverhältnisse, in denen die Edukte zueinander eingesetzt werden und dann auch entsprechend in der Zusammensetzung vorliegen, sind bis-aminofunktionelles Silan zu alkylfunktionellem Silan von 3:1 bis 1:2.

Bevorzugt liegen die Siliciumverbindungen mit einem Gesamtgehalt von 5 bis 35 Gew.-% oder auch von 7,5 bis 35 Gew.-%, insbesondere mit 12,5 bis 35 Gew.-%, bevorzugt mit 15 bis 35 Gew.-%, besonders bevorzugt mit 15 bis 30 Gew.-% in der Zusammensetzung vor. Zweckmäßig kann auch eine Zusammensetzung mit einem Gehalt von 1 bis 12,5 Gew.-%, insbesondere von 1 bis 7,5 Gew.% der Siliciumverbindung sein, dies kann insbesondere durch weitere Verdünnung der Zusammensetzung erfolgen, beispielsweise kurz vor deren Verwendung als Mittel zur Behandlung und/oder Modifizierung von Substraten.

Besteht die Zusammensetzung aus Silanen mit a $\geq$ 1 und b, c und d = 0 oder aus Silanen mit a $\geq$ 1 und b $\geq$ 1

und c, d = 0 liegen die Siliciumverbindungen bevorzugt mit einem Gesamtgehalt von 12,5, bevorzugt 15 bis 35 Gew.-%, besonders bevorzugt 15 bis 30 Gew.-% in der Zusammensetzung vor.

Wobei generell alle Zusammensetzungen besonders stabil sind, wenn der pH-Wert im Bereich zwischen 1,0 und 5,4, insbesondere 3,0 und 5,4, bevorzugt zwischen 3,0 und 4,8, besonders bevorzugt zwischen 3,5 bis 4,8 liegt. Zweckmäßig kann in den im Wesentlichen lösemittelfreien Zusammensetzungen, die auch beim Vernetzten im Wesentlichen keinen Alkohol mehr freisetzen der pH-Wert auch so eingestellt werden, dass die Siliciumverbindungen noch wasserlöslich und/oder stabil sind. In der Regel kann dies bis zu einem pH-Wert von etwa 6,0 oder auch knapp darüber gegeben sein.

In den erfindungsgemäßen Zusammensetzungen entspricht A in einem Strukturelement, wie $[(Y)_2Si(A)Si(Y)_2O]_a$, insbesondere in der allgemeinen Formel I, einem Bis-Aminoalkyl-Rest abgeleitet aus der allgemeinen Formel II

$$(OR^1)_3Si\text{-}A\text{-}Si(OR^1)_3 \qquad (II)$$

mit A für eine bis-aminofunktionelle Gruppe der Formel III

$$-(CH_2)_i-[NH(CH_2)_f]_gNH[(CH_2)_{f*}NH]_{g*}-(CH_2)_{i*}- \qquad (III),$$

worin i, i*, f, f*, g oder g* gleich oder verschieden sind, mit i und/oder i* = 0 bis 8, f und/oder f* = 1, 2 oder 3, g und/oder g* = 0, 1 oder 2 und $R^1$ einem linearen, cyclischen und/oder verzweigten Alkyl-Rest mit 1 bis 4 C-Atomen entsprechen, wobei i und/oder i* insbesondere einer der Zahlen 1, 2 ,3 oder 4, bevorzugt 3, entspricht, besonders bevorzugt ist Bis(triethoxysilylpropyl)amin $[(H_5C_2O)_3Si(CH_2)_3NH(CH_2)_3Si(OC_2H_5)_3$, Bis-AMEO] mit i, i* = 3 und g, g* = 0. Weitere bevorzugte bis-aminofunktionelle Alkoxysilane sind:

$(H_3CO)_3Si(CH_2)_3NH(CH_2)_3Si(OCH_3)_3$(Bis-AMMO),
$(H_3CO)_3Si(CH_2)_3NH(CH_2)_2NH(CH_2)_3Si(OCH_3)_3$(Bis-DAMO),
$(H_3CO)_3Si(CH_2)_3NH(CH_2)_2NH(CH_2)_2NH(CH_2)_3Si(OCH_3)_3$ (Bis-TRIAMO),
Bis(diethoxymethylsilylpropyl)amin, Bis(dimethoxymethylsilylpropyl)amin,
Bis(triethoxysilylmethyl)amin, Bis(trimethoxysilylmethyl)amin,
Bis(diethoxymethylsilylmethyl)amin, Bis(dimethoxymethylsilylmethyl)amin,
$(H_3CO)_2(CH_3)Si(CH_2)_3NH(CH_2)_2NH(CH_2)_3Si(OCH_3)_2(CH_3)$ und/oder
$(H_3CO)_3(CH_3)Si(CH_2)_3NH(CH_2)_2NH(CH_2)_2NH(CH_2)_3Si(OCH_3)_2(CH_3)$

Ferner entspricht C in einem Strukturelement, beispielsweise in $[Si(C)(R^5)_y(OR^4)_{1-y}O]$, in der erfindungsgemäßen Zusammensetzung, insbesondere in der allgemeinen Formel I, einem Alkyl-Rest abgeleitet aus der allgemeinen Formel VI

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten und/oder cyclischen Alkyl-Rest mit 1 bis 12 C Atomen und/oder Aryl-Rest, $R^4$ einem linearen und/oder verzweigten Alkyl-Rest mit 1 bis 4 C-Atomen entsprechen. Bevorzugt ist y = 0 oder 1, wobei C einem linearen oder verzweigten Alkyl-Rest mit 1 bis 8 C-Atomen, bevorzugt einem Methyl-, Ethyl, besonders bevorzugt n-Propyl-, iso-Propyl- oder Octyl-Rest, $R^5$ einem linearen, verzweigten oder cyclischen Alkyl-Rest mit 1 bis 8 C-Atomen, bevorzugt einem Methyl-, Ethyl, besonders bevorzugt n-Propyl-, iso-Propyl- und/oder Octyl-Rest, $R^4$ einem linearen und/oder verzweigten Alkyl-Rest mit 1 bis 3 C-Atomen, besonders bevorzugt einem Methyl-, Ethyl- und/oder iso-Propyl- oder n-Propyl-Rest entsprechen.

Beispiele hierfür sind: Propyltrimethoxysilan (PTMO), Dimethyldimethoxysilan (DMDMO), Dimethyldiethoxysilan, Methyltriethoxysilan (MTES), Propylmethyldimethoxysilan, Propylmethyldiethoxysilan, n-Octyl-methyl-dimethoxysilan, n-Hexyl-methyl-dimethoxysilan, n-Hexyl-methyl-diethoxysilan, Propyl-methyl-diethoxysilan, Propyl-methyl-diethoxysilan, Propytriethoxysilan, Isobutyltrimethoxysilan, Isobutyl-triethoxysilan, Octyltrimethoxysilan, Octyltriethoxysilan, n-Hexyl-triethoxysilan, Cyclohexyl-triethoxysilan, n-Propyl-tri-n-butoxysilan, n-Propyl-trimethoxysilan, n-Propyl-triethoxysilan, Isobutyl-triethoxysilan, Hexadecyltriethoxysilan, Hexadecyltrimethoxysilan, Octadecyltriethoxysilan, Octadecyltrimethoxysilan, Octadecylmethyldiethoxysilan, Octadecylmethyldimethoxysilan, Hexadecylmethyldimethoxysilan und/oder Hexadecylmethyldiethoxysilan sowie Mischungen dieser Silane.

In den erfindungsgemäßen Zusammensetzungen entspricht D in einem Strukturelement, beispielsweise in $[Si(D)(R^7)_u(OR^6)_{i-u}O]$, insbesondere in der allgemeinen Formel I, einem Epoxy- oder Ether-Rest abgeleitet aus der allgemeinen Formel VII

$$D\text{-}Si(R^7)_u(OR^6)_{3-u} \qquad\qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl-Rest oder einem Polyalkylglykol-3-propyl-Rest, $R^7$ einem linearen, verzweigten und/oder cyclischen Alkyl-Rest mit 1 bis 4 C-Atomen und $R^6$ einen linearen und/oder verzweigten Alkyl-Rest mit 1 bis 4 C-Atomen entsprechen. Zweckmäßig ist der Polyalkylglykol-Rest ausgewählt aus der Gruppe Polyethylenglykol-3-propyl (PEG-propyl), Polypropylenglykol-3-propyl, Polymethylen-glykol-3-propyl oder aus Co-Polymeren mit Propylenglykol- und Ethylenglykolgruppen, beispielsweise mit statistischer Verteilung oder Blockpolymeren, wobei die Polyalkylenglykolgruppen vorzugsweise einen mittleren Verteilungsgrad von etwa 3 bis 14 Alkylenglykolgruppen je Molekül aufweisen.

E entsprich in einem Strukturelement, beispielsweise als Strukturelement $[Si(E)(R^8)_v(OR^9)_{1-v}O]_wR^9$, der erfindungsgemäßen Zusammensetzung insbesondere in der allgemeinen Formel I, einem organofunktionellen Rest abgeleitet aus der allgemeinen Formel VIII

$$E\text{-}Si(R^8)_v(OR^9)_{3-v} \qquad\qquad (VIII)$$

mit v = 0 oder 1, wobei $R^8$ einem linearen, verzweigten oder cyclischen Alkyl-Rest mit 1 bis 4 C-Atomen, wobei E einem Rest $R^{8*}\text{-}Y_m\text{-}(CH_2)_s$-, und $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 ist und/oder E einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen. Gemäß einer bevorzugten Ausführungsform entspricht E einer $F_3C(CF_2)_r(CH_2)_s$-Gruppe, wobei r eine ganze Zahl von 0 bis 9 darstellt, s gleich 0 oder 2 ist, besonders bevorzugt ist r gleich 5 und s gleich 2, $CF_3(CF_2)_5(CH_2)_2$- oder eine $CF_3(C_6H_4)$- oder eine $C_6F_5$-Gruppe. Gemäß einer zweckmäßigen Ausführungsform entspricht E einem Sulfanalkyl-Rest der allgemeinen Formel IX mit - $(CH_2)_q\text{-}X\text{-}(CH_2)_q\text{-}Si(R^8)_v(OR^9)_{3-v}$ (IX), wobei q = 1, 2 oder 3, X = $S_p$, wobei p im Mittel 2 bzw. 2,18 oder im Mittel 4 bzw. 3,8 mit einer Verteilung von 2 bis 12 Schwefelatomen in der Kette entspricht, und v, $R^8$ und $R^9$ wie vorstehend definiert sind. Die resultierenden Silane, in denen E der allgemeinen Formel IX entspricht, können beispielsweise Bis(triethoxysilylpropyl)disulfan (Si 266), Bis(trimethoxysilylpropyl)-disulfan, Bis(triethoxysilylpropyl)tetrasulfan (Si 69), Bis(trimethoxysilylpropyl)-terasulfan, Bis(triethoxysilylmethyl)disulfan, Bis(trimethoxysilylmethyl)disulfan, Bis(triethoxysilylpropyl)disulfan, Bis(diethoxymethylsilylpropyl)disulfan, Bis(di-methoxymethylsilylpropyl)disulfan, Bis(dimethoxymethylsilylmethyl)disulfan, Bis(diethoxymethylsilylmethyl)disulfan, Bis(diethoxymethylsilylpropyl)tetrasulfan, Bis(dimethoxymethylsilylpropyl)tetrasulfan, Bis(dimethoxymethylsilylmethyl)tetrasulfan und/oder Bis(diethoxymethylsilylmethyl)tetrasulfan sein. Gemäß einer weiteren zweckmäßigen Ausführungsform entspricht E einem Methoxy-, Ethoxy-, iso-Propoxy oder n-Propoxy-Rest, wobei v = 0 ist, so dass die Verbindung der allgemeinen Formel VIII einem Tetraalkoxysilan entspricht. Übliche Tetraalkoxysilanen sind Tetramethoxysilan oder Tetraethoxysilan.

Besonders bevorzugte Verbindungen der allgemeinen Formel VIII sind: Tridecafluor-1,1,2,2-tetrahydrooctyl-1-trimethoxysilan, Tridecafluor-1,1,2,2-tetrahydrooctyl-1-triethoxysilan oder entsprechende Gemische enthaltend daraus abgeleitete Silane oder 3,3,3-Trifluorpropyl-trimethoxysilan, 3,3,3-Trifluorpropyl-methyl-dimethoxysilan, 3,3,3-Trifluorpropyl-methyl-dimethoxysilan, 3,3,3-Trifluorpropyl-cyclohexyl-dimethoxysilan, 3,3,3-Trifluorpropyl-phenyl-diethoxysilan, 3,3,3-Trifluorpropyl-triethoxysilan, 3,3,3,2,2-Pentafluorpropyl-methyl-dimethoxysilan, 3,3,3-Trifluorpropyloxyethyl-trimethoxysilan, 3,3,3-Trifluorpropylmerkaptoethyl-trimethoxysilan, 3,3,3-Trifluorpropyloxyethyl-methyl-dimethoxysilan sowie insbesondere Tridecafluor-1,1,2,2-tetrahydrooctyl-trimethoxysilan und Tridecafluor-1,1,2,2-tetrahydrooctyl-triethoxysilan sowie Acryloxypropyltrialkoxysilan, Methyacryloxypropyltrialkoxysilan, wobei der Alkoxy-Rest sowohl durch Methoxy-, Ethoxy oder auch Propoxy-Reste ersetzbar ist. Geeignete Verbindungen sind ebenfalls Methacryloxymethyltriethoxysilan, Methacryloxymethyltrimethoxysilan, Methacryloxypropyl-methyldiethoxysilan, Methacryloxypropyl-methyldimethoxysilan, Methacryloxypropyl-methyldiethoxysilan, Methacryloxymethyl-methyldiethoxysilan und/oder Methacryloxymethyl-methyldimethoxysilan.

Die erfindungsgemäßen Zusammensetzungen weisen eine pH-Wert im Bereich von 1,0 und 5,4, insbesondere von 3,0 bis 5,4, bevorzugt von 3,5 bis 5,4, besonders bevorzugt von 3,5 bis 4,8 auf. Dabei können sie in Bezug auf die ursprünglich zur Herstellung der Zusammensetzung eingesetzten Alkoxysilane einen Gehalt von 5 bis 35 Gew.-%, an Siliciumverbindungen aufweisen, insbesondere 7,5 bis 40 Gew.-%, bevorzugt 10 bis 40 Gew.-%, besonders bevorzugt sind 12,5 bis 30 Gew.-%. Ein Vorteil der Zusammensetzungen ist, dass sie selbst bei einem Gehalt von 12,5 bis 30 Gew.-% an Siliciumverbindungen bei einem pH-Wert zwischen 2,0 und 5,4, insbesondere bei 3,5 bis 5,4, bevorzugt bei 3,5 bis 4,8, besonders bevorzugt bei 4,2 bis 4,8 stabil bleiben.

Eine Zusammensetzung wird als stabil angesehen, wenn sie über einen Zeitraum von wenigstens 2 Monaten, bevorzugt 6 Monate bei Raumtemperatur im verschlossenen Behältnis, besonders bevorzugt über 10 Monate bei Raumtemperatur (20 bis 25 °C) kein Gel bildet. Besonders stabile Zusammensetzungen sind über 12 Monate unter den genannten Bedingungen stabil. Alternativ können besonders stabile Zusammensetzungen eine Stabilität von bis zu 2 Monaten, insbesondere von 6 Monaten unter Stressbedingungen aufweisen. Unter Stressbedingung wird eine Lagerung im verschlossenen Behältnis bei 60 °C verstanden.

Die Einstellung des pH-Wertes der Zusammensetzung erfolgt in der Regel bereits bei ihrer Herstellung, so dass eine spätere Einstellung des pH-Wertes unterbleiben kann. Als Säuren zur Einstellung des pH-Werts, insbesondere als HX, wobei X ein anorganischer oder organischer Säure-Rest ist, kommen vorzugsweise Ameisensäure, Essigsäure, ein saures Kieselgel, ein saures Kieselsol, Eisessig, Salpetersäure, Schwefelsäure und/oder Phosphorsäure zum Einsatz. Als Kieselsole kommen insbesondere Levasil 100S als saures Kieselsol, aber auch gefällte Kieselsäure, dispergierte Kieselsäure in Betracht.

Als Hilfsstoffe und als weitere Komponente können der Zusammensetzung nanoskalige Füllstoffe oder generell übliche Füllstoffe zugesetzt werden. Dies können auch neutrale oder basische Kieselsole oder Kieselgele sein. Auch Additive, wie Fließhilfsmittel oder beispielsweise Katalysatoren zur Modifizierung der Härtungsgeschwindigkeit, können der Zusammensetzung zugesetzt werden Gleichfalls erfindungsgemäße im Wesentlichen lösemittelfreie Zusammensetzungen umfassen im Wesentlichen vollständig hydrolysierte und im Wesentlichen wasserlösliche, bis-aminofunktionelle Siliciumverbindungen, wobei mindestens eine Struktur der in idealisierter Form dargestellten allgemeinen Formel (I) mit $a \geq 1$, $c \geq 1$, $d \geq 0$ und/oder $w \geq 0$ und $e \geq 1$ entspricht, und wobei der pH-Wert < 12 ist, insbesondere kann $b = 0$ sein.

Die Zusammensetzungen können bevorzugt nur aus Wasser, Säure und den, aus den im Wesentlichen wasserlöslichen Alkoxysilanen der allgemeinen Formel II, VI, VII und/oder VIII abgeleiteten, Siliciumverbindungen und/oder deren im Wesentlichen vollständig hydrolysierten, wasserlöslichen Co-Kondensationsprodukten, wobei mindestens eine Struktur der in idealisierter Form dargestellten allgemeinen Formel (I) entspricht, bestehen und sind im Wesentlichen frei von organischen Lösungsmitteln. So können erfindungsgemäße Zusammensetzungen vorteilhaft einen Wirkstoffgehalt an besagten Siliciumverbindungen von 5 bis 40 Gew.-%, bevorzugt 7,5 bis 35 Gew.-%, insbesondere 12,5 bis 30 Gew.-%, aufweisen. Bevorzugt liegt der pH-Wert dieser Zusammensetzungen zwischen 2,0 und 5,4. Weitere Zusätze zur Stabilisierung der Zusammensetzung sind in der Regel nicht notwendig. Weitere erfindungsgemäße, im Wesentlichen lösemittelfreie Zusammensetzungen bestehen aus im Wesentlichen vollständig hydrolysierten und im Wesentlichen wasserlöslichen bis-aminofunktionellen Siliciumverbindungen, wobei mindestens eine Struktur der in idealisierter Form dargestellten allgemeinen Formel (I) mit $a \geq 1$, $c = 0$, $d = 0$, $w = 0$ und $e \geq 1$ entspricht, und wobei insbesondere der Gehalt an Bis-Aminoalkylalkoxysilan gemäß obiger Definition zu mindestens 12,5, insbesondere mit 12,5 bis 35 Gew.-%, bevorzugt mit 15 bis 35 Gew.-%, besonders bevorzugt mit 15 bis 25 Gew.-% in der Zusammensetzung vorliegt, wobei der pH-Wert bevorzugt während des Herstellverfahrens und/oder in der Zusammensetzung zwischen 1,0 und 5,4, insbesondere zwischen 3,5 und 5,4, bevorzugt zwischen 3,5 und 4,8, besonders bevorzugt zwischen 4,2 bis 4,8 liegt. Selbst diese Zusammensetzungen weisen eine Lagerstabilität in geschlossenen Behältnissen von wenigstens 6 Monaten bei Raumtemperatur, bevorzugt 12 Monate bei Raumtemperatur, insbesondere bis zu 5 Monaten bei 60 °C auf. Gemäß einer zweckmäßigen Ausführungsform kann der Gehalt an Bis-Aminoalkylalkoxysilan in diesen Zusammensetzungen auch im Bereich von 1 bis 12,5 Gew.-%, insbesondere zwischen 5 bis 12,5 Gew.-% liegen, wobei der pH-Wert bevorzugt während des Herstellverfahrens und/oder in der Zusammensetzung zwischen 1,0 und 5,4, insbesondere zwischen 3,5 und 5,4, bevorzugt zwischen 3,5 und 4,8, besonders bevorzugt zwischen 4,2 bis 4,8 liegt.

Darüber hinaus kann man erfindungsgemäße Zusammensetzungen vorteilhaft und praktisch beliebig mit Wasser oder - sofern gewünscht - mit einem wasserlöslichen Lösemittel verdünnen, beispielsweise aber nicht ausschließlich mit Methanol, Ethanol, Isopropanol. Dabei kann man den Wirkstoffgehalt, d. h. den Gehalt an oben genannten Siliciumverbindungen, in einer erfindungsgemäßen Zusammensetzung durch Verdünnen mit Wasser und/oder einem wässrigen Lösemittel auf einen Gehalt von 0,0001 bis 40 Gew.-% praktisch stufenlos einstellen.

Die Erfindung betrifft auch ein Verfahren zur Herstellung einer Zusammensetzung enthaltend im Wesentlichen wasserlösliche, bis-aminofunktionelle und im Wesentlichen alkoxygruppenfreie Siliciumverbindungen, Wasser und eine Säure, in dem a) das Wasser, eine Säure, gegebenenfalls Alkohol und/oder gegebenenfalls ein Katalysator vorgelegt werden und mindestens ein Bis-Aminosilan der Formel II

$$(OR^1)_3\text{Si-A-Si}(OR^1)_3 \qquad (II)$$

mit A für eine bis-aminofunktionelle Gruppe der Formel III

$$-(CH_2)_i\text{-}[NH(CH_2)_f]_g NH[(CH_2)_{f*}NH]_{g*}\text{-}(CH_2)_{i*}- \qquad (III),$$

worin i, i*, f, f*, g oder g* gleich oder verschieden sind, mit i und/oder i* = 0 bis 8, f und/oder f* = 1, 2 oder 3, g und/oder g* = 0, 1 oder 2 und $R^1$ einem linearen, verzweigten und/oder cyclischen Alkyl-Rest mit 1 bis 4 C-Atomen entsprechen, wobei i und/oder i* insbesondere einer der Zahlen 1, 2 , 3 oder 4, bevorzugt 3, entsprechen, besonders bevorzugt ist die Verbindung Bis(triethoxysilylpropyl)amin (($H_5C_2O$)$_3$Si($CH_2$)$_3$NH($CH_2$)$_3$Si($OC_2H_5$)$_3$, Bis-AMEO) mit i, i* = 3 und g, g* = 0 und/oder dessen Kondensationsprodukte und gegebenenfalls mindestens ein Alkylalkoxysilan der allgemeinen

Formel VI

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten und/oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entsprechen und/oder dessen Kondensationsprodukte, und gegebenenfalls mindestens ein Epoxy- oder Ether-Alkoxysilan der allgemeinen Formel VII

$$D\text{-}Si(R^7)_u(OR^6)_{3-u} \qquad (VII),$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entsprechen und/oder dessen Kondensationsprodukte, und gegebenenfalls mindestens ein organofunktionelles Alkoxysilan der Formel VIII

$$E\text{-}Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8*}\text{-}Y_m\text{-}(CH_2)_s$-, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen, und/oder dessen Kondensationsprodukte, wobei der Sulfanalkyl-Rest der allgemeinen Formel IX mit $-(CH_2)_q\text{-}X\text{-}(CH_2)_q\text{-}Si(R^8)_v(OR^9)_{3-v}$ (IX) entspricht, mit q = 1, 2 oder 3, X = $S_p$, wobei p im Mittel 2 bzw. 2,18 oder im Mittel 4 bzw. 3,8 mit einer Verteilung von 2 bis 12 Schwefelatomen in der Kette entspricht, und v, $R^8$ und $R^9$ wie vorstehend definiert sind,

- hydrolysiert werden und der Alkohol im Wesentlichen entfernt wird,
  wobei der pH-Wert der Zusammensetzung nach dem Entfernen des Alkohols zwischen 1,0 und 5,4 liegt.

Erfindungsgemäß werden im Wesentlichen unhydrolysierte bis-aminofunktionelle Alkylalkoxysilan der Formel II eingesetzt, wobei unhydrolysiert bedeutet, dass > 80 Gew.-%, insbesondere > 95 Gew.-%, insbesondere 98 Gew.-% der bis-aminofunktionellen Silanverbindung noch unhydrolysiert der Reaktionsmischung zugesetzt werden. Gemäß einer weiteren erfindungsgemäßen Alternative werden nur mindestens ein bis-aminofunktionelles Alkylalkoxysilan der Formel II und mindestens ein Alkylalkoxysilan der allgemeinen Formel VI in dem Verfahren eingesetzt. Besonders bevorzugte Verbindungen sind Bis-AMEO, Propyltrialkoxysilan (PTMO, PTEO), Methyltriethoxysilan, Methyltriethoxysilan. Auch diese Alkoxysilane werden vorzugsweise unhydrolysiert, gemäß obiger Definition, in das Verfahren eingesetzt.

Die Einstellung des pH-Wertes der Zusammensetzung erfolgt in der Regel bereits bei ihrer Herstellung, so dass eine spätere Einstellung des pH-Wertes unterbleiben kann. Als Säuren zur Einstellung des pH-Werten, insbesondere als HX, wobei X ein anorganischer oder organischer Säure-Rest ist, kommen vorzugsweise Ameisensäure, Essigsäure, ein saures Kieselgel bzw. ein saures Kieselsol, Eisessig, Salpetersäure, Schwefelsäure und/oder Phosphorsäure zum Einsatz. Als Kieselsole kommen insbesondere Levasil 100S als saures Kieselsol, aber auch gefällte Kieselsäure, dispergierte Kieselsäure in Betracht. Als Katalysator kann beispielsweise Zirkon-n-propylat oder ein anderer üblicher Katalysator eingesetzt werden.

In der Regel werden Wasser und eine Säure vorgelegt und die Silane der allgemeinen Formel II, VI, VII und/oder VIII und/oder daraus abgeleitete Produkte, wie protonierte Silane, hydrolyse-, Co-Kondensations- und/oder Kondensationsprodukte, nacheinander und/oder als Mischung zugegeben, hydrolysiert und gegebenenfalls kondensiert, insbesondere bei einem pH-Wert zwischen 2,0 und 5,4, bevorzugt bei einem pH-Wert zwischen 3,0 bis 5,4. Durch weitere Zugabe von Säure kann der pH-Wert während des Verfahrens gehalten oder eingestellt werden. Dabei können die Silane der allgemeinen Formeln II, VI, VII und/oder VIII, deren Hydrolyse-, Co-Kondensations-, Kondensationsprodukte und/oder deren Mischungen in wässriger und/oder alkoholischer Lösung zugegeben werden. Dies kann nacheinander oder auch in einer Mischung erfolgen. Bei einer Verfahrensführung in einer wässrig/alkoholischen Lösung, durch Zugabe von Alkohol oder einer alkoholischen Silan-Lösung kann die Hydrolyse bei einem pH-Wert unterhalb von 12, d. h. auch im Alkalischen, durchgeführt werden. Anschließend wird der Hydroylysealkohol und gegebenenfalls zusätzlich zugegebener Alkohol aus der Reaktionsmischung im Wesentlichen vollständig entfernt. Die pH-Wert Einstellung kann vor oder nach der Entfernung des Alkohols erfolgen.

Die Zugabe einer alkoholischen Lösung zum vorgelegten, angesäuerten Wasser kann insbesondere auf folgende Weise erfolgen. Zunächst werden ein Alkohol, beispielsweise Ethanol, mit einem Silan der Formel II, VI, VII und/oder VIII gegebenenfalls mit wenig Wasser und gegebenenfalls einem Katalysator oder gegebenenfalls einer Säure versetzt und nach kurzer Reaktion dem angesäuerten, vorgelegten Wasser zugegeben. Sofern der pH-Wert nicht im gewünschten Bereich liegt, kann er durch Zugabe weiter Säure modifiziert werden. Gleichfalls kann auch nach Zugabe mindestens eines Silans zur Reaktionsmischung weiteres Wasser zugegeben werden.

Je nach gewünschten Eigenschaften der Zusammensetzung kann es zweckmäßig sein, bereits im Verfahren anorganische Füllstoffe, wie $TiO_2$, $SiO_2$, Kieselsole, Aerosil Dispersionen und/oder $Al_2O_3$ zuzusetzen.

Zur Vollständigen Entfernung des Hydrolysealkohols oder des zugegebenen Alkohols, kann der Zusammensetzung immer wieder Wasser zugegeben werden, das azeotrop mit dem Alkohol abdestilliert wird, bis die Zusammensetzung im Wesentlichen alkoholfrei ist.

Alternativ kann ein wässriges Silan der allgemeinen Formel II und/oder dessen Co-Kondensationsprodukt oder Kondensationsprodukt, beispielsweise ein Co-Kondensationsprodukt der Formel II mit VI, vorgelegt werden, bei einem niedrigen pH-Wert, beispielsweise bei 1,0 bis 3,5 hydrolysiert werden, und die Silane der allgemeinen Formeln IV, VII und/oder VIII und/oder deren Kondensationsprodukte werden einzeln oder als Mischung zugegeben, bevorzugt wird mindestens ein Silan der Formel VI zugegeben. Durch Zugabe von weiterem Aminosilan der Formeln II und/oder IV kann der pH-Wert angehoben werden. Nach Zugabe des letzten Silans kann die Reaktionsmischung unter Rühren noch bei einer Temperatur zwischen 30 und 100 °C im Wesentlichen vollständig hydrolysieren. Bevorzugt erfolgt die Hydrolyse in allen Verfahren bei 55 bis 80 °C.

Gegenstand der Erfindung ist daher auch ein Verfahren zur Herstellung einer Zusammensetzung enthaltend im Wesentlichen wasserlösliche, bis-aminofunktionelle und im Wesentlichen alkoxygruppenfreie Siliciumverbindungen, Wasser und eine Säure, als auch eine Zusammensetzung erhältlich nach diesem Verfahren, wobei b) eine wässrige Lösung mindestens eines wasserlöslichen Silans der allgemeinen Formel II und/oder VII oder dessen wasserlösliche Kondensationsprodukte, insbesondere auch Co-Kondensationsprodukte aus Silanen der Formel II, IV und/oder VII untereinander oder mit VI und/oder VIII beispielsweise auch mit Kieselsolen, oder die wasserlöslichen Hydrolyseprodukte eines Silans der allgemeinen Formel VI, insbesondere das methylfunktionalisierte, vorgelegt wird,

- wobei das Silan der Formel II einem Bis-Aminoalkoxysilan

$$(OR^1)_3Si\text{-}A\text{-}Si(OR^1)_3 \qquad (II)$$

mit A für eine bis-aminofunktionelle Gruppe der Formel III

$$-(CH_2)_i\text{-}[NH(CH_2)_f]_gNH[(CH_2)_{f*}NH]_{g*}\text{-}(CH_2)_{i*}\text{-} \qquad (III),$$

worin i, i*, f, f*, g oder g* gleich oder verschieden sind, mit i und/oder i* = 0 bis 8, f und/oder f* = 1, 2 oder 3, g und/oder g* = 0, 1 oder 2 und $R^1$ einem linearen, cyclischen und/oder verzweigten Alkyl-Rest mit 1 bis 4 C-Atomen entspricht und/oder dessen Kondensationsprodukte, insbesondere mindestens teilweise protoniert,

- wobei das Silan der Formel VII einem Epoxy- oder Ether-Alkoxysilan

$$D\text{-}Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukte,

- wobei das Silan der Formel VI einem Alkylalkoxysilan

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 4 C-Atomen, $R^5$ einem linearen, verzweigten oder cyclischen Alkyl-Rest mit 1 bis 4 C Atomen und/oder Aryl-Rest, $R^4$ einem linearen, verzweigten und/oder cyclischen Alkyl-Rest mit 1 bis 4 C-Atomen entspricht, und gegebenenfalls Säure, gegebenenfalls Alkohol und gegebenenfalls ein Katalysator und gegebenenfalls ein oder mehrere weitere Silane der allgemeinen Formeln II, IV, VI, VII und/oder VIII oder deren Kondensationsprodukte zugegeben werden,

- wobei das zugegebene Silan der Formel VI einem Alkylalkoxysilan

$$C-Si(R^5)y\,(OR^4)_{3-y} \qquad\qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht,

- wobei das Silan der Formel VIII einem organofunktionellen Alkoxysilan

$$E-Si(R^8)_v(OR^9)_{3-v} \qquad\qquad (VIII)$$

mit v = 0 oder 1, wobei $R^8$ einem linearen, verzweigten oder cyclischen Alkyl-Rest mit 1 bis 4 C-Atomen, E einem Rest $R^{8*}-Y_m-(CH_2)_s$-, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen und/oder dessen Kondensationsprodukte,

- und hydrolysiert werden und der Alkohol im Wesentlichen entfernt wird.

Je nach gewünschten Eigenschaften der Zusammensetzung kann es zweckmäßig sein, bereits im Verfahren anorganische Füllstoffe, wie $TiO_2$, $SiO_2$, Kieselsole, Aerosil Dispersionen und/oder $Al_2O_3$ zuzusetzen.

Der bereits vorhandene und/oder bei der Umsetzung entstandene Alkohol wird in allen erfindungsgemäßen Verfahrensvarianten aus dem Reaktionsgemisch entfernt. Die destillative Abtrennung des Alkohols wird vorzugsweise unter vermindertem Druck durchgeführt. Die destillative Entfernung des Alkohols wird vorzugsweise solange durchgeführt, bis im Kopf der Kolonne eine Temperatur erreicht ist, die der Siedetemperatur von Wasser entspricht. Sofern der Alkohol nicht im Wesentlichen vollständig entfernt werden konnte, wird erneut Wasser zugegeben und weiter ein Alkohol/Wasser-Gemisch entfernt, insbesondere destillativ entfernt. Diese Verfahrensweise wird wiederholt, bis der Alkohol im Wesentlichen entfernt ist. Als im Wesentlichen entfernt gilt der Alkohol, wenn sein Gehalt unter 4 Gew.-%, insbesondere unter 2 Gew.-%, bevorzugt unter 1, besonders bevorzugt unter 0,5 Gew.-%, unter 0,1 Gew.-% oder unter 0,05 Gew.-% liegt. Die resultierende Zusammensetzung ist im Wesentlichen alkoholfrei, d. h. gegebenenfalls zugegebener Alkohol als auch der Hydrolysealkohol werden bevorzugt gänzlich nach der etwa vollständigen Hydrolyse aus dem Reaktionssystem entfernt. Die zur Anwendung kommenden Zusammensetzungen sind daher im Wesentlichen frei von freien Alkoholen und/oder Alkoxy-Resten, wenn der Gehalt kleiner 4 Gew.-%, insbesondere unter 2 Gew.-%, bevorzugt unter 1, besonders bevorzugt unter 0,5 Gew.-%, unter 0,1 Gew.-% oder unter 0,05 Gew.-% beträgt.

Abweichend von Verfahren des Standes der Technik werden die substituierten Alkoxysilane in den vorgenannten Verfahren bei einem Wassergehalt von 50 bis 90 Gew.-%, insbesondere bei 65 bis 90 Gew.-% an Wasser, hydrolysiert. Der Wassergehalt ist bezogen auf die Menge an vorgelegtem Wasser oder Gesamtwassergehalt in der gesamten Reaktionsmischung bevor Alkohol und/oder Wasser aus dem Gemisch entfernt werden. Während der Reaktion sollte der pH-Wert zwischen 2,0 bis 5,4, insbesondere 3,0 bis 5,4, bevorzugt 3,5 bis 5,4, betragen. Auch nach dem Entfernen des Alkohols aus der Reaktionsmischung kann der pH-Wert der Zusammensetzung zwischen 1,0 bis 5,4, insbesondere zwischen 3,0 und 5,4, bevorzugt zwischen 3,5 und 5,4 liegen. Die eingesetzten Bis-Amino-, Amino-, Alkyl-, Epoxy-, Polyalkylglykolalkyl-, 3-Glycidoxyalkyl-, Glycidoxyalkyl-, Fluoralkyl-, Mercapto-, Ureidoalkyl-, Alkenyl-, Acryloxyalkyl-Rest substituierten Alkoxysilane und/oder Tetraalkoxysilane liegen insgesamt mit einem Gehalt von 7,5 bis 50 Gew.-%, insbesondere mit 10 bis 40 Gew.-%, bevorzugt mit 10 bis 35 Gew.-%, besonders bevorzugt mit 20 bis 35 Gew.-%, nach Entfernen des Alkohol in Bezug auf die eingesetzten Alkoxysilane in der Zusammensetzung, vor.

Nach dem erfindungsgemäßen Verfahren hergestellte Zusammensetzungen sind stabile und klare oder zum Teil auch opaleszierend bis trübe Lösungen, im Wesentlichen frei von organischen Lösungsmitteln, lassen sich mit Wasser in jedem Verhältnis verdünnen, entwickeln bei Wasserzugabe im Wesentlichen keine Hydrolysealkohole, und besitzen einen Flammpunkt von mehr als 63 °C, vorzugsweise von mehr als 80 °C, besonders vorzugsweise von mehr als 93°C.

Ein weiterer Gegenstand der Erfindung ist eine wässrige Zusammensetzung bzw. ein wässriges Silansystem enthaltend, im Wesentlichen wasserlösliche, bis-aminofunktionelle und im Wesentlichen alkoxygruppenfreie Siliciumverbindungen, Wasser und eine Säure, erhältlich durch Vorlegen von Wasser, einer Säure und gegebenenfalls Alkohol und Umsetzten mindestens eines bis-aminofunktionellen Alkoxysilans der Formel II mit A für eine bis-aminofunktionelle Gruppe der Formel III

$$(OR^1)_3Si-A-Si(OR^1)_3 \qquad\qquad (II);$$

$$-(CH_2)_i-[NH(CH_2)_f]_gNH[(CH_2)_{f*}NH]_{g*}-(CH_2)_{i*}- \qquad\qquad (III),$$

worin i, i*, f, f*, g oder g* gleich oder verschieden sind, mit i und/oder i* = 0 bis 8, f und/oder f* = 1, 2 oder 3, g und/oder g* = 0, 1 oder 2 und $R^1$ einem linearen, verzweigten und/oder cyclischen Alkyl-Rest mit 1 bis 4 C-Atomen entsprechen und/oder dessen Kondensationsprodukte und gegebenenfalls mit mindestens einem Alkylalkoxysilan der allgemeinen Formel VI

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht und/oder dessen Kondensationsprodukte, und gegebenenfalls mit mindestens einem Epoxy- oder Ether-Alkoxysilan der allgemeinen Formel VII

$$D\text{-}Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukte, und gegebenenfalls mit mindestens einem organofunktionellen Alkoxysilan der Formel VIII

$$E\text{-}Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8*}\text{-}Y_m\text{-}(CH_2)_s\text{-}$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entspricht, und/oder dessen Kondensationsprodukte, wobei der Sulfanalkyl-Rest der allgemeinen Formel IX mit $\text{-}(CH_2)_q\text{-}X\text{-}(CH_2)_q\text{-}Si(R^8)_v(OR^9)_{3-v}$ (IX) entspricht, mit q = 1, 2 oder 3, $X = S_p$, wobei p im Mittel 2 bzw. 2,18 oder im Mittel 4 bzw. 3,8 mit einer Verteilung von 2 bis 12 Schwefelatomen in der Kette entspricht, und v, $R^8$ und $R^9$ wie vorstehend definiert sind, Hydrolysieren, insbesondere vollständiges Hydrolysieren, im Wesentlichen vollständiges Entfernen des Alkohols und der pH-Wert der Zusammensetzung nach dem Entfernen des Alkohols zwischen 1,0 und 5,4 liegt.

Wie aufgeführt, werden bevorzugt im Wesentlichen unhydrolysierte bis-aminofunktionelle Alkylalkoxysilan der Formel II bzw. unhydrolysierte Alkoxysilane der Formeln IV, VI, VII und/oder VIII eingesetzt. Die resultierende Zusammensetzung ist im Wesentlichen alkoholfrei.

Ein Gegenstand der Erfindung ist ferner ein Verfahren zur Herstellung einer Zusammensetzung enthaltend im Wesentlichen wasserlösliche, bis-aminofunktionelle und im Wesentlichen alkoxygruppenfreie Siliciumverbindungen, Wasser und eine Säure, wobei ein organisches Lösungsmittel, gegebenenfalls Wasser, gegebenenfalls eine Säure und/oder gegebenenfalls ein Katalysator vorgelegt werden und

- mindestens ein Bis-Aminoalkoxysilan der Formel II

$$(OR^1)_3Si\text{ - }A\text{ - }Si(OR^1)_3 \qquad (II)$$

mit A für eine bis-aminofunktionelle Gruppe der Formel III

$$\text{-}(CH_2)_i\text{-}[NH(CH_2)_f]_g NH[(CH_2)_{f*}NH]_{g*}\text{-}(CH_2)_{i*}\text{-} \qquad (III),$$

worin i, i*, f, f*, g oder g* gleich oder verschieden sind, mit i und/oder i* = 0 bis 8, f und/oder f* = 1, 2 oder 3, g und/oder g* = 0, 1 oder 2 und $R^1$ einem linearen, cyclischen und/oder verzweigten Alkyl-Rest mit 1 bis 4 C-Atomen entspricht und/oder dessen Kondensationsprodukte und gegebenenfalls

- mindestens ein Alkylalkoxysilan der allgemeinen Formel VI

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem

linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht und/oder dessen Kondensationsprodukte, und gegebenenfalls

- mindestens ein Epoxy- oder Ether-Alkoxysilan der allgemeinen Formel VII

$$D-Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukte, und gegebenenfalls

- mindestens ein organofunktionelles Alkoxysilan der Formel VIII

$$E-Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8*}-Y_m-(CH_2)_s$-, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen und/oder dessen Kondensationsprodukte, - hydrolysiert werden, insbesondere vollständig hydrolysiert werden und der Hydrolysealkohol und das Lösemittel im Wesentlichen entfernt werden, und der pH-Wert der Zusammensetzung nach dem Entfernen des Hydrolysealkohols und des Lösemittels zwischen 1,0 und 5,4 liegt.

Als Lösemittel kommt insbesondere ein Alkohol ausgewählt aus der Gruppe Methanol, Ethanol, Propanol und/oder eine Mischung dieser in Betracht. Zweckmäßige Lösemittel können aber auch Essigester, THF, Ketone oder Kohlenwasserstoffe sein.

Erfindungsgemäß wird ein Alkohol zusammen mit mindestens einem der Silane der allgemeinen Formeln II, VI, VII und/oder VIII, deren Kondensationsprodukte und/oder Mischungen dieser vorgelegt. Anschließend können Wasser und/oder Säure zugegeben werden. Wird nur Wasser zugegeben, kann die Hydrolyse im Alkalischen erfolgen.

Das Verfahren wird bevorzugt so durchgeführt, dass ein Alkohol und gegebenenfalls Wasser vorgelegt werden, mindestens ein Bis-Aminoalkoxysilan der allgemeinen Formel II und/oder dessen Kondensationsprodukt zugegeben und hydrolysiert sowie gegebenenfalls kondensiert werden. Die Reaktionsmischung wird durch die Zugabe des Bis-Aminoalkoxysilans der allgemeinen Formel I alkalisch. Bevorzugt wird ein im Wesentlichen unhydrolysiertes Bis-Aminoalkylalkoxysilan der Formel II eingesetzt. Erfindungsgemäß werden mindestens ein Bis-Aminoalkylalkoxysilan der Formel II und ein Alkylalkoxysilan der allgemeinen Formel VI eingesetzt.

Wird Alkohol und gegebenenfalls Wasser und gegebenenfalls eine Säure vorgelegt, werden ein Bis-Aminoalkoxysilan der allgemeinen Formel II und/oder dessen Kondensationsprodukt zugegeben und hydrolysiert sowie gegebenenfalls kondensiert. Bevorzugt wird anschließend mindestens ein Alkylalkoxysilan der Formel VI und gegebenenfalls mindestens ein Aminoalkylalkoxysilan der Formel IV, gegebenenfalls mindestens ein Epoxy- oder Ether-Alkoxysilan der allgemeinen Formel VII und gegebenenfalls mindestens ein organofunktionelles Alkoxysilan der Formel VIII und/oder deren Kondensationsprodukte nacheinander oder als Mischung zugegeben. Die Hydrolyse erfolgt in diesem Fall im Alkalischen, bevorzugt liegt der pH-Wert unter 12.

Die Zugabe der Silane der allgemeinen Formel II, VI, VII oder VIII und/oder daraus abgeleiteter Produkte, wie Hydrolyse- und/oder Kondensationsprodukte, wie Co-Kondensationsprodukte, kann nacheinander oder als Mischung erfolgen. Gleichfalls kann die Zugabe der Silane der allgemeinen Formeln II, IV, VI, VII und/oder VIII und/oder deren Kondensationsprodukte in wässriger und/oder alkoholischer Lösung erfolgen. Bei Bedarf kann während des Verfahrens mindestens ein anorganischer Füllstoff, wie Titandioxid, Siliziumdioxid, Kieselsole, eine Aerosil Dispersion oder Aluminiumoxid, zugesetzte werden.

Wird vor oder während der Hydrolyse keine Säure zugeben, kann der pH-Wert alkalisch werden, insbesondere kann er unterhalb von 12 liegt. Die Reaktion kann bei 30 bis 100 °C, bevorzugt zwischen 55 und 80 °C, durchgeführt werden. Nach der Hydrolyse und gegebenenfalls erfolgter Kondensation kann der pH-Wert auf einen Wert zwischen 1,0 und 7,0 eingestellt werden. Dies geschieht durch Zugabe einer Säure.

Als Säuren zur Einstellung des pH-Werten, insbesondere als HX, wobei X ein anorganischer oder organischer Säure-Rest ist, kommen vorzugsweise Ameisensäure, Essigsäure, ein saures Kieselgel, ein saures Kieselsol, Eisessig, Salpetersäure, Schwefelsäure und/oder Phosphorsäure zum Einsatz. Als Kieselsole kommen insbesondere Levasil 100S als saures Kieselsol, aber auch gefällte Kieselsäure, dispergierte Kieselsäure in Betracht.

Das Lösemittel und der bei der Umsetzung entstandene Alkohol werden aus dem Reaktionsgemisch entfernt. Die destillative Abtrennung des Lösemittels und/oder des Alkohols wird vorzugsweise unter vermindertem Druck durchgeführt. Die destillative Entfernung wird vorzugsweise solange durchgeführt, bis im Kopf der Kolonne eine Temperatur erreicht ist, die der Siedetemperatur von Wasser entspricht. Sofern der Alkohol und/oder das Lösemittel nicht im Wesentlichen vollständig entfernt werden konnte, wird erneut Wasser zugegeben und weiter ein Lösemittel/Wasser bzw. Alkohol/Wasser-Gemisch entfernt, insbesondere destillativ entfernt. Diese Verfahrensweise wird wiederholt, bis der Alkohol im Wesentlichen entfernt ist.

Die resultierende Zusammensetzung ist im Wesentlichen Lösemittelfrei, insbesondere alkoholfrei, d. h. gegebenenfalls zugegebener Alkohol als auch der Hydrolysealkohol werden bevorzugt gänzlich nach der etwa vollständigen Hydrolyse aus dem Reaktionssystem entfernt. Die zur Anwendung kommenden Zusammensetzungen sind daher im Wesentlichen frei von freien Alkoholen und/oder Alkoxy-Resten, wenn der Gehalt kleiner 5 Gew.-%, kleiner 4 Gew.-%, insbesondere unter 2 Gew.-%, bevorzugt unter 1, besonders bevorzugt unter 0,5 Gew.-%, unter 0,1 Gew.-% oder unter 0,05 Gew.-% beträgt.

Bevorzugt liegt der pH-Wert der Zusammensetzung nach dem Entfernen des Hydrolysealkohols und Lösemittels zwischen 3,0 und 5,4, besonders bevorzugt liegt er zwischen 3,5 und 5,4.

Ein Gegenstand der Erfindung ist ferner eine Zusammensetzung enthaltend im Wesentlichen wasserlösliche, bis-aminofunktionelle und im Wesentlichen alkoxygruppenfreie Siliciumverbindungen, Wasser und eine Säure, erhältlich durch Vorlegen eines organischen Lösungsmittels, gegebenenfalls Wasser, gegebenenfalls einer Säure und/oder gegebenenfalls eines Katalysators und

- mindestens eines Bis-Aminoalkoxysilans der Formel II

$$(OR^1)_3Si-A-Si(OR^1)_3 \qquad (II)$$

mit A für eine bis-aminofunktionelle Gruppe der Formel III

$$-(CH_2)_i-[NH(CH_2)_f]_gNH[(CH_2)_{f^*}NH]_{g^*}-(CH_2)_{i^*}- \qquad (III),$$

worin i, i*, f, f*, g oder g* gleich oder verschieden sind, mit i und/oder i* = 0 bis 8, f und/oder f* = 1, 2 oder 3, g und/oder g* = 0, 1 oder 2 und $R^1$ einem linearen, cyclischen und/oder verzweigten Alkyl-Rest mit 1 bis 4 C-Atomen entspricht und/oder dessen Kondensationsprodukten und gegebenenfalls

- mindestens eines Alkylalkoxysilans der allgemeinen Formel VI

$$C-Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht und/oder dessen Kondensationsprodukten, und gegebenenfalls

- mindestens eines Epoxy- oder Ether-Alkoxysilans der allgemeinen Formel VII

$$D-Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukten, und gegebenenfalls

- mindestens eines organofunktionellen Alkoxysilans der Formel VIII

$$E-Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8^*}-Y_m-(CH_2)_s-$, wobei $R^{8^*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen und/oder dessen Kondensationsprodukten,

- Hydrolysieren, insbesondere vollständiges Hydrolysieren, und im Wesentlichen vollständigem Entfernen des Hydrolysealkohols und des Lösemittels.

Nach dem erfindungsgemäßen Verfahren hergestellte Zusammensetzungen sind stabile und klare oder zum Teil auch opaleszierend bis trübe Lösungen, im Wesentlichen frei von organischen Lösungsmitteln, lassen sich mit Wasser in jedem Verhältnis verdünnen, entwickeln bei Wasserzugabe im Wesentlichen keine Hydrolysealkohole, und besitzen einen Flammpunkt von mehr als 63 °C, vorzugsweise von mehr als 80 °C, besonders vorzugsweise von mehr als 93°C.

Gegenstand der Erfindung ist auch ein Verfahren zur Herstellung einer Zusammensetzung enthaltend im Wesentlichen wasserlösliche, bis-aminofunktionelle und im Wesentlichen alkoxygruppenfreie Siliciumverbindungen, Wasser und eine Säure, als auch eine Zusammensetzung erhältlich nach diesem Verfahren, wobei mindestens ein Epoxy- oder Ether-Alkoxysilan der allgemeinen Formel VII

$$D\text{-}Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukte und/oder mindestens ein Alkylalkoxysilan der allgemeinen Formel VI

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht und/oder dessen Kondensationsprodukte und/oder mindestens ein organofunktionelles Alkoxysilan der Formel VIII

$$E\text{-}Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8*}\text{-}Y_m\text{-}(CH_2)_s\text{-}$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen und/oder dessen Kondensationsprodukte vorgelegt werden, in einer Alternative können die Silane der Formel IV, VI und/oder VIII in Mischungen mit mindestens einem Silan der Formel II und/oder IV vorgelegt werden,

- und in Gegenwart von Wasser und in Gegenwart einer Säure und/oder eines Katalysators und Wasser und gegebenenfalls eines Lösungsmittels zumindest teilweise hydrolysiert werden und anschließend in einem zweiten Hydrolyseschritt
- in Gegenwart weiteren Wassers und gegebenenfalls weiterer Säure,
- mindestens ein Bis-Aminoalkoxysilan der Formel II

$$(OR^1)_3Si\text{-}A\text{-}Si(OR^1)_3 \qquad (II)$$

mit A für eine bis-aminofunktionelle Gruppe der Formel III

$$-(CH_2)_i\text{-}[NH(CH_2)_f]_gNH[(CH_2)_{f*}NH]_{g*}\text{-}(CH_2)_{i*}\text{-} \qquad (III),$$

worin i, i*, f, f*, g oder g* gleich oder verschieden sind, mit i und/oder i* = 0 bis 8, f und/oder f* = 1, 2 oder 3, g und/oder g* = 0, 1 oder 2 und $R^1$ einem linearen, cyclischen und/oder verzweigten Alkyl-Rest mit 1 bis 4 C-Atomen entspricht und/oder dessen Kondensationsprodukte und gegebenenfalls

- mindestens einem Aminoalkylalkoxysilan der Formel IV

$$B\text{-}Si(R^3)_x(OR^2)_{3-x} \qquad (IV)$$

mit x = 0 oder 1, wobei $R^2$ einem linearen, verzweigten und/oder cyclischen Alkyl-Rest mit 1 bis 4 C-Atomen und B einer der folgenden aminofunktionellen Gruppen der allgemeinen Formel Va oder Vb entspricht

$$R^{10}{}_{h^*}NH_{(2-h^*)}[(CH_2)_h(NH)]_j[(CH_2)_l(NH)]_n-(CH_2)_k- \qquad (Va),$$

worin $0 \leq h \leq 6$; $h^* = 0,1$ oder 2, $j = 0,1$ oder 2; $0 \leq l \leq 6$; $n = 0,1$ oder 2; $0 \leq k \leq 6$ und $R^{10}$ einem Benzyl-, Aryl-, Vinyl-, Formyl-Rest und/oder einem linearen, verzweigten und/oder cyclischen Alkyl-Rest mit 1 bis 8 C-Atomen entsprechen,
und/oder

$$[NH_2(CH_2)_m]_2N(CH_2)_p- \qquad (Vb),$$

wobei $0 \leq m \leq 6$ und $0 \leq p \leq 6$ sind und/oder dessen Kondensationsprodukte zusetzt wird, hydrolysiert werden und der Alkohol im Wesentlichen entfernt wird.

Dabei können die Silane der allgemeinen Formel VI, VII oder VIII und/oder Kondensationsprodukte nacheinander oder als Mischung zugegeben werden. Die Zugabe von Wasser im zweiten Hydrolyseschritt kann durch Zugabe einer wässrigen Silanmischung oder separate Wasserzugabe erfolgen. Insbesondere beträgt der Wassergehalt während des zweiten Hydrolyseschritts 50 bis 90 Gew.-%, besonders bevorzugt 65 bis 90 Gew.-%. Während der pH-Wert während der Hydrolyse insbesondere zwischen 2,0 bis 5,4 liegt, bevorzugt zwischen 3,0 und 5,4. Der pH-Wert kann zu jedem Zeitpunkt durch Zugabe einer, der oben genannten, Säure erfolgen.

Der Gehalt der Siliciumverbindungen kann insgesamt 7,5 bis 40 Gew.-% betragen. Gemäß einer bevorzugten Ausführungsform wird im Wesentlichen unhydrolysiertes Bis-Aminoalkylalkoxysilan der Formel II eingesetzt. Erfindungsgemäß werden mindestens ein Bis-Aminoalkylalkoxysilan der Formel II und ein Alkylalkoxysilan der allgemeinen Formel VI eingesetzt.

In zweckmäßigen Ausführungsvarianten kann während des Verfahrens mindestens ein anorganischer Füllstoffe, wie $TiO_2$, $SiO_2$, Kieselsol, eine Aerosil Dispersionen und/oder $Al_2O_3$, eingesetzt werden. Die Hydrolyse und Kondensation wird in einem Temperaturbereich zwischen 30 und 100 °C, bevorzugt zwischen 55 und 80 °C durchgeführt.

Zur weiteren Entfernung des Hydrolysealkohols und gegebenenfalls zugesetzten Alkohols kann der Mischung weiteres Wasser zugegeben werden und erneut ein Alkohol/Wasser-Gemisch entfernt werden bis die Zusammensetzung im Wesentlichen frei von Alkoholen ist. Diese Prozedur kann wiederholt werden, bis die Zusammensetzung im Wesentlichen alkoholfrei ist. Nach der Entfernung des Alkohols liegt der pH-Wert der Zusammensetzung bevorzugt zwischen 1,0 und 5,4, besonders bevorzugt zwischen 3,0 und 5,4.

Gegenstand der Erfindung ist auch die Verwendung einer erfindungsgemäßen Zusammensetzung in Mischungen mit weiteren Silan basierten Zusammensetzungen, insbesondere umfasst die Mischung eine Zusammensetzung enthaltend bis-aminofunktionelle Siliciumverbindungen zusammen mit einer Silan basierten Zusammensetzung auf Basis von alkyl-, alkenyl-, aryl-, epoxy-, dihydroxyalkyl-, aminoalkyl-, polyalkylglykolalkyl-, halogenalkyl-, mercaptoalkyl-, sulfanalkyl-, ureidoalkyl-, acryloxyalkyl-funktionellen und/oder tetraalkoxy-funktionellen Silanen und/oder deren Mischungen. Insbesondere senkt die Zugabe der erfindungsgemäßen Zusammensetzung in eine Mischung mit einem weiteren Silan die Härtungstemperatur, wobei bevorzugt die Abweisenden Eigenschaften des weiteren Silans erhalten bleiben oder verbessert werden. Beispiele dafür sind unter den Anwendungsbeispielen offenbart.

Die erfindungsgemäßen Zusammensetzungen und/oder Mischungen können zur Hydrophobierung von Substratoberflächen beispielsweise mit freien Hydroxyfunktionen verwendet werden. Durch die Vernetzung mit den Hydroxyfunktionen und/oder über eine mögliche Komplexbildung und/oder Reaktion der Aminofunktionen wird eine hohe Festigkeit der aufgebrachten Schicht auf den Substratoberflächen erzielt. Allgemein können die Zusammensetzungen und/oder Mischungen zur Behandlung oder Modifizierung von Substratoberflächen, insbesondere zum Aufbau von Barriereschichten auf Substratoberflächen genutzt werden. Bevorzugt werden die Zusammensetzung bzw. Mischungen zur Hydrophobierung von Metalloberflächen, wie beispielsweise Edelstahl, Aluminium, Stahl, Titan, von Glasoberflächen, organischen Materialien, wie Kunststoffoberflächen oder, insbesondere von Naturfasern, wie beispielsweise Papier, Baumwolle oder Holz, von mineralischen Oberflächen, wie Beton, Ziegelsteinen, Sandstein sowie weitere anorganische Oberflächen eingesetzt. Basieren die Zusammensetzungen auf Siliciumverbindungen enthaltend Fluorsilane, in Form von Co-Kondensaten oder in der Mischung, dann können auch oleophobe und Anti-Graffiti-Eigenschaften erzielt werden. Weitere Anwendungsgebiete erschließen sich, bei der Primerung von Oberflächen, aus Glas, Metall, mineralischen Oberflächen, wie Beton, Mörtel, Estrich oder Sandstein oder organischen Materalien, insbesondere von Naturfasern, wie beispielsweise Papier, Baumwolle oder Holz. Beispielsweise durch die Primerung von Metalloberflächen kann eine verbesserte Haftung und damit unter anderem eine besserer Korrosionsschutz erreicht werden. Ebenfalls kann man eine erfindungsgemäße Zusammensetzung oder eine Mischung, die auf einer solchen Zusammensetzung basiert, vorteilhaft zum Korrosionsschutz von Metallen wie Eisen, Stahl, Edelstahl, Aluminium, Aluminiumlegierungen, Silber, Kupfer, - um nur einige Beispiele zu nennen - verwenden. Dabei können die vor Korrosion zu schützenden Metalle bzw. Metalloberflächen unbehandelt oder vorbehandelt sein, insbesondere sind als Beispiele für behandelte Metalloberflächen phosphatierte, chromatierte, chromitierte, verzinkte Metalloberflächen oder verzinkte Metalloberflächen, die zusätzlich chromatiert, chromitiert oder phosphatiert sind, zu nennen. Unter chromatierten Metalloberflächen versteht man im Allgemeinen solche, die mit einem Chrom(VI)-haltigen Mittel behandelt bzw. passiviert sind. Analog dazu versteht man hier unter einer chromitierten Metalloberfläche solche, die mit einem Chrom(III)-haltigen Mittel behandelt bzw. passiviert sind. Zudem können die wässrigen Zusammensetzungen zur Gesteinsverfestigung bei der Erdölförderung, beispielsweise bei der Herstellung von Beton- und/oder Mörtelfertigbauteilen, wie Rohren etc., oder in wässrigen Lack- oder Harz-Formulierungen eingesetzt werden. Gemäß einer weiteren Anwendungsmöglichkeit können die erfindungsgemäßen Zusammensetzungen, insbesondere durch Zugabe von Additiven und/oder Füllstoffen in ihren Produkteigenschaften weiter modifiziert werden. So kann beispielsweise durch Zugabe eines Fließhilfsmittels eine verbesserte Verteilung auf einer Oberfläche erzielt werden. Durch Zugabe von Katalysatoren, beispielsweise Zirkon-n-propylat, oder eine Modifizierung des pH-Wertes kann die Aushärtung der fertigen Zusammensetzung beschleunigt werden.

Gegenstand der Erfindung sind auch beschichtete oder verfestigte Produkte, die durch Verwendung der Zusammensetzung und/oder Mischungen erhalten werden. Zu nennen sind hier insbesondere beschichtete Gläser, beschichtetes Acrylglas, korrosionsgeschützte Metalle oder korrosionsgeschützte, mineralische Substrate wie ausgehärteter Beton oder Mörtel oder die genannten organischen Materialien, insbesondere Produkte aus behandelten oder beschichteten Naturfasern. Beispiele dafür sind mit der Zusammensetzung behandelte Bewehrungen, die vor ihrer Verwendung im Beton mit der Zusammensetzung beschichtet werden. Zudem kann auch eine noch nicht ausgehärtete Betonmischung mit einer erfindungsgemäßen Zusammensetzung gemischt, verarbeitet und anschließend aushärten. In diesem Fall ist darauf zu achten, dass die Zusammensetzung verarbeitbar bleibt, beispielsweise durch Wahl des richtigen pH-Wertes oder anderer Parameter. Auf diese Weise können beispielsweise hydrophober, korrosionsbeständiger Beton oder Produkte aus Beton erhalten werden, wie Abflussrohre oder Fertigbauteile für Gebäude. Der so behandelten Beton weist eine erheblich bessere Korrosionsbeständigkeit gegenüber Umwelteinflüssen auf.

Die Erfindung wird anhand der folgenden Beispiele näher erläutert.

**Beispiele**

Analytische Untersuchungen:

Rückstand:

Der Feststoffgehalt der wässrigen Silansysteme wird wie folgt bestimmt:

1 g der Probe wird in eine kleine Porzellanschale eingewogen und bei 105 °C bis zur Gewichtskonstanz im Trockenschrank getrocknet.

$SiO_2$-Gehalt:

1,0 bis 5,0 g der Probe wird in einem 400-ml-Becherglas mit einer Kjeldahl-Tablette und 20 ml Schwefelsäure versetzt und zunächst langsam erhitzt. Dabei wird das Becherglas mit einem Uhrglas abgedeckt. Die Temperatur wird erhöht, bis die Schwefelsäure stark raucht und alle organischen Bestandteile zerstört sind und die Lösung klar und hell bleibt. Die kalte Aufschlusslösung wird mit dest. Wasser auf ca. 200 ml verdünnt und kurz aufgekocht (Wasser am Rande des Becherglases unter die Säure fließen lassen). Der Rückstand wird durch ein Weißbandfilter filtriert und mit heißem Wasser gewaschen, bis das Waschwasser einen pH-Wert von > 4 anzeigt (pH-Papier). Der Filter wird in einem Platintiegel getrocknet, verascht und 1 Stunde bei 800 °C im Muffelofen geglüht. Der Rückstand wird nach dem Wiegen mit Flusssäure abgeraucht, der Tiegel mittels eines Gebläsebrenners geglüht und gegebenenfalls nochmals bei 800 °C geglüht und nach dem Abkühlen gewogen. Die Differenz beider Wägungen entspricht dem Gehalt an $SiO_2$.

Auswertung: D x 100/E = Gew.-% $SiO_2$

D = Gewichtsdifferenz vor und nach dem Abfluorieren in mg
100 = Umrechnung auf %
E = Einwaage in mg

Bestimmung des freien Methanol- und Ethanolgehalts:
Die Alkohol-Bestimmung wurde mittels GC durchgeführt.

Säule: RTX 200 (60 m)
Temperaturprogramm: 90-10-25-240-0

Detektor: FID
Injektionsmenge: 1,0 μl
Innerer Standard: 2-Butanol

Eingesetzte Silane und Silansysteme:

| Handelsname | Produktbeschreibung | Hersteller |
|---|---|---|
| Dynasylan® Hydrosil 2926 | Wässriges epoxyfunktionelles Siloxanoligomer, alkoholfrei | Degussa |
| Dynasylan® F 8261 | Tridecafluoroctyltriethoxysilan | Degussa |
| Dynasylan® SIVO 110 | Wässrige Silanformulierung, VOC-frei | Degussa |
| Dynasylan® 1122 | Bis-[triethoxysilylpropyl]amin (Bis-AMEO) | Degussa |
| Dynasylan® MTES | Methyltriethoxysilan | Degussa |
| Dynasylan® F 8815 | Wässriges fluoralkylfunktionelles Hydro-/oleophobes Beschichtungsmittel | Degussa |
| TYZOR NPZ | Zirkon-n-propylat | Du Pont |
| Levasil 100S/45% | Wässriges Kieselsol Teilchengröße 30 nm, pH = 4; Konz. 45 % N-Formyl-3-aminopropyltriethoxysilan (Triethoxysilylpropylformamid) | H.C.Starck GmbH |
| Dynasylan® AMEO | 3-Aminopropyltriethoxysilan | Degussa |
| Dynasylan® GLYMO | 3-Glycidyloxypropyltriemethoxysilan | Degussa |
| Dynasylan® PTMO | Propyltrimethoxysilan | Degussa |
| Dynasylan® VTMO | Vinyltrimethoxysilan | Degussa |

**Beispiel 1**

In einer Rührapparatur mit Dosiervorrichtung und Rückflusskühler werden unter Stickstoffatmosphäre 592,84 g Wasser und 17,16 g Ameisensäure (Konz. HCOOH = 85 %) vorgelegt. Anschließend werden über die Dosiervorrichtung 90,0 g Bis-AMEO zudosiert. Der pH-Wert liegt bei 3,5. Es wird 3 h lang bei 60 °C gerührt. Danach wird bei 60 bis 65 °C und 130 bis 200 mbar das ETOH/Wasser-Gemisch abdestilliert. Die Auswaage des Rückstands beträgt 600 g. Der Rückstand wird über einen Druckfilter (Seitz T-950) filtriert. Es wird eine klare, leicht gelbliche Flüssigkeit erhalten, die einen pH-Wert von 3,5 aufweist und lagerstabil ist.

| Rückstand: | 9,4 % (w/w) |
|---|---|
| $SiO_2$-Gehalt: | 3,1 % |
| Freies Ethanol: | 1,8 % |

**Beispiel 2:**

In einer Rührapparatur mit Dosiervorrichtung und Rückflusskühler werden unter Stickstoffatmosphäre 598,6 g Wasser und 10,49 g Ameisensäure (Konz. HCOOH = 85 %) vorgelegt. Anschließend werden über die Dosiervorrichtung 75,0 g Bis-AMEO zudosiert. Der pH-Wert liegt bei 4,2. Es wird 1 h lang bei 60 °C gerührt und nachfolgend werden 28,91 g PTMO dosiert und die Reaktionsmischung weitere 2 h auf 60 °C temperiert. Danach wird bei 60 bis 65 °C und 130 bis 200 mbar das Alkohol/Wasser-Gemisch abdestilliert. Die Auswaage des Rückstands beträgt 600 g. Der Rückstand wird über einen Druckfilter (Seitz T-950) filtriert. Es wird eine klare, leicht gelbliche Flüssigkeit erhalten, die einen pH-Wert von 4,2 aufweist und lagerstabil ist.

| Rückstand: | 10,5 % (w/w) |
|---|---|
| SiO$_2$-Gehalt: | 4,8 % |
| Freies Methanol: | 0,8 % |
| Freies Ethanol: | 1,4 % |

**Beispiel 5**

In einer 1-l-Rührapparatur mit Dosiervorrichtung und Rückflusskühler werden unter Stickstoff 400,00 g Wasser und 4,75 g Ameisensäure (Konz. HCOOH = 85 %) vorgelegt. Über die Dosiervorrichtung werden 40,0 g Bis-AMEO zudosiert. Es werden weitere 1,55 g Ameisensäure zugesetzt. Der pH-Wert beträgt 4,17. Es wird 90 min bei 60 °C gerührt. Anschließend werden 40 g PTMO zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert. Es wird eine klare, leicht gelbliche Flüssigkeit erhalten, die einen pH-Wert von 4,11 aufweist und lagerstabil ist.

| Rückstand: | 11,8 % (w/w) |
|---|---|
| SiO$_2$-Gehalt: | 6,1 % |
| Freies Methanol: | 0,1 % |
| Freies Ethanol: | < 0,1 % |

**Beispiel 6**

In einer 1-l-Rührapparatur mit Dosiervorrichtung und Rückflusskühler werden 400,00 g Wasser und 4,75 g Ameisensäure (Konz. HCOOH = 85 %) unter Stickstoffatmosphäre vorgelegt. Über die Dosiervorrichtung werden 40,0 g Bis-AMEO zudosiert. Es werden weitere 1,45 g Ameisensäure zugesetzt. Der pH-Wert beträgt 4,15. Es wird 90 min lang (Dosierzeit eingeschlossen) bei 60 °C gerührt. Anschließend werden 32 g PTMO zudosiert und 2 h bei 65 °C gerührt. Danach wird bei 60 bis 65 °C und 130 bis 200 mbar das Alkohol/Wasser-Gemisch abdestilliert. Die Auswage des Rückstands beträgt 400 g. Das Produkt wird bei Raumtemperatur über einen Seitz T-950 Filterplatte filtriert. Es wird eine klare, leicht gelbliche Flüssigkeit erhalten, die einen pH-Wert von 4,10 aufweist und lagerstabil ist.

| Rückstand: | 10,1 % (w/w) |
|---|---|
| SiO$_2$-Gehalt: | 5,1 % |
| Freies Methanol: | 0,1 % |
| Freies Ethanol: | 1,1 % |

**Beispiel 7**

In einer 1-l-Rührapparatur mit Dosiervorrichtung und Rückflusskühler werden unter Stickstoff 400,00 g Wasser und 2,8 g Ameisensäure (Konz. HCOOH = 85 %) vorgelegt. Über die Dosiervorrichtung werden 20,0 g Bis-AMEO zudosiert. Es werden weitere 0,54 g Ameisensäure zugesetzt. Der pH-Wert liegt bei 4,28. Es wird 90 min bei 60 °C gerührt. Anschließend werden 40,0 g PTMO dosiert und der Ansatz 2 weitere Stunden bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über einen Seitz T-950 Filterplatte filtriert. Es wird eine klare, leicht gelbliche Flüssigkeit erhalten, die einen pH-Wert von 4,3 aufweist und lagerstabil ist.

| Rückstand: | 8,9 % (w/w) |
|---|---|
| SiO$_2$-Gehalt: | 4,9 % |
| Freies Methanol: | 0,1 % |
| Freies Ethanol: | 0,3 % |
| Flammpunkt: | > 95 °C |

**Beispiel 8**

In einer 1-I-Rührapparatur mit Dosiervorrichtung und Rückflusskühler werden in einer Stickstoffatmosphäre 400,00 g Wasser und 2,8 g Ameisensäure (Konz. HCOOH = 85 %) vorgelegt. Über die Dosiervorrichtung werden 20,0 g Bis-AMEO zudosiert. Es werden weitere 0,50 g Ameisensäure zugesetzt. Der pH-Wert liegt bei 4,24. Es wird 90 min bei 60 °C gerührt. Anschließend wird eine Mischung aus 32,0 g PTMO und 8,0 g Dimethyldimethoxysilan zudosiert und 2 weitere Stunden bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über einen Seitz T-950 Filterplatte filtriert. Es wird eine klare, leicht gelbliche Flüssigkeit erhalten, die einen pH-Wert von 4,0 aufweist und lagerstabil ist.

| | |
|---|---|
| Rückstand: | 8,8 % (w/w) |
| $SiO_2$-Gehalt: | 5,1 % |
| Freies Methanol: | 0,7 % |
| Freies Ethanol: | 0,2 % |

**Beispiel 11**

In einer 1-I-Rührapparatur mit Dosiervorrichtung und Rückflusskühler werden unter Stickstoff 150 g des wässrigen Produkts Dynasylan® F 8815 vorgelegt. Dann gibt man unter Rühren 60 g dest. $H_2O$ und 1,1 g Ameisensäure (Konz. HCOOH = 85 %) zu. Anschließend werden über die Dosiervorrichtung 7,5 g Bis-AMEO zudosiert. Es wird 90 min bei 60 °C gerührt. Danach wird bei 60 bis 65 °C und 130 bis 200 mbar das Alkohol/Wasser-Gemisch abdestilliert. Die Auswage des Rückstands beträgt 200 g. Das Produkt wird bei Raumtemperatur über eine Seitz T-950 Filterplatte filtriert. Es wird eine opalezierende, leicht gelbliche Flüssigkeit erhalten, die einen pH-Wert von 4,41 aufweist und lagerstabil ist.

| | |
|---|---|
| Rückstand: | 4,9 % (w/w) |
| $SiO_2$-Gehalt | 1,4 % |
| Freies Methanol: | 0,3 % |
| Freies Ethanol: | 3,8 % |

**Beispiel 12**

In einer 1-I-Rührapparatur mit Dosiervorrichtung und Rückflusskühler werden unter Stickstoff 200,00 g Ethanol und 20 g Wasser sowie 2,9 g Ameisensäure (Konz. HCOOH = 85 %) vorgelegt. Über die Dosiervorrichtung werden 20,0 g Bis-AMEO und 10 g Dynasylan® F 8261 zudosiert. Es werden weitere 2,85 g Ameisensäure zugesetzt. Der pH-Wert liegt bei 3,45. Es wird 90 min bei 60 °C gerührt. Anschließend werden 200 g Wasser langsam zugegeben. Die Lösung bleibt homogen und ist leicht opaleszierend. Anschließend wird die Mischung 2 h bei 65 °C gerührt. Dann werden erneut 200 g Wasser zugegeben und nachfolgend das Ethanol/Wassergemisch bei 60 bis 65 °C und 130 bis 200 mbar entfernt. Die Auswaage des Rückstands beträgt 400 g. Das Produkt wird bei Raumtemperatur über eine Seitz T-950 Filterplatte filtriert. Es wird eine klare, leicht opaleszierende Flüssigkeit erhalten, die einen pH-Wert von 3,70 aufweist und lagerstabil ist.

| | |
|---|---|
| Rückstand: | 4,9 % (w/w) |
| $SiO_2$-Gehalt: | 1,3 % |
| Freies Methanol: | < 0,1 % |
| Freies Ethanol: | 2,1 % |

**Beispiel 13**

In einer 1-I-Rührapparatur mit Dosiervorrichtung und Rückflusskühler werden unter Stickstoff 400,00 g Wasser und 2,8 g Ameisensäure (Konz. HCOOH = 85 %) vorgelegt. Über die Dosiervorrichtung werden 20,0 g Bis-AMEO zudosiert. Der pH-Wert liegt bei 4,24. Es wird 90 min lang bei 60 °C gerührt. Anschließend wird eine Mischung aus 40,0 g PTMO und 10 g GLYMO zudosiert und 2 h bei 65 °C gerührt.

Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, leicht gelbliche Flüssigkeit erhalten, die einen pH-Wert von 4,4 aufweist und lagerstabil ist.

| | |
|---|---|
| Rückstand: | 10,9 % (w/w) |
| $SiO_2$-Gehalt: | 5,6 % |
| Freies Methanol: | 0,7 % |
| Freies Ethanol: | 2,0 % |

Zu dem Ansatz (400 g) werden erneut 100 g VE Wasser zugeben und bei ca. 130 bis 200 mbar ca. 100 Alkohol/Wasser-Gemisch abdestilliert. Die Auswaage des Rückstands beträgt 400 g.

Es wird eine klare gelbliche Flüssigkeiten erhalten.

| | |
|---|---|
| freier Ethanolgehalt | < 0,1 %.(w/w) |
| freier Methanolgehalt | < 0,1 % (w/w) |
| Flammpunkt: | > 95 °C |

### Beispiel 14

In einer 1-l-Rührapparatur mit Dosiervorrichtung und Rückflusskühler werden unter Stickstoffatmosphäre 400,00 g Wasser und 2,8 g Ameisensäure (Konz. HCOOH = 85 %) vorgelegt. Über die Dosiervorrichtung werden 20,0 g Bis-AMEO zudosiert. Es werden weitere 1,8 g Ameisensäure zugesetzt. Der pH-Wert liegt bei 4,21. Es wird 90 min lang bei 60 °C gerührt. Anschließend wird eine Mischung aus 32,0 g PTMO und 18,0 g GLYMO zudosiert und 2 h bei 65 °C gerührt. Danach wird bei 60 bis 65 °C und 130 bis 200 mbar das Alkohol/Wasser-Gemisch destillativ entfernt. Die Auswaage des Rückstands beträgt 400 g. Das Produkt wird bei Raumtemperatur über eine Seitz T-950 Filterplatte filtriert. Es wird eine klare, gelbliche Flüssigkeit erhalten, die einen pH-Wert von 4,35 aufweist und lagerstabil ist.

| | |
|---|---|
| Rückstand: | 11,4 % (w/w) |
| $SiO_2$-Gehalt: | 5,5 % |
| Freies Methanol: | 1,5 % |
| Freies Ethanol: | 0,4 % |

### Beispiel 15

In einer 1-l-Rührapparatur mit Dosiervorrichtung und Rückflusskühler werden unter Stickstoff 400,00 g Wasser und 2,8 g Ameisensäure (Konz. HCOOH = 85 %) vorgelegt. Über die Dosiervorrichtung werden 20,0 g Bis-AMEO zudosiert. Der pH-Wert liegt bei 4,3. Es wird 90 min lang bei 60 °C gerührt. Anschließend werden 40,0 g MTES (Methyltriethoxysilan) zudosiert und 2 h bei 65 °C gerührt. Danach wird bei 60 bis 65 °C und 130 bis 200 mbar das Alkohol/Wasser-Gemisch destillativ entfernt. Die Auswaage des Rückstands beträgt 400 g. Das Produkt wird bei Raumtemperatur über eine Seitz T-950 Filterplatte filtriert. Es wird eine klare, gelbliche Flüssigkeit erhalten, die einen pH-Wert von 4,35 aufweist und lagerstabil ist.

| | |
|---|---|
| Rückstand: | 10,7 % (w/w) |
| $SiO_2$-Gehalt: | 6,0 % |
| Freies Methanol: | < 0,1 % |
| Freies Ethanol: | 0,8 % |

### Beispiel 16

In einer 1-l-Rührapparatur mit Dosiervorrichtung und Rückflusskühler werden unter N2 40,0 g GLYMO bei Raumtemperatur zuerst mit 4,8 g Eisessig (100-%ige Essigsäure) versetzt. Nach 5 min werden 4,8 g Zirkon-n-propylat zugegeben und nach weiteren 5 min wird eine Mischung aus 83,7 g Wasser und 12,0 g Levasil 100S/45% über die Dosiervorrichtung zugegeben. Die Lösung ist leicht opak und der pH-Wert beträgt 3,1. Während der Zugabe von Levasil 100S/45% steigt die Temperatur leicht an. Die Lösung wird anschließend 2 h auf 65 °C erwärmt. Danach wird die Lösung mit 400 g Wasser verdünnt und auf 65 °C erwärmt. Anschließend werden erneut 10,6 g Essigsäure zugesetzt und nachfolgend 75,0 g Bis-AMEO langsam, dosiert. Der pH-Wert beträgt 4,5. Der Ansatz wird unter Rühren 2 h auf 65 °C gehalten. Dann wird bei 60 bis 65 °C das Methanol/Ethanol/Wasser-Gemisch abdestilliert. Die Auswaage des Rückstands beträgt 500 g. Das Produkt wird bei Raumtemperatur über eine Seitz T-950 Filterplatte filtriert.

Es wird eine opake, gelbliche Flüssigkeit erhalten, die einen pH-Wert von 4,67 aufweist und bedingt lagerstabil ist.

| | |
|---|---|
| Rückstand: | 16,9 % (w/w) |
| $SiO_2$-Gehalt: | 6,5 % |
| Freies Methanol: | 0,4 % |
| Freies Ethanol: | 0,5 % |

### Beispiel 18

In einer 1-l-Rührapparatur mit Dosiervorrichtung und Rückflusskühler werden 200,00 g Ethanol und 20 g Wasser sowie 1,4 g Ameisensäure (Konz. HCOOH = 85 %) vorgelegt. Über die Dosiervorrichtung werden 10,0 g Bis-AMEO und 7,5 g Dynasylan® F 8261 zudosiert. Es werden weitere 2,01 g Ameisensäure zugesetzt. Der pH-Wert liegt bei 3,53. Es wird 90 min lang bei 60 °C gerührt. Anschließend werden 100 g Wasser langsam zugegeben. Anschließend wird die Mischung 2 h bei 65 °C gerührt. Dann werden erneut 150 g Wasser zugegeben und nachfolgend das Ethanol/Wassergemisch bei 60 bis 65 °C und 130 bis 200 mbar entfernt. Die Auswaage des Rückstands beträgt 200 g. Das Produkt wird bei Raumtemperatur über eine Seitz T-950 Filterplatte filtriert.

Es wird eine opaleszierende, gelbliche Flüssigkeit erhalten, die einen pH-Wert von 3,85 aufweist und lagerstabil ist.

| | |
|---|---|
| Rückstand: | 5,8 % (w/w) |
| $SiO_2$-Gehalt: | 1,4 % |
| Freies Ethanol: | 2,0 % |

### Beispiel 20

In einer 1-l-Rührapparatur mit Dosiervorrichtung und Rückflusskühler werden 400,00 g Wasser und 4,75 g Ameisensäure (Konz. HCOOH = 85 %) vorgelegt. Über die Dosiervorrichtung wird eine Mischung aus 40,0 g Bis-AMEO + 40 g MTES (Methyltriethoxysilan) zudosiert. Es werden weitere 2,40 g Ameisensäure zugesetzt. Der pH-Wert liegt bei 3,99. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,05 aufweist und lagerstabil ist.

| | |
|---|---|
| Rückstand: | 9,9 % (w/w) |
| $SiO_2$-Gehalt: | 5,7 % |
| Freies Ethanol: | 0,8 % |

### Beispiel 21

In einer 1-l-Rührapparatur mit Dosiervorrichtung und Rückflusskühler werden 400,00 g Wasser und 4,75 g Ameisensäure (Konz. HCOOH = 85 %) vorgelegt. Über die Dosiervorrichtung wird eine Mischung aus 40,0 g Bis-AMEO und 60 g MTES (Methyltriethoxysilan) zudosiert. Der pH-Wert liegt bei 4,3. Es wird 90 min lang bei 60 °C gerührt. Anschließend werden 10 g GLYMO langsam zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,38 aufweist und lagerstabil ist.

| | |
|---|---|
| Rückstand: | 13,6 % (w/w) |
| $SiO_2$-Gehalt: | 8,4 % |
| Freies Methanol: | 0,1 % |
| Freies Ethanol: | 0,6 % |

**Beispiel 22**

In einer 1-l-Rührapparatur mit Dosiervorrichtung und Rückflusskühler werden 400,00 g Wasser und 2,8 g Ameisensäure (Konz. HCOOH = 85 %) vorgelegt. Über die Dosiervorrichtung werden 20,0 g Bis-AMEO zudosiert. Der pH-Wert liegt bei 4,23. Es wird 90 min lang bei 60 °C gerührt. Anschließend werden 40,0 g Dynasylan® 4144 zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.
Es wird eine klare, gelbliche Flüssigkeit erhalten, die einen pH-Wert von 4,45 aufweist und lagerstabil ist.

| | |
|---|---|
| Rückstand: | 12,4 % (w/w) |
| $SiO_2$-Gehalt: | 2,3 % |
| Freies Methanol: | 0,2 % |
| Freies Ethanol: | 0,1 % |

**Beispiel 23**

In einer 1-l-Rührapparatur mit Dosiervorrichtung und Rückflusskühler werden 400,00 g Wasser und 2,8 g Ameisensäure (Konz. HCOOH = 85 %) vorgelegt. Über die Dosiervorrichtung werden 20,0 g Bis-AMEO zudosiert. Der pH-Wert liegt bei 4,21. Es wird 90 min lang bei 60 °C gerührt. Anschließend werden 60,0 g Dynasylan® 4144 zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.
Es wird eine klare, gelbliche Flüssigkeit erhalten, die einen pH-Wert von 4,37 aufweist und lagerstabil ist.

| | |
|---|---|
| Rückstand: | 16,0 % (w/w) |
| $SiO_2$-Gehalt: | 2,0 % |
| Freies Methanol: | 0,1 % |
| Freies Ethanol: | 0,1 % |

**Beispiel 24**

In einer 1-l-Rührapparatur mit Dosiervorrichtung und Rückflusskühler werden 400,00 g Wasser, 12,0 g Levasil 100S und 4,75 g Ameisensäure (Konz. HCOOH = 85 %) vorgelegt. Über die Dosiervorrichtung wird eine Mischung aus 40,0 g Bis-AMEO und 60 g MTES (Methyltriethoxysilan) zudosiert. Es werden weitere 2,18 g Ameisensäure zugesetzt. Der pH-Wert liegt bei 4,33. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.
Es wird eine klare, gelbliche Flüssigkeit erhalten, die einen pH-Wert von 4,43 aufweist und lagerstabil ist.

| | |
|---|---|
| Rückstand: | 12,9 % (w/w) |
| $SiO_2$-Gehalt: | 8,4 % |
| Freies Ethanol: | 0,5 % |

**Beispiel 25**

In einer 1-l-Rührapparatur mit Dosiervorrichtung und Rückflusskühler werden 400,00 g Wasser und 5,0 g einer 85-%igen Phosphorsäure vorgelegt. Über die Dosiervorrichtung wird eine Mischung aus 40,0 g Bis-AMEO und 60 g MTES (Methyltriethoxysilan) zudosiert. Es werden weitere 6,25 g Ameisensäure zugesetzt. Der pH-Wert liegt bei 4,19. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.
Es wird eine klare, gelbliche Flüssigkeit erhalten, die einen pH-Wert von 4,32 aufweist und lagerstabil ist.

| | |
|---|---|
| Rückstand: | 13,3 % (w/w) |

(fortgesetzt)

| | |
|---|---|
| $SiO_2$-Gehalt: | 7,9 % |
| Freies Ethanol: | 2,7 % |

Zu dem Ansatz (400 g) werden erneut 100 g VE Wasser zugeben und bei ca. 130 bis 200 mbar ca. 100 Alkohol/Wasser-Gemisch abdestilliert. Die Auswaage des Rückstands beträgt 400 g.

Es wird eine klare gelbliche Flüssigkeiten erhalten mit einem freien Ethanolgehalt von < 0,1 %.(w/w). Flammpunkt: > 95 °C

**Beispiel 26**

In einer 1-l-Rührapparatur mit Dosiervorrichtung und Rückflusskühler werden 400,00 g Wasser und 7,9 g einer 70%igen Salpetersäure vorgelegt. Über die Dosiervorrichtung wird eine Mischung aus 40,0 g Bis-AMEO und 60 g MTES (Methyltriethoxysilan) zudosiert. Es werden weitere 0,95 g Ameisensäure zugesetzt. Der pH-Wert liegt bei 4,15. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,15 aufweist und lagerstabil ist.

| | |
|---|---|
| Rückstand: | 11,8 % (w/w) |
| $SiO_2$-Gehalt: | 7,2 % |
| Freies Ethanol: | 0,8 % |

**Beispiel 27**

In einer 1-l-Rührapparatur mit Dosiervorrichtung und Rückflusskühler werden 400,00 g Wasser und 4,0 g Ameisensäure (Konz. HCOOH = 85 %) vorgelegt. Dann werden 100 g wässrige Produkt Dynasylan® HS 2926 unter gutem Rühren zugegeben. Anschließend werden über die Dosiervorrichtung 40,0 g Bis-AMEO zudosiert. Der pH-Wert liegt bei 4,15. Es wird 90 min lang bei 60 °C und anschließend 2 h bei 65 °C gerührt. Danach wird bei 60 bis 65 °C und 130 bis 200 mbar das Alkohol/WasserGemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,25 aufweist und lagerstabil ist.

| | |
|---|---|
| Rückstand: | 13,5 % (w/w) |
| $SiO_2$-Gehalt: | 5,0 % |
| Freies Ethanol: | 0,2 % |

**Beispiel 28**

In einer 1-l-Rührapparatur mit Dosiervorrichtung und Rückflusskühler werden 400,00 g Wasser und 4,0 g Ameisensäure (Konz. HCOOH = 85 %) vorgelegt. Dann werden 120 g des wässrigen Produkts Dynasylan® HS 2926 unter gutem Rühren zugegeben. Anschließend werden über die Dosiervorrichtung 32,0 g Bis-AMEO zudosiert. Der pH-Wert liegt bei 4,03. Es wird 90 min lang bei 60 °C und anschließend 2 h bei 65 °C gerührt. Danach wird bei 60 bis 65 °C und 130 bis 200 mbar das Alkohol/WasserGemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,10 aufweist und lagerstabil ist.

| | |
|---|---|
| Rückstand: | 14,4 % (w/w) |
| $SiO_2$-Gehalt: | 4,9 % |
| Freies Ethanol: | < 0,1 % |

**Beispiel 29**

In einer 1l-Rührapparatur mit Dosiervorrichtung und Rückflußkühler werden 400,00 g Wasser und 4,0 g Ameisensäure (Konz. HCOOH = 85 %) vorgelegt. Dann werden unter Rühren 12 g Levasil 100S/45 zugegeben und 120 g des wässrigen Produkts Dynasylan® HS 2926 zugegeben. Anschließend wird über die Dosiervorrichtung 32,0 g Bis-AMEO langsam zudosiert. Der pH-Wert liegt bei 4,20. Es wird 90 min lang bei 60 °C gerührt. Nachfolgend werden über den Tropftrichter 20 g VTMO langsam zugegeben und anschließend 2 h bei 65 °C gerührt. Danach wird bei 60 bis 65 °C und 130 bis 200 mbar Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine opake, gelbliche Flüssigkeit erhalten, die einen pH-Wert von 4,23 aufweist und lagerstabil ist.

| | |
|---|---|
| Rückstand: | 18,1 % (w/w) |
| $SiO_2$-Gehalt: | 8,2 % |
| Freies Methanol: | < 0,1 % |
| Freies Ethanol: | < 0,1 % |

**Beispiel 30**

In einer 1-l-Rührapparatur mit Dosiervorrichtung und Rückflusskühler werden 400,00 g Wasser und 3,2 g Ameisensäure (Konz. HCOOH = 85 %) vorgelegt. Über die Dosiervorrichtung werden 30,0 g Bis-AMEO zudosiert. Es werden weitere 2,45 g Ameisensäure zugesetzt. Der pH-Wert liegt bei 4,27. Es wird 90 min lang bei 60 °C gerührt. Anschließend werden 30,0 g GLYMO zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,36 aufweist und lagerstabil ist.

| | |
|---|---|
| Rückstand: | 10,6 % (w/w) |
| $SiO_2$-Gehalt: | 4,1 % |
| Freies Methanol: | 0,1 % |
| Freies Ethanol: | < 0,1 % |

**Beispiel 31**

In einer 1/l-Rührapparatur mit Dosiervorrichtung und Rückflusskühler werden 400,00 g Wasser und 4,3 g Ameisensäure (Konz. HCOOH = 85 %) sowie 12 g Levasil 100 S vorgelegt. Der pH-Wert liegt bei 4,17. Über die Dosiervorrichtung werden 30,0 g Bis-AMEO zudosiert. Es wird 90 min lang bei 60 °C gerührt. Anschließend werden 30,0 g GLYMO zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,30 aufweist und lagerstabil ist.

| | |
|---|---|
| Rückstand: | 11,9 % (w/w) |
| $SiO_2$-Gehalt: | 5,2 % |
| Freies Methanol: | 0,7 % |
| Freies Ethanol: | 0,6 % |

**Beispiel 32**

In einer 1/l-Rührapparatur mit Doppelmantel, Dosiervorrichtung und Rückflusskühler werden 400 g Wasser und 6,9 g Ameisensäure (Konz. HCOOH = 85 %) vorgelegt. Der pH-Wert liegt bei 4,34. Über die Dosiervorrichtung werden 50,0 g Bis-AMEO zudosiert. Es wird 90 min lang bei 60 °C gerührt. Anschließend werden 9,6 g DMDMO zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine opake, gelbliche Flüssigkeit erhalten, die einen pH-Wert von 4,16 aufweist und lagerstabil ist.

| | |
|---|---|
| Rückstand: | 8,90 % (w/w) |
| $SiO_2$-Gehalt: | 4,3 % |
| Freies Methanol: | 0,1 % |

(fortgesetzt)

| | |
|---|---|
| Freies Ethanol: | 0,3 % |

## Beispiel 33

In einer 1/l-Rührapparatur mit Dosiervorrichtung und Rückflusskühler werden 400,00 g Wasser und 7,8 g Salzsäure (Konz. HCl = 37 %) vorgelegt. Über die Dosiervorrichtung werden 34,0 g Bis-AMEO zudosiert. Der pH-Wert wird mit 0,33 g Salzsäure (37%ig) auf 2,04 eingestellt. Es wird 30 min lang bei 60 °C gerührt. Anschließend werden 40 g MTES (Methyltriethoxysilan) zudosiert und 2 h bei 65 °C gerührt. Dann werden erneut 3 g Bis-AMEO zugegeben. Dabei steigt der pH-Wert auf 5,4 an. Durch erneute Zugabe von 0,37 g Salzsäure (37-%ig) wird der pH-Wert auf 3,2 eingestellt. Anschließend werden erneut 3,0 g Bis-AMEO zugegeben, wobei der pH-wert auf 6,0 ansteigt. Durch Zugabe von 0,74 g Salzsäure (37-%ig) wird der pH-Wert auf 4,1 eingestellt. Anschließend wird das Alkohol/Wassergemisch bei einer Sumpftemperatur von 65 °C und einem Unterdruck von 130 bis 200 mbar abgetrennt. Die Auswaage des Rückstands beträgt 400 g. Das Produkt wird bei Raumtemperatur über eine Seitz T-950 Filterplatte filtriert.

Es wird eine opake, gelbliche Flüssigkeit erhalten, die einen pH-Wert von 4,30 aufweist und lagerstabil ist.

| | |
|---|---|
| Rückstand: | 9,1 % (w/w) |
| SiO$_2$-Gehalt: | 5,7 % |
| Freies Ethanol: | 1,7 % |

## Beispiel 34

In einer 1/l-Rührapparatur mit Dosiervorrichtung und Rückflusskühler werden 400,00 g Wasser und 9,3 g Salzsäure (Konz. HCl = 37 %) vorgelegt. Über die Dosiervorrichtung werden 40,0 g Bis-AMEO zudosiert. Der pH-Wert wird mit 2,41 g Salzsäure (37-%ig) auf 2,05 eingestellt. Es wird 30 min lang bei 60 °C gerührt. Anschließend werden 40 g MTES (Methyltriethoxysilan) zudosiert und 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 1,75 aufweist und lagerstabil ist.

| | |
|---|---|
| Rückstand: | 9,6 % (w/w) |
| SiO$_2$-Gehalt: | 5,7 % |
| Freies Ethanol: | 1,5 % |

## Beispiel 35

In einer 1-l-Rührapparatur mit Doppelmantel, Dosiervorrichtung und Rückflusskühler werden 426,9 g Wasser und 5,1 g Ameisensäure (Konz. HCOOH = 85 %) vorgelegt. Über die Dosiervorrichtung 40,0 g Bis-AMEO zudosiert. Es werden weitere 0,55 g Ameisensäure zugesetzt. Der pH-Wert liegt bei 4,30. Es wird 90 min lang bei 60 °C gerührt. Anschließend wird eine Mischung aus 14,0 g N-Formyl-3-aminopropyltriethoxysilan und 14,0 g MTES zudosiert. Der pH-Wert liegt bei 4,3. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,1 aufweist und lagerstabil ist.

| | |
|---|---|
| Rückstand: | 9,3 % (w/w) |
| SiO$_2$-Gehalt: | 4,5 % |
| Freies Ethanol: | 0,2 % |

## Beispiel 36

In einer 1-l-Rührapparatur mit Doppelmantel, Dosiervorrichtung und Rückflusskühler werden 400,0 g Wasser und 6,0 g Ameisensäure (Konz. HCOOH = 85 %) vorgelegt. Über die Dosiervorrichtung 50,0 g Bis-AMEO zudosiert. Es werden weitere 2,51 g Ameisensäure zugesetzt. Der pH-Wert liegt bei 4,28. Es wird 90 min lang bei 60 °C gerührt. Anschließend wird 19,20 g N-Formyl-3-aminopropyltriethoxysilan zudosiert. Der pH-Wert liegt bei 4,3. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands soll 400 g betragen. Das Produkt wurde bei Raumtemperatur über eine Seitz T-950 Filterplatte filtriert.

Es wird eine klare, gelbliche Flüssigkeit erhalten, die einen pH-Wert von 4,07 aufweist und lagerstabil ist.

| Rückstand: | 12,7 % (w/w) |
|---|---|
| $SiO_2$-Gehalt: | 5,1 % |
| Freies Ethanol: | 0,2 % |

## Beispiel 37

In einem 250-ml-Mehrhalskolben mit Magnetrührer und Temperaturvorrichtung und N2-Überlagerung werden 40,0 g Bis-AMEO, 40,0 g MTES und 40,0 g Ethanol vorgelegt. Unter Rühren werden 4,0 g Wasser zudosiert. Die Reaktionsmischung wird 1 h lang bei 60 °C gerührt. In einer 1-l-Rührapparatur mit Dosiervorrichtung und Rückflusskühler werden 400,0 g Wasser und 4,75 g Ameisensäure (Konz. HCOOH = 85 %) vorgelegt. Über die Dosiervorrichtung wird die vorhydrolysierte Reaktionsmischung bei 60 °C zudosiert. Es werden weitere 1,00 g Ameisensäure zugesetzt. Der pH-Wert liegt bei 4,25. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,24 aufweist und lagerstabil ist.

| Rückstand: | 9,9 % (w/w) |
|---|---|
| $SiO_2$-Gehalt: | 5,1 % |
| Freies Ethanol: | 0,3 % |

## Beispiel 38

In einem 250-ml-Mehrhalskolben mit Magnetrührer und Temperaturvorrichtung und N2-Überlagerung werden 40,0 g Bis-AMEO, 40,0 g MTES und 40,0 g Ethanol vorgelegt. Unter Rühren werden 8,0 g Wasser zudosiert. Die Reaktionsmischung wird 1/4 h lang bei 60 °C gerührt. In einer 1-l-Rührapparatur mit Dosiervorrichtung und Rückflusskühler werden 400,0 g Wasser und 4,75 g Ameisensäure (Konz. HCOOH = 85 %) vorgelegt. Über die Dosiervorrichtung wird die vorhydrolysierte Reaktionsmischung bei 60 °C zudosiert. Es werden weitere 0,93 g Ameisensäure zugesetzt. Der pH-Wert liegt bei 4,27. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,3 aufweist und lagerstabil ist.

| Rückstand: | 10,2 % (w/w) |
|---|---|
| $SiO_2$-Gehalt: | 6,0 % |
| Freies Ethanol: | 1,4 % |

## Beispiel 39

In einem 250-ml-Mehrhalskolben mit Magnetrührer und Temperaturvorrichtung und N2-Überlagerung werden 40,0 g Bis-AMEO, 40,0 g MTES und 40,0 g Ethanol vorgelegt. Unter Rühren werden zügig 5,5 g Ameisensäure (Konz. HCOOH = 85 %) zugegeben. Anschließend werden 3,2 g Wasser zudosiert. Die Reaktionsmischung wird bei 60 °C 1 Stunde lang gerührt. In einer 1l-Rührapparatur mit Dosiervorrichtung und Rückflusskühler werden 400,00 g Wasser vorgelegt. Über die Dosiervorrichtung wird die vorhydrolysierte Mischung bei 60 °C zudosiert. Es werden weitere 0,23 g Ameisensäure zugesetzt. Der pH-Wert liegt bei 4,10. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-950 Filterplatte filtriert.

Es wird eine klare, gelbliche Flüssigkeit erhalten, die einen pH-Wert von 4,00 aufweist und lagerstabil ist.

| Rückstand: | 10,0 % (w/w) |
|---|---|
| $SiO_2$-Gehalt: | 5,8 % |

(fortgesetzt)

Freies Ethanol:     1,0 %

**Beispiel 40**

In einer 10-l-Rührapparatur mit Dosiervorrichtung und Rückflusskühler werden 5 000,00 g Wasser und 95,34 g einer 85-%igen Ameisensäure vorgelegt. Über die Dosiervorrichtung werden 750 g Bis-AMEO langsam zudosiert. Es werden weitere 11,66 g Ameisensäure zugesetzt. Der pH-Wert liegt bei 4,30. Es wird 3 Stunden bei 65 °C gerührt. Danach wird bei 60 bis 65 °C und 130 bis 200 mbar das Alkohol/Wasser-Gemisch abdestilliert. Die Auswaage des Rückstands beträgt 5 000 g. Das Produkt wird bei Raumtemperatur über eine Seitz T-950 Filterplatte filtriert.
Es wird eine klare, gelbliche Flüssigkeit erhalten, die einen pH-Wert von 4,25 aufweist und lagerstabil ist.

| | |
|---|---|
| Rückstand: | 8,9 % (w/w) |
| $SiO_2$-Gehalt: | 3,7 % |
| Freies Ethanol: | 1,7 % |

**Beispiel 41**

In einer 1-l-Rührapparatur mit Dosiervorrichtung und Rückflusskühler werden 400,00 g Wasser 12 g Levasil 100S und 4,75 g Ameisensäure (Konz. HCOOH = 85 %) vorgelegt. Über die Dosiervorrichtung wird eine Mischung aus 40,0 g Bis-AMEO und 80 g MTES (Methyltriethoxysilan) zudosiert. Es werden weitere 2,54 g Ameisensäure zugesetzt. Der pH-Wert liegt bei 4,24. Es wird 90 min lang bei 60 °C gerührt. Anschließend wird 2 h bei 65 °C gerührt. Danach wird bei 60 bis 65 °C und 130 bis 200 mbar das Alkohol/Wasser-Gemisch abdestilliert. Die Auswaage des Rückstands beträgt 400 g. Das Produkt wird bei Raumtemperatur über eine Seitz T-2100 Filterplatte filtriert.
Es wird eine klare, gelbliche Flüssigkeit erhalten, die einen pH-Wert von 4,27 aufweist und lagerstabil ist.

| | |
|---|---|
| Rückstand: | 14,9 % (w/w) |
| $SiO_2$-Gehalt: | 10,2 % |
| Freies Ethanol: | 1,0 % |

**Anwendungstechnische Beispiele**

1. Methoden

1.1 Beschichtung der Glasplatten

Es ist darauf zu achten, dass die Oberflächen vor der Auftragung gereinigt werden und vor allem fettfrei sind. Vorbehandlung der Glasoberfläche (Größe der Glasplatten 0,07m x 0,15m). Die Glasplatten werden mit Isopropanol vorgereinigt und mit einer wässrigen Ceroxidschlemme abrasiv aktiviert. Das angetrocknete Ceroxid wird restlos mit einem Papiertuch entfernt.
Die Systeme aus den Beispielen wurden mit einer 12 $\mu$m Rakel auf die gereinigte Oberfläche aufgetragen. Die daraus entstandenen Beschichtungen wurden anschließend mindestens 12 Stunden bei Raumtemperatur gehärtet.

1.2 Bestimmung der Bleistifthärte

Die Bleistifthärteprüfung wurde mit dem "ERICHSON Scratch Hardness Tester Model 291" in Anlehnung an ISO 15184 durchgeführt. Die Ergebnisse dieser Prüfungen sind in Tabelle 2 zusammengefasst.

1.3 Kochtest

Die beschichteten Glasplatten wurden 1 Stunde lang in kochendes VE Wasser gestellt. Das Ergebnis dieser Prüfung ist in Tabelle 2 und 3 zusammengefasst.
Die visuelle Beurteilung der Beschichtung nach dem Kochtest erfolgt nach folgender Bewertung:

(-) = Schicht zerstört bzw. abgelöst

(0) = Schicht vorhanden, aber aufgeraut, Hydrophobieverlust

(+) = Schicht unverändert

1.5 Messung der statischen Randwinkel

Die Bestimmung der statischen Randwinkel erfolgt durch eine Mehrfachmessung mit dem Kontaktwinkelmessgerät G-15 der Firma KRÜSS in Anlehnung an DIN EN 828. Zur Überprüfung der hydrophoben Eigenschaften wurde der statische Randwinkel (RW) mit VE Wasser gemessen. Zur Überprüfung der oleophoben Eigenschaften wurde der statische Randwinkel (RW) mit Kaydol (Mineralöl) gemessen.

1.6 Behandlung der mineralischen Probekörper

Die Behandlung der Probekörper (Würfel, Kantenlänge = 5 cm = 0,0015 m$^2$) erfolgte durch Tauchen in die wässrige Silanlösungen aus den Beispielen. Die Probekörper wurden mit einer Tiegelzange 2 x 5 Sekunden in das wässrige Silansystem eingetaucht. Die Wartezeit zwischen den Tauchvorgängen betrug 1 Minute. Die Überprüfung der Probekörper erfolgte nach 1 Tag. Die Ergebnisse sind in Tabelle 4 zu sehen.

1.7 Behandlung mit Dynasylan® F 8815/Beispiel 43-Abmischung

Die Behandlung der Betonoberfläche in Anwendungsbeispiel 5 erfolgte auf Betonplatten (1,5 cm x 7,5 cm x 15 cm = 0,02925 m$^2$) durch einmaliges Auftragen mit einem Pinsel. Nach einer Ruhezeit von 3 Tagen wurde der Antigraffiti-Schnelltest durchgeführt.

Austestung von Antigraffiti-Beschichtungen

In Anlehnung an: Technische Vorschriften für die Bewertung von Verfahren, Technologien und Materialien zur Graffiti Entfernung und Prophylaxe der Gütegemeinschaft Anti Graffiti e.V. (Stand 18. Mai 1998)

Das behandelte Betonoberfläche wurde mit 3 Farben (Edding 800 Permanent Maker schwarz, Dupli-Color Acryl-Lack RAL 3000 feuerrot und Genius Pro Aqua-Lack hochglänzend enzianblau) besprüht. Nach Trocknung der Farben für 1 Stunde bei Raumtemperatur wurde ein Graffitireiniger (Profi Clean Gel-Reiniger) aufgebracht. Nach einer Einwirkzeit von 10 Minuten wurde die Oberfläche mit einem Pinsel mechanisch behandelt. Anschließend unter fließendem Wasser mit einer weichen Bürste gereinigt. Die feuchte Betonplatte wurde 15 Minuten bei 60 °C in einem Umlufttrockenschrank getrocknet und im Anschluss auf Raumtemperatur abgekühlt. Dieser Stresstest wurde 9-mal wiederholt.

Nach jeder Reinigung wurde das Testergebnis am trockenen Substrat nach unten aufgeführten Punkten bewertet.

| | |
|---|---|
| Entfernung | 0-30 % (keine wesentliche Farbentfernung) = 1 Punkt |
| Entfernung | 30-75 % (teilweise Farbentfernung, farbiger Umriss deutlich erkennbar) = 2 Punkte |
| Entfernung | 75-90 % (größtenteils Farbentfernung, umrissener Schatten erkennbar) = 3 Punkte |
| Entfernung | > 90 % (wirksame Farbentfernung umrissener blasser Schatten erkennbar) = 4 Punkte |

Restlose Farbentfernung (einzelne Farbpigmente in Poren sind erlaubt) = 5 Punkte Nach jeder Reinigung wurde mittels der visuellen Beurteilung jedes einzelnen Farbpunktes der Ci-Wert ermittelt. Dieser wurde wie folgt errechnet.

$$\text{Ci-Wert} = (\text{Punktzahl der einzelnen Farbpunkte addieren} * 20) / (\text{Anzahl der Farbpunkte}) \quad \text{Ci-Wert max.} = 100$$

| Anzahl Reinigungszyklen (Funktionstest + Stresstest) | Ci-Wert | Testergebnis |
|---|---|---|
| <5 | < 65 | Stresstest nicht bestanden |
| 5 | > 65 | Stresstest bestanden |
| 6 bis 10 | > 70 | Stresstest mit gutem Ergebnis bestanden |

(fortgesetzt)

| Anzahl Reinigungszyklen (Funktionstest + Stresstest) | Ci-Wert | Testergebnis |
|---|---|---|
| 11 bis 14 | > 75 | Stresstest mit sehr gutem Ergebnis bestanden |
| 15 und mehr | > 80 | Stresstest mit ausgezeichnetem Ergebnis bestanden |

1.8 Beurteilung des Abperleffektes

Zur Bestimmung des Abperleffektes wurde mit einer Pasteur-Pipette 1 ml VE Wasser auf den Probekörper aufgesetzt. Die Spitze der Pasteur-Pipette muss dabei die Substratoberfläche berühren. Nach 10 Minuten wurde der Wassertropfen abgeschüttelt und der Benetzungsgrad visuell beurteilt.
Beurteilung des Prüfmittelergebnisses:

0= Tropfen perlt ab
1 = Tropfen ist nicht aufgesogen → keine Benetzung
2 = Tropfen ist nicht aufgesogen → Kontaktfläche zur Hälfte benetzt
3 = Tropfen ist nicht aufgesogen → Kontaktfläche voll benetzt
4 = Tropfen etwas aufgesogen → Dunkelfärbung der Kontaktfläche, Kontaktfläche voll benetzt
5 = Tropfen zu 50 % aufgesogen → Dunkelfärbung der Kontaktfläche
6 = Tropfen vollständig aufgesogen → Dunkelfärbung der Kontaktfläche

**Anwendungsbeispiel 1**

10,0 g des Produkts aus Beispiel 1 wurden mit 1,0 g des wässrigen Produkts Dynasylan® F 8815 vermischt. Die Mischung wurde mit einer 12 $\mu$m Rakel auf eine gereinigte Glasplatte (Größe = 8 x 15 cm) aufgetragen. Die daraus entstandenen Beschichtungen wurde 1 Stunde lang bei Raumtemperatur getrocknet und anschließend ½ h Stunde bei150 °C in einem Umlufttrockenschrank nachgehärtet. Die daraus entstandene Beschichtung war transparent, sehr hart und zeigte sehr gut ausgeprägte hydrophobe und oleophobe Eigenschaften. Die Schicht konnte nicht mit einem Edding 800 Permanent Marker beschriftet werden.

**Vergleichsbeispiel zu Anwendungsbeispiel 1**

Für den Vergleich zu Anwendungsbeispiel 1 wurde das wässrige Produkt Dynasylan® F 8815 mit einer 12 $\mu$m Rakel auf eine gereinigte Glasplatte (Größe = 8 x 15 cm) aufgetragen. Die Glasoberfläche ließ sich nicht vollständig benetzen. Die daraus entstandenen Beschichtungen wurde 1 Stunde lang bei Raumtemperatur getrocknet und anschließend ½ h Stunde bei 150 °C in einem Umlufttrockenschrank nachgehärtet. Die daraus entstandene Beschichtung war sehr weich und hatte ein milchiges Aussehen.

**Anwendungsbeispiel 2**

5,0 g des Produkts aus Beispiel 40 wurden mit 5,0 g des wässrigen Produkts Dynasylan® Hydrosil 2926 vermischt. Die Mischung wurde mit einer 12 $\mu$m Rakel auf eine gereinigte Glasplatte (Größe = 8 x 15 cm) aufgetragen. Die daraus entstandenen Beschichtungen wurde 1 Woche lang bei Raumtemperatur getrocknet. Es wurde die Bleistifthärte HB festgestellt.

**Vergleichsbeispiel zu Anwendungsbeispiel 2**

Für den Vergleich zu Anwendungsbeispiel 3 wurde das wässrige Produkt Dynasylan® HS 2926 mit einer 12 $\mu$m Rakel auf eine gereinigte Glasplatte (Größe = 8 x 15 cm) aufgetragen. Die Glasoberfläche ließ sich nicht vollständig benetzen. Die daraus entstandene Beschichtung härtete nicht aus und war sehr klebrig.

**Anwendungsbeispiel 3**

50,0 g des Produkts aus Beispiel 43 wurden mit 50,0 g Dynasylan® F 8815 vermischt. Die daraus entstandene Beschichtungsformulierung wurde gemäß der Vorschrift in 1.7 auf einer Betonoberfläche (Größe = 1,5 cm x 7,5 cm x 15 cm) aufgetragen. Die Ergebnisse dieser Untersuchung sind in Tabelle 1 dargestellt.

**Tabelle 1**

Resultate der Antigraffiti Austestung Anwendungsbeispiel 5

| Reinigung Nr.: | Edding 800 Permanent Maker | Acryl-Lack RAL 3000 feuerrot | Genieus Pro Aqua-Lack hochglänzend enzianblau | Ci-Wert |
|---|---|---|---|---|
| 1 | 4,5 | 4,5 | 5 | 93 |
| 2 | 4,0 | 4,5 | 5 | 90 |
| 3 | 4,0 | 4,5 | 5 | 90 |
| 4 | 4,0 | 4,5 | 4,5 | 87 |
| 5 | 4,0 | 4,5 | 4,5 | 87 |
| Reinigung Nr.: | Edding 800 Permanent Maker | Acryl-Lack RAL 3000 feuerrot | Genieus Pro Aqua-Lack hochglänzend enzianblau | Ci-Wert |
| 6 | 4,0 | 4,5 | 4,5 | 87 |
| 7 | 4,0 | 4,5 | 4,5 | 87 |
| 8 | 4,0 | 4,5 | 4,5 | 87 |
| 9 | 3,5 | 4,0 | 4,5 | 80 |
| 10 | 3,5 | 4,0 | 4,5 | 80 |

Nach den Beurteilungskriterien in Absatz 1.7 wurde dieser Test mit einem guten Ergebnis bestanden.

## Anwendunasbeispiel 4

**Tabelle 2**

Resultate der Bleistifthärteprüfung und der Kochfestigkeit ausgewählter Beispiele der transparenten homogenen Beschichtungen auf Glasoberflächen

| Beispiel | Zeit Aushärtung bei RT | Bleistifthärte | Bewertung der Kochfestigkeit |
|---|---|---|---|
| 2 | 3 Tage | 6 H | + |
| 7 | 4 Tage | 6 H | + |
| 13 | 8 Wo. | 6H | + |
| 14 | 8 Wo. | 6H | + |
| 15 | 5 Wo | 6H | + |
| 20 | 5 Wo. | 7H | + |
| 24 | 1 Tag | 3H | + |

## Anwendungsbeispiel 5

Die Produkte aus den Beispielen 12, 18 und 19 wurden nach der Methode in 1.1 auf Glasoberflächen aufgetragen. Die Aushärtung der Beschichtungen erfolgte nach einer Woche. Die Ergebnisse sind in Tabelle 3 zu sehen.

**Tabelle 3**

Resultate der hydro- und oleophoben Eigenschaften der Oberflächen, die aus den Produkten der Beispiele 12, 18 und 19 hergestellt wurden.

| Beispiel | RW $H_2O$ [°] | RW Kaydol [°] | Kochtest 1 h in VE $H_2O$ |
|---|---|---|---|
| 12 | 99 | 55 | + |
| 18 | 91 | 55 | + |

Die Kontaktwinkel zeigen die hervorragenden hydro- und oleophoben Eigenschaften dieser Beschichtungen.
Darüber hinaus weisen die Beschichtungen hervorragende Abperleigenschaften auf.

**Anwendungsbeispiel 6**

Eine geschliffene Edelstahloberfläche wurde mit dem Produkt aus Beispiel 41 halbseitig beschichtet. Dazu wurde die Formulierung aus Beispiel 41 mittels eines Schwammes aufgetragen. Nach einer Vernetzungszeit von 1 Tag bei Raumtemperatur wurde die beschichtete Oberfläche mit der unbeschichteten Edelstahloberfläche verglichen.

Dazu wurden Fingerabdrücke auf der unbeschichteten Oberfläche und der beschichteten Oberfläche aufgetragen. Nach einer Einwirkzeit von 1 Tag wurden die Fingerabdrücke mit einem Papiertuch abgewischt. Auf der unbeschichteten Platte verblieben Fingerabdrücke, während sich auf der beschichteten Seite die Fingerabdrücke mühelos entfernen ließen. Damit ergeben sich als Resultat sehr gute Antifingerprinteigenschaften.

Nach einem einstündigen Kochtest in VE Wasser war die Beschichtung voll funktionsfähig.

**Anwendunasbeispiel 7**

**Tabelle 4**

Beurteilung des Abperleffektes beschichteter Baustoffe, die nach der Methode in Abschnitt 1.7) behandelt wurden.

| Beispiel | Abperleffekt | | |
| --- | --- | --- | --- |
| | Kalksandstein | Beton | Ziegel |
| 7 | 0 | 0 | 0 |
| Blindwerte (Substrat unbehandelt) | 6 | 5 | 6 |

Nach dem Bewertungssystem in Abschnitt 1.8 ergeben sich bei der Beschichtung aus dem Produkt Beispiel 7 bei allen Substraten hervorragende wasserabweisende Eigenschaften.

**Anwendunasbeispiel 8**

Durchführung:

Abmischungen von Dynasylan® SIVO 110 mit dem Produkt aus Beispiel 1 Herstellung der Formulierungen in 20ml Scintillationsflaschen bei RT (21-25 °C) mittels Magnetrührer: 40,0 g des Produkts aus Beispiel 1 wurden mit 60,0 g SIVO 110 gemischt. Die Applikation auf ein mit Ethylacetat gereinigtes Aluminiumprüfblech (Fa. Pausch, Legierung:5005H024) erfolgte ca. 0,5 h nach dem Abmischen. Dazu wurde die Mischung mittels einer $4\mu m$ Rakel aufgetragen, bei RT angetrocknet (21 bis 25 °C) und in einem Heraeus Umlufttrockenschrank 10 min bei 150 °C gehärtet (Trockenschichtdicke $< = 1\ \mu m$).

Als Vergleichsbeispiel wurde ein Aluminiumblech bei identischen Bedingungen mit SIVO 110 beschichtet und gehärtet.

Überprüfung der Kochwasserbeständigkeit: Innerhalb von 24 h nach Applikation wurden die beschichteten Aluminiumprüfbleche 2 h in kochendes Wasser gestellt und anschließend auf Verfärbungen / Ablösungen und Haftung (Gitterschnitt in Anlehnung an DIN EN ISO 2409) kontrolliert.

Ergebnis: Bei einer Trocknungstemperatur von 150 °C (10 min) kann bei der Abmischung mit 40 % aus dem Produkt aus Beispiel 1 eine hervorragende Kochwasserbeständigkeit erreicht werden. Die Beschichtung ist unverändert und zeigt eine gute Haftung: Gitterschnitt 0 (in Anlehnung an DIN EN ISO 2409). Dagegen zeigt das Produkt Dynasylan® SIVO 110 bei einer Härtungstemperatur von 150 °C nach dem Kochen in Wasser eine starke Gelbfärbung und vollständige Delaminierung. Damit mit Dynasylan® SIVO 110 die gleichen Eigenschaften wie mit der Abmischung erhalten werden können, muss die Härtungstemperatur auf 220 °C erhöht werden.

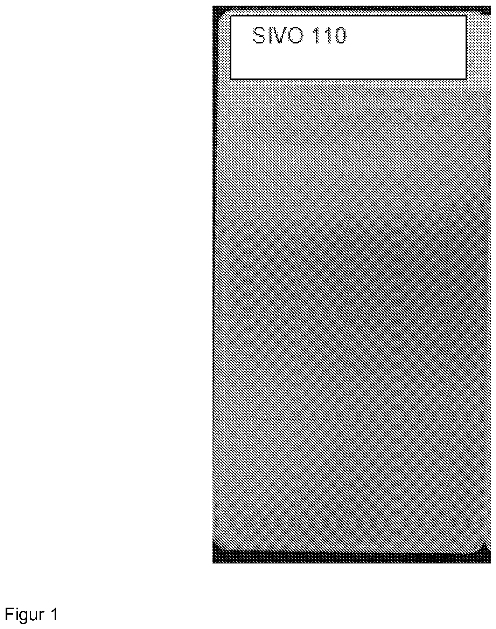

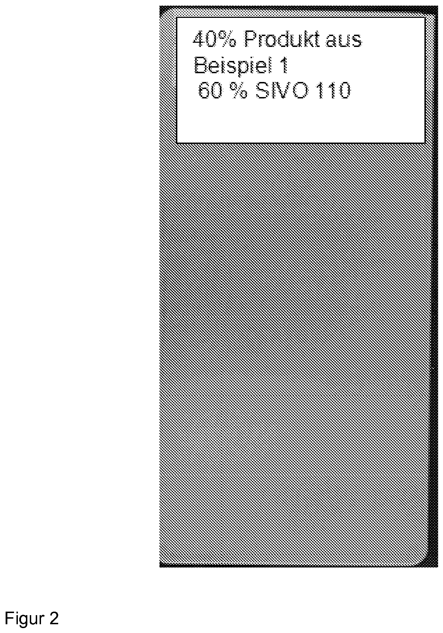

Die in Figur 1 dargestellte Beschichtung auf einem Aluminiumprüfblech aus hydrolysiertem Epoxysilankondensat zeigt nach einem zweistündigen Kochwassertest eine deutliche Gelbfärbung, die sich in der Figur 1 als dunkler Schatten darstellt. Figur 2 zeigt ein entsprechend behandeltes Aluminiumprüfblech mit einer Beschichtung aus bisaminofunktioneller Siliciumverbindung und hydrolysiertem Epoxysilankondensat, wobei der Gehalt der bis-aminofunktionellen Siliciumverbindung 40 Gew.-% und der des Epoxysilankondensats 60 Gew.-% beträgt. Diese Beschichtung bleibt selbst nach einem zweistündigem Kochwassertest farblos - in der Figur 2 ist kein dunkler Schatten zu erkennen - und zeigt weiterhin eine gute Haftung, die sich mit einem Gitterschnitt von 0 dokumentiert.

Die Erfindung wird im Folgenden anhand der in den Figuren dargestellten Ausführungsbeispielen näher erläutert. Es stellen dar:

Figur 1    Beschichtung mit hydrolysiertem Epoxysilankondensat;

Figur 2    Beschichtung aus bis-aminofunktioneller Siliciumverbindung und hydrolysiertem Epoxysilankondensat.

**Patentansprüche**

1.  Zusammensetzung enthaltend wasserlösliche, bis-aminofunktionelle Siliciumverbindungen und Wasser, wobei die Siliciumverbindungen aus Alkoxysilanen abgeleitet sind und vernetzende Strukturelemente aufweisen, die kettenförmige, cyclische, vernetzte und/oder raumvernetzte Strukturen bilden, wobei mindestens eine Struktur in idealisierter Form der allgemeinen Formel I entspricht,

$$(R^2O)[(Y)_2Si(A)Si(Y)_2O]_a[Si(C)(R^5)_y(OR^4)_{1-y}O]_c$$
$$[Si(D)(R^7)_u(OR^6)_{1-u}O]_d[Si(E)(R^8)_v(OR^9)_{1-v}O]_wR^9 \bullet (HX)_e \qquad (I)$$

wobei in den aus Alkoxysilanen abgeleiteten Strukturelementen

- A einem Bis-Aminoalkyl-Rest,
- C einem Alkyl-Rest,
- D einem Epoxy- oder Ether-Rest und
- E einem organofunktionellen Rest entsprechen,
- Y entspricht $OR^1$ oder in vernetzten und/oder raumvernetzten Strukturen unabhängig voneinander $OR^1$ oder $O_{1/2}$,
- wobei $R^1$, $R^2$, $R^4$, $R^6$ und $R^9$ Wasserstoff und $R^5$ einem linearen, verzweigten oder cyclischen Alkyl-Rest mit 1 bis 12 C Atomen und/oder Aryl-Rest, $R^7$ und $R^8$ einem linearen, verzweigten und/oder cyclischen Alkyl-Rest mit 1 bis 4 C-Atomen entsprechen und
- HX eine Säure darstellt, wobei X ein anorganischer oder organischer Säure-Rest ist,
- mit $0 \le x \le 1$, $0 \le y \le 1$, $0 \le u \le 1$, $v = 0$ oder 1, $a \ge 1$, $c \ge 0$, $d \ge 0$, $w \ge 0$, $e \ge 0$ und $(a+c+d+w) \ge 2$,
- wobei die Zusammensetzung frei von organischen Lösemitteln ist und beim Vernetzen keinen Alkohol mehr freisetzt, wobei der Gehalt an organischen Lösemitteln der Zusammensetzung kleiner 5 Gew.-% ist, und
- einen pH-Wert zwischen 1 und 5,4 aufweist,
- wobei A in dem Strukturelement einem Bis-Aminoalkyl-Rest, abgeleitet aus der allgemeinen Formeln II, ent-spricht,

$$(OR^1)_3Si-A-Si(OR^1)_3 \qquad (II)$$

mit A für eine bis-aminofunktionelle Gruppe der Formel III

$$-(CH_2)_i-[NH(CH_2)_f]_gNH[(CH_2)_{f*}NH]_{g*}-(CH_2)_{i*}- \qquad (III),$$

worin i, i*, f, f*, g oder g* gleich oder verschieden sind, mit i und i* = 1 bis 8, f und f* = 1, 2 oder 3, g und g* = 0, 1 oder 2 und $R^1$ einem linearen, cyclischen und/oder verzweigten Alkyl-Rest mit 1 bis 4 C-Atomen entsprechen, und
- wobei C in dem Strukturelement einem Alkyl-Rest, abgeleitet aus der allgemeinen Formel VI, entspricht

$$C-Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entsprechen, und
- wobei D in dem Strukturelement einem Epoxy- oder Ether-Rest, abgeleitet aus der allgemeinen Formel VII, entspricht

$$D-Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl-Rest oder einem Polyalkylglykol-3-propyl-Rest, $R^7$ einem linearen, verzweigten und/oder cyclischen Alkyl-Rest mit 1 bis 4 C-Atomen und $R^6$ einem linearen, verzweigten und/oder cyclischen Alkyl-Rest mit 1 bis 4 C-Atomen entsprechen, und
- wobei E in dem Strukturelement einem organofunktionellen Rest, abgeleitet aus der allgemeinen Formel VIII, entspricht

$$E-Si(R^8)_v(OR^9)_{3-v} \qquad (VIII)$$

mit $v = 0$ oder 1, wobei $R^8$ einem linearen, verzweigten oder cyclischen Alkyl-Rest mit 1 bis 4 C-Atomen,
- E einem Rest $R^{8*}-Y_m-(CH_2)_s-$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2-$, O-, Aryl- oder S-Rest entspricht und $m = 0$ oder 1 und $s = 0$ oder 2 ist und/oder
- E einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und
- $R^9$ einem linearen, verzweigten und/oder cyclischen Alkyl-Rest mit 1 bis 4 C-Atomen entsprechen.

2. Zusammensetzung nach Anspruch 1,
**dadurch gekennzeichnet,**
**dass** sie einen pH-Wert zwischen 3,0 und 5,4 aufweist, insbesondere einen pH-Wert von 3,5 bis 5,4.

3. Zusammensetzung nach Anspruch 1 oder 2,
**dadurch gekennzeichnet,**
**dass** für das C, einen Alkyl-Rest, enthaltende Strukturelement $c \geq 1$ ist.

4. Zusammensetzung nach einem der Ansprüche 1 bis 3,
**dadurch gekennzeichnet,**
**dass** die Säure Ameisensäure, Essigsäure, ein saures Kieselsol, Eisessig, Salpetersäure, Schwefelsäure und/oder Phosphorsäure ist.

5. Verfahren zur Herstellung einer Zusammensetzung enthaltend wasserlösliche, bis-aminofunktionelle und alkoxygruppenfreie Siliciumverbindungen, Wasser und eine Säure,
**dadurch gekennzeichnet, dass**

a) Wasser, eine Säure, gegebenenfalls Alkohol und gegebenenfalls ein Katalysator vorgelegt werden und

- mindestens ein Bis-Aminoalkoxysilan der Formel II

$$(OR^1)_3Si-A-Si(OR^1)_3 \qquad (II)$$

mit A für eine bis-aminofunktionelle Gruppe der Formel III

$$-(CH_2)_i-[NH(CH_2)_f]_gNH[(CH_2)_{f*}NH]_{g*}-(CH_2)_{i*}- \qquad (III),$$

worin i, i*, f, f*, g oder g* gleich oder verschieden sind, mit i und/oder i* = 1 bis 8, f und/oder f* = 1, 2 oder 3, g und/oder g* = 0, 1 oder 2 und $R^1$ einem linearen, cyclischen und/oder verzweigten Alkyl-Rest mit 1 bis 4 C-Atomen entspricht und/oder dessen Kondensationsprodukte und gegebenenfalls
- mindestens ein Alkylalkoxysilan der allgemeinen Formel VI

$$C-Si(R^5)_y(OR^4)_{3-y} \qquad (VI)$$

mit $y = 0$ oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht und/oder dessen Kondensationsprodukte, und gegebenenfalls
- mindestens ein Epoxy- oder Ether-Alkoxysilan der allgemeinen Formel VII

$$D-Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukte, und gegebenenfalls
- mindestens ein organofunktionelles Alkoxysilan der Formel VIII

$$E\text{-}Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8*}\text{-}Y_m\text{-}(CH_2)_s\text{-}$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2\text{-}$, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen und/oder dessen Kondensationsprodukte,
- hydrolysiert werden, und der Alkohol entfernt wird, wobei der pH-Wert der Zusammensetzung nach dem Entfernen des Alkohols zwischen 1,0 und 5,4 liegt, oder

b) eine wässrige Lösung mindestens eines wasserlöslichen Silans der allgemeinen Formel II, wie in Anspruch 5 definiert, und optional der Formel VII, wie in Anspruch 5 definiert, oder dessen wasserlösliche Kondensationsprodukte oder die wasserlöslichen Hydrolyseprodukte eines Silans der allgemeinen Formel VI, wie in Anspruch 5 definiert, vorgelegt wird,

- und hydrolysiert wird und der Alkohol entfernt wird, wobei der pH-Wert der Zusammensetzung nach dem Entfernen des Alkohols zwischen 1,0 und 5,4 liegt.

6. Verfahren zur Herstellung einer Zusammensetzung enthaltend wasserlösliche, bis-aminofunktionelle und alkoxygruppenfreie Siliciumverbindungen, Wasser und eine Säure,
**dadurch gekennzeichnet,**
**dass** ein organisches Lösungsmittel, Wasser, eine Säure und/oder gegebenenfalls ein Katalysator vorgelegt werden und

- mindestens ein Bis-Aminoalkoxysilan der Formel II

$$(OR^1)_3Si\text{-}A\text{-}Si(OR^1)_3 \qquad (II)$$

mit A für eine bis-aminofunktionelle Gruppe der Formel III

$$\text{-}(CH_2)_i\text{-}[NH(CH_2)_f]_g NH[(CH_2)_{f*}NH]_{g*}\text{-}(CH_2)_{i*}\text{-} \qquad (III),$$

worin i, i*, f, f*, g oder g* gleich oder verschieden sind, mit i und i* = 1 bis 8, f und f* = 1, 2 oder 3, g und g* = 0, 1 oder 2 und $R^1$ einem linearen, cyclischen und/oder verzweigten Alkyl-Rest mit 1 bis 4 C-Atomen entspricht und/oder dessen Kondensationsprodukte und gegebenenfalls
- mindestens ein Alkylalkoxysilan der allgemeinen Formel VI

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht und/oder dessen Kondensationsprodukte, und gegebenenfalls
- mindestens ein Epoxy- oder Ether-Alkoxysilan der allgemeinen Formel VII

$$D\text{-}Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukte, und gegebenenfalls

- mindestens ein organofunktionelles Alkoxysilan der Formel VIII

$$E\text{-}Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8*}\text{-}Y_m\text{-}(CH_2)_s$-, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl- oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen und/oder dessen Kondensationsprodukte,

- hydrolysiert werden und der Hydrolysealkohol und das Lösemittel entfernt werden, und
- der pH-Wert der Zusammensetzung nach dem Entfernen des Hydrolysealkohols und des Lösemittels zwischen 1,0 und 5,4 liegt.

7. Verfahren nach Anspruch 6,
**dadurch gekennzeichnet,**
**dass** das Lösemittel mindestens einen Alkohol, ausgewählt aus der Gruppe Methanol, Ethanol, Propanol und/oder deren Mischungen, umfasst.

8. Verfahren nach einem der Ansprüche 5 bis 7,
**dadurch gekennzeichnet,**
**dass** die Silane der allgemeinen Formel II, IV, VI, VII und/oder VIII, deren Kondensationsprodukte und/oder Mischungen dieser in wässriger und/oder alkoholischer Lösung zugegeben werden, insbesondere dass die Silane der allgemeinen Formel II, IV, VI, VII oder VIII und/oder deren Kondensationsprodukte nacheinander oder als Mischung zugegeben werden.

9. Verfahren nach einem der Ansprüche 6 bis 8,
**dadurch gekennzeichnet,**
**dass** ein Alkohol vorgelegt wird, mindestens ein Bis-Aminoalkoxysilan der allgemeinen Formel II und/oder dessen Kondensationsprodukt zugegeben werden und durch Zugabe von Wasser und gegebenenfalls einer Säure hydrolysiert und gegebenenfalls kondensiert werden, insbesondere werden anschließend mindestens ein Alkylalkoxysilan der Formel VI und gegebenenfalls mindestens ein Aminoalkylalkoxysilan der Formel IV, gegebenenfalls mindestens ein Epoxy- oder Ether-Alkoxysilan der allgemeinen Formel VII und gegebenenfalls mindestens ein organofunktionelles Alkoxysilan der Formel VIII und/oder deren Kondensationsprodukte nacheinander oder als Mischung zugegeben.

10. Verfahren zur Herstellung einer Zusammensetzung enthaltend wasserlösliche, bis-aminofunktionelle und alkoxygruppenfreie Siliciumverbindungen, Wasser und eine Säure,
**dadurch gekennzeichnet, dass**

- mindestens ein Epoxy- oder Ether-Alkoxysilan der allgemeinen Formel VII

$$D\text{-}Si(R^7)_u(OR^6)_{3-u} \qquad (VII)$$

mit u = 0 oder 1, wobei D einem 3-Glycidoxyalkyl-, 3-Glycidoxypropyl-, Epoxyalkyl-, Epoxycycloalkyl-, Polyalkylglykolalkyl- oder einem Polyalkylglykol-3-propyl-Rest, $R^7$ einem linearen, verzweigten oder cyclischen Alkyl-Rest mit 1 bis 4 C-Atomen und $R^6$ einem linearen, verzweigten und/oder cyclischen Alkyl-Rest mit 1 bis 4 C-Atomen entspricht und/oder dessen Kondensationsprodukte und/oder

- mindestens ein Alkylalkoxysilan der allgemeinen Formel VI

$$C\text{-}Si(R^5)_y(OR^4)_{3-y} \qquad (VI)$$

mit y = 0 oder 1, wobei C einem linearen, verzweigten oder cyclischen Alkyl-Rest mit 1 bis 20 C-Atomen, $R^5$ einem linearen, verzweigten oder cyclischen Alkyl-Rest mit 1 bis 12 C Atomen und/oder Aryl-Rest, $R^4$ einem linearen, verzweigten und/oder cyclischen Alkyl-Rest mit 1 bis 4 C-Atomen entspricht und/oder dessen Kondensationsprodukte und/oder

- mindestens ein organofunktionelles Alkoxysilan der Formel VIII

$$E\text{-}Si(R^8)_v(OR^9)_{3-v} \qquad (VIII)$$

mit v = 0 oder 1, wobei $R^8$ einem linearen, verzweigten oder cyclischen Alkyl-Rest mit 1 bis 4 C-Atomen, E einem Rest $R^{8*}\text{-}Y_m\text{-}(CH_2)_s\text{-}$, wobei $R^{8*}$ einem mono-, oligo- oder perfluorierten Alkyl-Rest mit 1 bis 9 C-Atomen oder einem mono-, oligo- oder perfluorierten Aryl-Rest, wobei ferner Y einem $CH_2$-, O-, Aryl-, oder S-Rest entspricht und m = 0 oder 1 und s = 0 oder 2 sind, oder einem Vinyl-, Allyl-, Isopropenyl-Rest, Mercaptoalkyl-Rest, Sulfanalkyl-Rest, Ureidoalkyl-Rest, einem Acryloxyalkyl-Rest oder einem linearen, verzweigten oder cyclischen Alkoxyrest mit 1 bis 4 C-Atomen und $R^9$ einem linearen, verzweigten und/oder cyclischen Alkyl-Rest mit 1 bis 4 C-Atomen entsprechen und/oder dessen Kondensationsprodukte vorgelegt werden

- und in Gegenwart von Wasser und in Gegenwart einer Säure und optional eines Katalysators, und gegebenenfalls eines Lösungsmittels zumindest teilweise hydrolysiert werden und
- anschließend in einem zweiten Hydrolyseschritt
- in Gegenwart weiteren Wassers und gegebenenfalls weiterer Säure,
- mindestens ein Bis-Aminoalkoxysilan der Formel II

$$(OR^1)_3Si\text{-}A\text{-}Si(OR^1)_3 \qquad (II)$$

mit A für eine bis-aminofunktionelle Gruppe der Formel III

$$-(CH_2)_i\text{-}[NH(CH_2)_f]_gNH[(CH_2)_{f*}NH]_{g*}\text{-}(CH_2)_{i*}\text{-} \qquad (III),$$

worin i, i*, f, f*, g oder g* gleich oder verschieden sind, mit i und i* = 1 bis 8, f und f* = 1, 2 oder 3, g und g* = 0, 1 oder 2 und $R^1$ einem linearen, cyclischen und/oder verzweigten Alkyl-Rest mit 1 bis 4 C-Atomen entspricht und/oder dessen Kondensationsprodukte,
- hydrolysiert werden und der Alkohol entfernt wird und
- der pH-Wert der Zusammensetzung nach dem Entfernen des Alkohols zwischen 1,0 und 5,4 liegt.

11. Verfahren nach einem der Ansprüche 5 bis 10,
**dadurch gekennzeichnet,**
**dass** anorganische Füllstoffe zugesetzt werden.

12. Zusammensetzung erhältlich nach einem der Ansprüche 5 bis 11.

13. Verwendung einer Zusammensetzung nach Anspruch 1 oder 12 in Mischungen mit Silan basierten Zusammensetzungen, wobei die Mischung optional eine Zusammensetzung, umfassend bis-aminofunktionelle Siliciumverbindungen zusammen mit einer Silan basierten Zusammensetzung auf Basis von alkyl-, alkenyl-, aryl-, epoxy-, dihydroxyalkyl-, aminoalkyl-, polyalkylglykolalkyl-, halogenalkyl-, mercaptoalkyl-, sulfanalkyl-, ureidoalkyl-, acryloxyalkyl-funktionellen und/oder tetraalkoxy-funktionellen Silanen und/oder deren Mischungen, enthält.

14. Verwendung nach Anspruch 13 zur Modifizierung, zur Behandlung von Substratoberflächen und/oder zum Aufbau einer Barriereschicht auf Substratoberflächen, zur Hydrophobierung, als Korrosionsschutz, zur Gesteinsverfestigung und/oder Oleophobierung von Substratoberflächen, zur Hydrophobierung von Metall, wie Edelstahl, Aluminium, Stahl, Titan, Glas, Kunststoff, Polymeren, mineralischen Oberflächen, Beton, Ziegelsteinen, Mörtel, Estrich, Sandstein, Naturfasern, Papier, Holz, zur Primerung von Glasoberflächen, Metalloberflächen, mineralischen Oberflächen, Beton, Mörtel, Estrich, Sandstein oder Naturfasern, Papier, Holz, als Korrosionsschutz von Metallen, Beton, Mörtel und/oder Ziegelsteinen und/oder als Zusatz in wässrigen Lack- oder Harz-Formulierungen oder als Anti-Fingerprint Beschichtung, als Korrosionsschutz von unbehandelten oder vorbehandelten Metallen bzw. Metalloberflächen, insbesondere von phosphatierten, chromatierten, chromitierten oder verzinkten Metalloberflächen sowie verzinkten Metalloberflächen, die ihrerseits phosphatiert, chromatiert oder chromitiert sind.

15. Verwendung einer Zusammensetzung nach Anspruch 1 oder 12 zur Modifizierung, zur Behandlung von Substratoberflächen und/oder zum Aufbau einer Barriereschicht auf Substratoberflächen, zur Hydrophobierung, als Korrosionsschutz, zur Gesteinsverfestigung und/oder Oleophobierung von Substratoberflächen, zur Hydrophobierung von Metall, wie Edelstahl, Aluminium, Stahl, Titan, Glas, Kunststoff, Polymeren, mineralischen Oberflächen, Beton, Ziegelsteinen, Mörtel, Estrich, Sandstein, Naturfasern, Papier, Holz, zur Primerung von Glasoberflächen, Metalloberflächen, mineralischen Oberflächen, Beton, Mörtel, Estrich, Sandstein oder Naturfasern, Papier, Holz, als Korrosionsschutz von Metallen, Beton, Mörtel und/oder Ziegelsteinen und/oder als Zusatz in wässrigen Lack- oder Harz-Formulierungen oder als Anti-Fingerprint Beschichtung, als Korrosionsschutz von unbehandelten oder vorbehandelten Metallen bzw. Metalloberflächen, insbesondere von phosphatierten, chromatierten, chromitierten oder verzinkten Metalloberflächen sowie verzinkten Metalloberflächen, die ihrerseits phosphatiert, chromatiert oder chromitiert sind.

**Claims**

1. Composition containing water-soluble, bisaminofunctional silicon compounds and water, the silicon compounds being derived from alkoxysilanes and having crosslinking structural elements which form chain-like, cyclic, crosslinked and/or three-dimensionally crosslinked structures, at least one structure in idealized form corresponding to the general formula I,

$$(R^2O)[(Y)_2Si(A)Si(Y)_2O]_a[S_1(C)(R^5)_y(OR^4)_{1-y}O]_c$$
$$[Si(D)(R^7)_u(OR^6)_{1-u}O]_d[Si(E)(R^8)_v(OR^9)_{1-v}O]_wR^9\bullet(HX)_e \qquad (I),$$

in the structural elements derived from alkoxysilanes,

    - A corresponding to a bisaminoalkyl radical,
    - C corresponding to an alkyl radical,
    - D corresponding to an epoxy or ether radical and
    - E corresponding to an organofunctional radical,
    - Y corresponding to $OR^1$ or, in crosslinked and/or three-dimensionally crosslinked structures, independently of one another, $OR^1$ or $O_{1/2}$,
    - $R^1$, $R^2$, $R^4$, $R^6$ and $R^9$ corresponding to hydrogen and $R^5$ corresponding to a linear, branched or cyclic alkyl radical having 1 to 12 C atoms and/or aryl radical, $R^7$ and $R^8$ corresponding to a linear, branched and/or cyclic alkyl radical having 1 to 4 C atoms, and
    - HX being an acid, in which X is an inorganic or organic acid radical,
    - with $0 \leq x \leq 1$, $0 \leq y \leq 1$, $0 \leq u \leq 1$, $v = 0$ or $1$, $a \geq 1$, $c \geq 0$, $d \geq 0$, $w \geq 0$, $e \geq 0$ and $(a+c+d+w) \geq 2$,
    - the composition being free of organic solvents and releasing no more alcohol on crosslinking, the organic solvent content of the composition being less than 5% by weight, and,
    - having a pH of from 1 to 5.4,
    - A in the structural element corresponding to a bisaminoalkyl radical derived from the general formula II

$$(OR^1)_3Si-A-Si(OR^1)_3 \qquad (II)$$

where A is a bis-aminofunctional group of the formula III

$$-(CH_2)_i-[NH(CH_2)_f]_gNH[(CH_2)_{f*}NH]_{g*}-(CH_2)_{i*}- \qquad (III),$$

in which i, i*, f, f*, g or g* are identical or different, with i and i* = from 1 to 8, f and f* = 1, 2 or 3, g and g* = 0, 1 or 2 and $R^1$ corresponds to a linear, cyclic and/or branched alkyl radical having 1 to 4 C atoms, and
    - C in the structural element corresponding to an alkyl radical derived from the general formula VI

$$C-Si(R^5)_y(OR^4)_{3-y} \qquad (VI)$$

where y = 0 or 1, C corresponding to a linear, branched or cyclic alkyl radical having 1 to 20 C atoms, $R^5$ corresponding to a linear, branched or cyclic alkyl radical having 1 to 12 C atoms and/or aryl radical, $R^4$ corresponding to a linear, branched and/or cyclic alkyl radical having 1 to 4 C atoms, and
    - D in the structural element corresponding to an epoxy or ether radical derived from the general formula VII

$$D-Si(R^7)_u(OR^6)_{3-u} \qquad (VII)$$

where u = 0 or 1, D corresponding to a 3-glycidyloxyalkyl, 3-glycidyloxypropyl, epoxyalkyl, epoxycycloalkyl or polyalkylglycolalkyl radical or to a polyalkylglycol-3-propyl radical, $R^7$ corresponding to a linear, branched and/or cyclic alkyl radical having 1 to 4 C atoms and $R^6$ corresponding to a linear, branched and/or cyclic alkyl radical having 1 to 4 C atoms, and

- E in the structural element corresponding to an organofunctional radical derived from the general formula VIII

$$E\text{-}Si(R^8)_v(OR^9)_{3-v} \qquad (VIII)$$

where v = 0 or 1, $R^8$ corresponding to a linear, branched or cyclic alkyl radical having 1 to 4 C atoms,
- E corresponding to a radical $R^{8*}\text{-}Y_m\text{-}(CH_2)_s\text{-}$, $R^{8*}$ corresponding to a mono-, oligo- or perfluorinated alkyl radical having 1 to 9 C atoms or to a mono-, oligo- or perfluorinated aryl radical, furthermore Y corresponding to a $CH_2$, 0, aryl or S radical and m being 0 or 1 and s being 0 or 2 and/or
- E corresponding to a vinyl, allyl or isopropenyl radical, mercaptoalkyl radical, sulfanealkyl radical, ureidoalkyl radical, to an acryloyloxyalkyl radical or to a linear, branched or cyclic alkoxy radical having 1 to 4 C atoms and
- $R^9$ corresponding to a linear, branched and/or cyclic alkyl radical having 1 to 4 C atoms.

2. Composition according to Claim 1,
   **characterized in that**
   it has a pH of from 3.0 to 5.4, in particular a pH of from 3.5 to 5.4.

3. Composition according to Claim 1 or 2,
   **characterized in that**,
   for the structural element containing C, an alkyl radical, c is $\geq$ 1.

4. Composition according to any of Claims 1 to 3,
   **characterized in that**
   the acid is formic acid, acetic acid, an acidic silica sol, glacial acetic acid, nitric acid, sulfuric acid and/or phosphoric acid.

5. Process for the preparation of a composition containing water-soluble, bis-aminofunctional silicon compounds free of alkoxy groups, and water and an acid,
   **characterized in that**

   a) water, an acid, optionally alcohol and optionally a catalyst are initially introduced and

   - at least one bisaminoalkoxysilane of the formula II

   $$(OR^1)_3Si\text{-}A\text{-}Si(OR^1)_3 \qquad (II)$$

   where A is a bis-aminofunctional group of the formula III

   $$\text{-}(CH_2)_i\text{-}[NH(CH_2)_f]_gNH[(CH_2)_{f*}NH]_{g*}\text{-}(CH_2)_{i*}\text{-} \qquad (III),$$

   in which i, i*, f, f*, g or g* are identical or different, with i and/or i* = from 1 to 8, f and/or f* = 1, 2 or 3, g and/or g* = 0, 1 or 2 and $R^1$ corresponds to a linear, cyclic and/or branched alkyl radical having 1 to 4 C atoms, and/or the condensates thereof, and optionally
   - at least one alkylalkoxysilane of the general formula VI

   $$C\text{-}Si(R^5)_y(OR^4)_{3-y} \qquad (VI)$$

   where y = 0 or 1, C corresponding to a linear, branched or cyclic alkyl radical having 1 to 20 C atoms, $R^5$ corresponding to a linear, branched or cyclic alkyl radical having 1 to 12 C atoms and/or aryl radical, $R^4$ corresponding to a linear, branched and/or cyclic alkyl radical having 1 to 4 C atoms, and/or the condensates thereof, and optionally
   - at least one epoxy- or ether-alkoxysilane of the general formula VII

   $$D\text{-}Si(R^7)_u(OR^6)_{3-u} \qquad (VII)$$

   where u = 0 or 1, D corresponding to a 3-glycidyloxyalkyl, 3-glycidyloxypropyl, epoxyalkyl, epoxycycloalkyl or polyalkylglycolalkyl radical or to a polyalkylglycol-3-propyl radical, $R^7$ corresponding to a linear, branched or cyclic alkyl radical having 1 to 4 C atoms and $R^6$ corresponding to a linear, branched and/or cyclic alkyl radical having 1 to 4 C atoms, and/or the condensates thereof, and optionally

- at least one organofunctional alkoxysilane of the formula VIII

$$E\text{-}Si(R^8)_v(OR^9)_{3\text{-}v} \qquad (VIII)$$

where v = 0 or 1, $R^8$ corresponding to a linear, branched or cyclic alkyl radical having 1 to 4 C atoms, E corresponding to a radical $R^{8*}\text{-}Y_m\text{-}(CH_2)_s\text{-}$, $R^{8*}$ corresponding to a mono-, oligo- or perfluorinated alkyl radical having 1 to 9 C atoms or to a mono-, oligo- or perfluorinated aryl radical, furthermore Y corresponding to a $CH_2$, 0, aryl or S radical and m being 0 or 1 and s being 0 or 2, or to a vinyl, allyl or isopropenyl radical, mercaptoalkyl radical, sulfanealkyl radical, ureidoalkyl radical, to an acryloyloxyalkyl radical or to a linear, branched or cyclic alkoxy radical having 1 to 4 C atoms and $R^9$ corresponding to a linear, branched and/or cyclic alkyl radical having 1 to 4 C atoms, and/or the condensates thereof,
- are hydrolyzed and the alcohol is removed,
the pH of the composition after removal of the alcohol being from 1.0 to 5.4, or

b) an aqueous solution of at least one water-soluble silane of the general formulae II, as defined in Claim 5, and optionally of the formula VII, as defined in Claim 5, or the water-soluble condensates thereof or the water-soluble hydrolysis products of a silane of the general formula VI, as defined in Claim 5, is initially introduced,

- and is hydrolyzed and the alcohol is removed,
the pH of the composition after removal of the alcohol being from 1.0 to 5.4.

6. Process for the preparation of a composition containing water-soluble, bis-aminofunctional silicon compounds free of alkoxy groups, and water and an acid,
**characterized in that**
an organic solvent, water, an acid and/or optionally a catalyst are initially introduced and

- at least one bisaminoalkoxysilane of the formula II

$$(OR^1)_3Si\text{-}A\text{-}Si(OR^1)_3 \qquad (II)$$

where A is a bis-aminofunctional group of the formula III

$$\text{-}(CH_2)_i\text{-}[NH(CH_2)_f]_gNH[(CH_2)_{f*}NH]_{g*}\text{-}(CH_2)_{i*}\text{-} \qquad (III),$$

in which i, i*, f, f*, g or g* are identical or different, with i and i* = from 1 to 8, f and f* = 1, 2 or 3, g and g* = 0, 1 or 2 and $R^1$ corresponds to a linear, cyclic and/or branched alkyl radical having 1 to 4 C atoms, and/or the condensates thereof, and optionally
- at least one alkylalkoxysilane of the general formula VI

$$C\text{-}Si(R^5)_y(OR^4)_{3\text{-}y} \qquad (VI)$$

where y = 0 or 1, C corresponding to a linear, branched or cyclic alkyl radical having 1 to 20 C atoms, $R^5$ corresponding to a linear, branched or cyclic alkyl radical having 1 to 12 C atoms and/or aryl radical, $R^4$ corresponding to a linear, branched and/or cyclic alkyl radical having 1 to 4 C atoms, and/or the condensates thereof, and optionally
- at least one epoxy- or ether-alkoxysilane of the general formula VII

$$D\text{-}Si(R^7)_u(OR^6)_{3\text{-}u} \qquad (VII)$$

where u = 0 or 1, D corresponding to a 3-glycidyloxyalkyl, 3-glycidyloxypropyl, epoxyalkyl, epoxycycloalkyl or polyalkylglycolalkyl radical or to a polyalkylglycol-3-propyl radical, $R^7$ corresponding to a linear, branched or cyclic alkyl radical having 1 to 4 C atoms and $R^6$ corresponding to a linear, branched and/or cyclic alkyl radical having 1 to 4 C atoms, and/or the condensates thereof, and optionally
- at least one organofunctional alkoxysilane of the formula VIII

$$E\text{-}Si(R^8)_v(OR^9)_{3\text{-}v} \qquad (VIII)$$

where v = 0 or 1, $R^8$ corresponding to a linear, branched or cyclic alkyl radical having 1 to 4 C atoms, E corresponding to a radical $R^{8*}\text{-}Y_m\text{-}(CH_2)_s\text{-}$, $R^{8*}$ corresponding to a mono-, oligo- or perfluorinated alkyl radical having 1 to 9 C atoms or to a mono-, oligo- or perfluorinated aryl radical, furthermore Y corresponding to a $CH_2$, 0, aryl or S radical and m being 0 or 1 and s being 0 or 2, or to a vinyl, allyl or isopropenyl radical, mercaptoalkyl radical, sulfanealkyl radical, ureidoalkyl radical, to an acryloyloxyalkyl radical or to a linear, branched or cyclic alkoxy radical having 1 to 4 C atoms and $R^9$ corresponding to a linear, branched and/or cyclic alkyl radical having 1 to 4 C atoms, and/or the condensates thereof,
- are hydrolyzed and the hydrolysis alcohol and the solvent are removed, and
- the pH of the composition after removal of the hydrolysis alcohol and solvent is from 1.0 to 5.4.

7. Process according to Claim 6,
**characterized in that**
the solvent comprises at least one alcohol selected from the group consisting of methanol, ethanol, propanol and/or mixtures thereof.

8. Process according to any of Claims 5 to 7,
**characterized in that**
the silanes of the general formulae II, IV, VI, VII and/or VIII, the condensates thereof and/or mixtures of these are added in aqueous and/or alcoholic solution, in particular **in that** the silanes of the general formula II, IV, VI, VII or VIII and/or the condensates thereof are added in succession or as a mixture.

9. Process according to any of Claims 6 to 8,
**characterized in that**
an alcohol is initially introduced and at least one bisaminoalkoxysilane of the general formula II and/or the condensate thereof are added and are hydrolyzed by addition of water and optionally an acid and are optionally condensed, in particular at least one alkylalkoxysilane of the formula VI and optionally at least one aminoalkylalkoxysilane of the formula IV, optionally at least one epoxy- or ether-alkoxysilane of the general formula VII and optionally at least one organofunctional alkoxysilane of the formula VIII and/or the condensates thereof are then added in succession or as a mixture.

10. Process for the preparation of a composition containing water-soluble, bis-aminofunctional silicon compounds free of alkoxy groups, and water and an acid,
**characterized in that**

- at least one epoxy- or ether-alkoxysilane of the general formula VII

$$D\text{-}Si(R^7)_u(OR^6)_{3-u} \qquad (VII)$$

where u = 0 or 1, D corresponding to a 3-glycidyloxyalkyl, 3-glycidyloxypropyl, epoxyalkyl, epoxycycloalkyl or polyalkylglycolalkyl radical or to a polyalkylglycol-3-propyl radical, $R^7$ corresponding to a linear, branched or cyclic alkyl radical having 1 to 4 C atoms and $R^6$ corresponding to a linear, branched and/or cyclic alkyl radical having 1 to 4 C atoms, and/or the condensates thereof, and/or
- at least one alkylalkoxysilane of the general formula VI

$$C\text{-}Si(R^5)_y(OR^4)_{3-y} \qquad (VI)$$

where y = 0 or 1, C corresponding to a linear, branched or cyclic alkyl radical having 1 to 20 C atoms, $R^5$ corresponding to a linear, branched or cyclic alkyl radical having 1 to 12 C atoms and/or aryl radical, $R^4$ corresponding to a linear, branched and/or cyclic alkyl radical having 1 to 4 C atoms, and/or the condensates thereof, and/or
- at least one organofunctional alkoxysilane of the formula VIII

$$E\text{-}Si(R^8)_v(OR^9)_{3-v} \qquad (VIII)$$

where v = 0 or 1, $R^8$ corresponding to a linear, branched or cyclic alkyl radical having 1 to 4 C atoms, E corresponding to a radical $R^{8*}\text{-}Y_m\text{-}(CH_2)_s\text{-}$, $R^{8*}$ corresponding to a mono-, oligo- or perfluorinated alkyl radical having 1 to 9 C atoms or to a mono-, oligo- or perfluorinated aryl radical, furthermore Y corresponding to a $CH_2$, 0, aryl or S radical and m being 0 or 1 and s being 0 or 2, or to a vinyl, allyl or isopropenyl radical, mercaptoalkyl radical, sulfanealkyl radical, ureidoalkyl radical, to an acryloyloxyalkyl radical or to a linear, branched or cyclic alkoxy radical having 1 to 4 C atoms and $R^9$ corresponding to a linear, branched and/or cyclic alkyl radical having 1 to 4 C atoms, and/or the condensates thereof, are initially introduced

- and are at least partly hydrolyzed in the presence of water and in the presence of an acid and optionally of a catalyst, and optionally of a solvent and
- then, in a second hydrolysis step,
- in the presence of further water and optionally of further acid,
- at least one bisaminoalkoxysilane of the formula II

$$(OR^1)_3Si\text{-}A\text{-}Si(OR^1)_3 \qquad (II)$$

where A is a bis-aminofunctional group of the formula III

$$-(CH_2)_i\text{-}[NH(CH_2)_f]_g NH[(CH_2)_{f*}NH]_{g*}\text{-}(CH_2)_{i*}\text{-} \qquad (III),$$

in which i, i\*, f, f\*, g or g\* are identical or different, with i and i\* = from 1 to 8, f and f\* = 1, 2 or 3, g and g\* = 0, 1 or 2 and $R^1$ corresponds to a linear, cyclic and/or branched alkyl radical having 1 to 4 C atoms, and/or the condensates thereof,

- are hydrolyzed and the alcohol is removed, and
- the pH of the composition after removal of the alcohol is from 1.0 to 5.4.

11. Process according to any of Claims 5 to 10,
**characterized in that**
inorganic fillers are added.

12. Composition obtainable according to any of Claims 5 to 11.

13. Use of a composition according to Claim 1 or 12 in mixtures with silane-based compositions, the mixture optionally containing a composition comprising bis-aminofunctional silicon compounds together with a silane-based composition based on alkyl-, alkenyl-, aryl-, epoxy-, dihydroxyalkyl-, aminoalkyl-, polyalkylglycolalkyl-, haloalkyl-, mercaptoalkyl-, sulfanealkyl-, ureidoalkyl- or acryloyloxyalkyl-functional and/or tetraalkoxy-functional silanes and/or mixtures thereof.

14. Use according to Claim 13 for modifying or for treating substrate surfaces and/or for building up a barrier layer on substrate surfaces, for hydrophobization, as corrosion protection, for rock consolidation and/or for oleophobization of substrate surfaces, for the hydrophobization of metal, such as stainless steel, aluminum, steel or titanium, glass, plastic, polymers, mineral surfaces, concrete, bricks, mortar, screed, sandstone, natural fibers, paper, wood, for the priming of glass surfaces, metal surfaces, mineral surfaces, concrete, mortar, screed, sandstone or natural fibers, paper, wood, as corrosion protection for metals, concrete, mortar and/or bricks and/or as an additive in aqueous coating or resin formulations or as an anti-fingerprint coating, as corrosion protection of untreated or pretreated metals or metal surfaces, in particular of phosphated, chromatized, chromitized or galvanized metal surfaces and galvanized metal surfaces which in turn are phosphated, chromatized or chromitized.

15. Use of a composition according to Claim 1 or 12 for modifying or for treating substrate surfaces and/or for building up a barrier layer on substrate surfaces, for hydrophobization, as corrosion protection, for rock consolidation and/or for oleophobization of substrate surfaces, for the hydrophobization of metal, such as stainless steel, aluminum, steel or titanium, glass, plastic, polymers, mineral surfaces, concrete, bricks, mortar, screed, sandstone, natural fibers, paper, wood, for the priming of glass surfaces, metal surfaces, mineral surfaces, concrete, mortar, screed, sandstone or natural fibers, paper, wood, as corrosion protection for metals, concrete, mortar and/or bricks and/or as an additive in aqueous coating or resin formulations or as an anti-fingerprint coating, as corrosion protection of untreated or pretreated metals or metal surfaces, in particular of phosphated, chromatized, chromitized or galvanized metal surfaces and galvanized metal surfaces which in turn are phosphated, chromatized or chromitized.

**Revendications**

1. Composition contenant des composés de silicium bis-amino-fonctionnels solubles dans l'eau et de l'eau, les composés de silicium étant dérivés d'alcoxysilanes et comprenant des éléments structuraux réticulants qui forment des structures en forme de chaînes, cycliques, réticulées et/ou réticulées dans l'espace, au moins une structure correspondant sous forme idéalisée à la formule générale I

$$(R_2O)[(Y)_2Si(A)Si(Y)_2O]_a[Si(C)(R^5)_y(OR^4)_{1-y}O]_c$$
$$[Si(D)(R^7)_u(OR^6)_{1-u}O]_d[Si(E)(R^8)_v(OR^9)_{1-v}O]_wR^9 \bullet (HX)_e \qquad (I)$$

dans les éléments structuraux dérivés d'alcoxysilanes,

- les A correspondant à un radical bis-aminoalkyle,
- les C correspondant à un radical alkyle,
- les D correspondant à un radical époxy ou éther, et
- les E correspondant à un radical organofonctionnel,
- les Y correspondant à $OR^1$ ou, dans des structures réticulées et/ou réticulées dans l'espace, indépendamment les uns des autres à $OR^1$ ou $O_{1/2}$,
- $R^1$, $R^2$, $R^4$, $R^6$ et $R^9$ correspondant à l'hydrogène et $R^5$ à un radical alkyle linéaire, ramifié ou cyclique de 1 à 12 atomes C et/ou à un radical aryle, $R^7$ et $R^8$ à un radical alkyle linéaire, ramifié et/ou cyclique de 1 à 4 atomes C, et
- HX représentant un acide, X étant un radical acide inorganique ou organique,
- avec $0 \leq x \leq 1$, $0 \leq y \leq 1$, $0 \leq u \leq 1$, $v = 0$ ou 1, $a \geq 1$, $c \geq 0$, $d \geq 0$, $w \geq 0$, $e \geq 0$ et $(a+c+d+w) \geq 2$,
- la composition étant exempte de solvants organiques et aucun alcool supplémentaire n'étant libéré lors de la réticulation, la teneur en solvants organiques de la composition étant inférieure à 5 % en poids, et
- présentant un pH compris entre 1 et 5,4,
- A dans l'élément structural correspondant à un radical bis-aminoalkyle, dérivé de la formule générale II

$$(OR^1)_3Si-A-Si(OR^1)_3 \qquad (II)$$

A correspondant à un groupe bis-amino-fonctionnel de formule III

$$-(CH_2)_i-[NH(CH_2)_f]_gNH[(CH_2)_{f*}NH]_{g*}-(CH_2)_{i*}- \qquad (III),$$

dans laquelle i, i*, f, f*, g ou g* sont identiques ou différents, avec i et i* = 1 à 8, f et f* = 1, 2 ou 3, g et g* = 0, 1 ou 2, et $R^1$ correspond à un radical alkyle linéaire, cyclique et/ou ramifié de 1 à 4 atomes C, et
- C dans l'élément structural correspondant à un radical alkyle dérivé de la formule générale VI

$$C-Si(R^5)_y(OR^4)_{3-y} \qquad (VI)$$

avec y = 0 ou 1, C correspondant à un radical alkyle linéaire, ramifié ou cyclique de 1 à 20 atomes C, $R^5$ à un radical alkyle linéaire, ramifié ou cyclique de 1 à 12 atomes C et/ou à un radical aryle, $R^4$ à un radical alkyle linéaire, ramifié et/ou cyclique de 1 à 4 atomes C, et
- D dans l'élément structural correspondant à un radical époxy ou éther, dérivé de la formule générale VII

$$D-Si(R^7)_u(OR^6)_{3-u} \qquad (VII)$$

avec u = 0 ou 1, D correspondant à un radical 3-glycidoxyalkyl, 3-glycidoxypropyle, époxyalkyle, époxycycloalkyle, polyalkylglycolalkyle ou à un radical polyalkylglycol-3-propyle, $R^7$ à un radical alkyle linéaire, ramifié et/ou cyclique de 1 à 4 atomes C, et $R^6$ à un radical alkyle linéaire, ramifié et/ou cyclique de 1 à 4 atomes C, et
- E dans l'élément structural correspondant à un radical organofonctionnel, dérivé de la formule générale VIII

$$E-Si(R^8)_v(OR^9)_{3-v} \qquad (VIII)$$

avec v = 0 ou 1, $R^8$ correspondant à un radical alkyle linéaire, ramifié ou cyclique de 1 à 4 atomes C,
- E correspondant à un radical $R^{8*}-Y_m-(CH_2)_s-$, $R^{8*}$ étant un radical alkyle mono-, oligo- ou perfluoré de 1 à 9 atomes C ou un radical aryle mono-, oligo- ou perfluoré, Y correspondant en outre à un radical $CH_2$, 0, aryle ou S, et m = 0 ou 1 et s = 0 ou 2, et/ou
- E correspondant à un radical vinyle, allyle, isoprényle, à un radical mercaptoalkyle, à un radical sulfanalkyle, à un radical uréidoalkyle, à un radical acryloxyalkyle ou à un radical alcoxy linéaire, ramifié ou cyclique de 1 à 4 atomes C, et
- $R^9$ correspondant à un radical alkyle linéaire, ramifié et/ou cyclique de 1 à 4 atomes C.

**2.** Composition selon la revendication 1, **caractérisée en ce qu'**elle présente un pH compris entre 3,0 et 5,4, notamment un pH de 3,5 à 5,4.

**3.** Composition selon la revendication 1 ou 2, **caractérisée en ce que** pour l'élément structural contenant C, un radical alkyle, $c \geq 1$.

**4.** Composition selon l'une quelconque des revendications 1 à 3, **caractérisée en ce que** l'acide est l'acide formique, l'acide acétique, un sol de silice acide, l'acide acétique glacial, l'acide nitrique, l'acide sulfurique et/ou l'acide phosphorique.

**5.** Procédé de fabrication d'une composition contenant des composés de silicium bis-amino-fonctionnels et exempts de groupes alcoxy, solubles dans l'eau, de l'eau et un acide, **caractérisé en ce que**

a) de l'eau, un acide, éventuellement un alcool et éventuellement un catalyseur sont chargés initialement, et

- au moins un bis-aminoalcoxysilane de formule II

$$(OR^1)_3Si\text{-}A\text{-}Si(OR^1)_3 \qquad (II)$$

A correspondant à un groupe bis-amino-fonctionnel de formule III

$$\text{-}(CH_2)_i\text{-}[NH(CH_2)_f]_g NH[(CH_2)_{f^*}NH]_{g^*}\text{-}(CH_2)_{i^*}\text{-} \qquad (III),$$

dans laquelle i, i*, f, f*, g ou g* sont identiques ou différents, avec i et/ou i* = 1 à 8, f et/ou f* = 1, 2 ou 3, g et/ou g* = 0, 1 ou 2, et $R^1$ correspond à un radical alkyle linéaire, cyclique et/ou ramifié de 1 à 4 atomes C, et/ou ses produits de condensation, et éventuellement
- au moins un alkylalcoxysilane de formule générale VI

$$C\text{-}Si(R^5)_y(OR')_{3-y} \qquad (VI)$$

avec y = 0 ou 1, C correspondant à un radical alkyle linéaire, ramifié ou cyclique de 1 à 20 atomes C, $R^5$ à un radical alkyle linéaire, ramifié ou cyclique de 1 à 12 atomes C et/ou à un radical aryle, $R^4$ à un radical alkyle linéaire, ramifié et/ou cyclique de 1 à 4 atomes C, et/ou ses produits de condensation, et éventuellement
- au moins un époxy- ou éther-alcoxysilane de formule générale VII

$$D\text{-}Si(R^7)_u(OR^8)_{3-u} \qquad (VII)$$

avec u = 0 ou 1, D correspondant à un radical 3-glycidoxyalkyl, 3-glycidoxypropyle, époxyalkyle, époxycycloalkyle, polyalkylglycolalkyle ou à un radical polyalkylglycol-3-propyle, $R^7$ à un radical alkyle linéaire, ramifié ou cyclique de 1 à 4 atomes C, et $R^6$ à un radical alkyle linéaire, ramifié et/ou cyclique de 1 à 4 atomes C, et/ou ses produits de condensation, et éventuellement
- au moins un alcoxysilane organofonctionnel de formule VIII

$$E\text{-}Si(R^8)_v(OR^9)_{3-v} \qquad (VIII)$$

avec v = 0 ou 1, $R^8$ correspondant à un radical alkyle linéaire, ramifié ou cyclique de 1 à 4 atomes C, E correspondant à un radical $R^{8*}\text{-}Y_m\text{-}(CH_2)_s\text{-}$, $R^{8*}$ étant un radical alkyle mono-, oligo- ou perfluoré de 1 à 9 atomes C ou un radical aryle mono-, oligo- ou perfluoré, Y correspondant en outre à un radical $CH_2$, 0, aryle ou S, et m = 0 ou 1 et s = 0 ou 2, ou un radical vinyle, allyle, isoprényle, à un radical mercaptoalkyle, à un radical sulfanalkyle, à un radical uréidoakyle, à un radical acryloxyalkyle ou à un radical alcoxy linéaire, ramifié ou cyclique de 1 à 4 atomes C, et $R^9$ correspondant à un radical alkyle linéaire, ramifié et/ou cyclique de 1 à 4 atomes C, et/ou ses produits de condensation,
- sont hydrolysés, et l'alcool est éliminé, le pH de la composition après l'élimination de l'alcool étant compris entre 1,0 et 5,4, ou

b) une solution aqueuse d'au moins un silane soluble dans l'eau de formule générale II, telle que définie dans la revendication 5, et éventuellement de formule VII, telle que définie dans la revendication 5, ou ses produits de condensation solubles dans l'eau, ou les produits d'hydrolyse solubles dans l'eau d'un silane de formule générale VI, telle que définie dans la revendication 5, est chargée initialement,

- et hydrolysée, et l'alcool est éliminé, le pH de la composition après l'élimination de l'alcool étant compris entre 1,0 et 5,4.

6. Procédé de fabrication d'une composition contenant des composés de silicium bis-amino-fonctionnels et exempts de groupes alcoxy, solubles dans l'eau, de l'eau et un acide, **caractérisé en ce qu'**un solvant organique, de l'eau, un acide et/ou éventuellement un catalyseur sont chargés initialement et

- au moins un bis-aminoalcoxysilane de formule II

$$(OR^1)_3Si-A-Si(OR^1)_3 \qquad (II)$$

A correspondant à un groupe bis-amino-fonctionnel de formule III

$$-(CH_2)_i-[NH(CH_2)_f]_gNH[(CH_2)_{f^*}-NH]_{g^*}(CH_2)_{i^*}- ( \qquad VIII),$$

dans laquelle i, i\*, f, f\*, g ou g\* sont identiques ou différents, avec i et i\* = 1 à 8, f et f\* = 1, 2 ou 3, g et g\* = 0, 1 ou 2, et $R^1$ correspond à un radical alkyle linéaire, cyclique et/ou ramifié de 1 à 4 atomes C, et/ou ses produits de condensation, et éventuellement
- au moins un alkylalcoxysilane de formule générale VI

$$C-Si(R^5)_y(OR^4)_{3-y} \qquad (VI)$$

avec y = 0 ou 1, C correspondant à un radical alkyle linéaire, ramifié ou cyclique de 1 à 20 atomes C, $R^5$ à un radical alkyle linéaire, ramifié ou cyclique de 1 à 12 atomes C et/ou à un radical aryle, $R^4$ à un radical alkyle linéaire, ramifié et/ou cyclique de 1 à 4 atomes C, et/ou ses produits de condensation, et éventuellement
- au moins un époxy- ou éther-alcoxysilane de formule générale VII

$$D-Si(R^7)_u(OR^6)_{3-u} \qquad (VII)$$

avec u = 0 ou 1, D correspondant à un radical 3-glycidoxyalkyl, 3-glycidoxypropyle, époxyalkyle, époxycycloalkyle, polyalkylglycolalkyle ou à un radical polyalkylglycol-3-propyle, $R^7$ à un radical alkyle linéaire, ramifié ou cyclique de 1 à 4 atomes C, et $R^6$ à un radical alkyle linéaire, ramifié et/ou cyclique de 1 à 4 atomes C, et/ou ses produits de condensation, et éventuellement
- au moins un alcoxysilane organofonctionnel de formule VIII

$$E-Si(R^8)_v(OR^9)_{3-v} \qquad (VIII)$$

avec v = 0 ou 1, $R^8$ correspondant à un radical alkyle linéaire, ramifié ou cyclique de 1 à 4 atomes C, E correspondant à un radical $R^{8^*}-Y_m-(CH_2)_s-$, $R^{8^*}$ étant un radical alkyle mono-, oligo- ou perfluoré de 1 à 9 atomes C ou un radical aryle mono-, oligo- ou perfluoré, Y correspondant en outre à un radical $CH_2$, 0, aryle ou S, et m = 0 ou 1 et s = 0 ou 2, ou un radical vinyle, allyle, isoprényle, à un radical mercaptoalkyle, à un radical sulfanalkyle, à un radical uréidoalkyle, à un radical acryloxyalkyle ou à un radical alcoxy linéaire, ramifié ou cyclique de 1 à 4 atomes C, et $R^9$ correspondant à un radical alkyle linéaire, ramifié et/ou cyclique de 1 à 4 atomes C, et/ou ses produits de condensation,
- sont hydrolysés, et l'alcool de l'hydrolyse et le solvant sont éliminés, et
- le pH de la composition après l'élimination de l'alcool de l'hydrolyse et du solvant est compris entre 1, 0 et 5,4.

7. Procédé selon la revendication 6, **caractérisé en ce que** le solvant comprend au moins un alcool choisi dans le groupe constitué par le méthanol, l'éthanol, le propanol et/ou leurs mélanges.

8. Procédé selon l'une quelconque des revendications 5 à 7, **caractérisé en ce que** les silanes de formule générale II, IV, VI, VII et/ou VIII, leurs produits de condensation et/ou leurs mélanges sont ajoutés dans une solution aqueuse et/ou alcoolique, notamment **en ce que** les silanes de formule générale II, IV, VI, VII ou VIII et/ou leurs produits de condensation sont ajoutés successivement ou en mélange.

**9.** Procédé selon l'une quelconque des revendications 6 à 8, **caractérisé en ce qu'**un alcool est chargé initialement, au moins un bis-aminoalcoxysilane de formule générale II et/ou son produit de condensation sont ajoutés, et hydrolysés par ajout d'eau et éventuellement d'un acide et éventuellement condensés, puis notamment au moins un alkylalcoxysilane de formule VI et éventuellement au moins un aminoalkylalcoxysilane de formule IV, éventuellement au moins un époxy- ou éther-alcoxysilane de formule générale VII et éventuellement au moins un alcoxysilane organofonctionnel de formule VIII et/ou leurs produits de condensation sont ajoutés successivement ou en mélange.

**10.** Procédé de fabrication d'une composition contenant des composés de silicium bis-amino-fonctionnels et exempts de groupes alcoxy, solubles dans l'eau, de l'eau et un acide, **caractérisé en ce que**

- au moins un époxy- ou éther-alcoxysilane de formule générale VII

$$D\text{-}Si(R^7)_u(OR^6)_{3-u} \qquad (VII)$$

avec u = 0 ou 1, D correspondant à un radical 3-glycidoxyalkyl, 3-glycidoxypropyle, époxyalkyle, époxycycloalkyle, polyalkylglycolalkyle ou à un radical polyalkylglycol-3-propyle, $R^7$ à un radical alkyle linéaire, ramifié ou cyclique de 1 à 4 atomes C, et $R^6$ à un radical alkyle linéaire, ramifié et/ou cyclique de 1 à 4 atomes C, et/ou ses produits de condensation, et/ou
- au moins un alkylalcoxysilane de formule générale VI

$$C\text{-}Si(R^5)_y(OR^4)_{3-y} \qquad (VI)$$

avec y = 0 ou 1, C correspondant à un radical alkyle linéaire, ramifié ou cyclique de 1 à 20 atomes C, $R^5$ à un radical alkyle linéaire, ramifié ou cyclique de 1 à 12 atomes C et/ou à un radical aryle, $R^4$ à un radical alkyle linéaire, ramifié et/ou cyclique de 1 à 4 atomes C, et/ou ses produits de condensation, et/ou
- au moins un alcoxysilane organofonctionnel de formule VIII

$$E\text{-}Si(R^8)_v(OR^9)_{3-v} \qquad (VIII)$$

avec v = 0 ou 1, $R^8$ correspondant à un radical alkyle linéaire, ramifié ou cyclique de 1 à 4 atomes C, E correspondant à un radical $R^{8*}\text{-}Y_m\text{-}(CH_2)_s\text{-}$, $R^{8*}$ étant un radical alkyle mono-, oligo- ou perfluoré de 1 à 9 atomes C ou un radical aryle mono-, oligo- ou perfluoré, Y correspondant en outre à un radical $CH_2$, 0, aryle ou S, et m = 0 ou 1 et s = 0 ou 2, ou un radical vinyle, allyle, isoprényle, à un radical mercaptoalkyle, à un radical sulfanalkyle, à un radical uréidoalkyle, à un radical acryloxyalkyle ou à un radical alcoxy linéaire, ramifié ou cyclique de 1 à 4 atomes C, et $R^9$ correspondant à un radical alkyle linéaire, ramifié et/ou cyclique de 1 à 4 atomes C, et/ou ses produits de condensation sont chargés initialement,
- et au moins partiellement hydrolysés en présence d'eau et en présence d'un acide et éventuellement d'un catalyseur et éventuellement d'un solvant, puis
- lors d'une deuxième étape d'hydrolyse,
- en présence d'eau supplémentaire et éventuellement d'acide supplémentaire,
- au moins un bis-aminoalcoxysilane de formule II

$$(OR^1)_3Si\text{-}A\text{-}Si(OR^1)_3 \qquad (II)$$

A correspondant à un groupe bis-amino-fonctionnel de formule III

$$-(CH_2)_i\text{-}[NH(CH_2)_f]_gNH[(CH_2)_{f*}NH]_{g*}\text{-}(CH_2)_{i*}\text{-} \qquad (III),$$

dans laquelle i, i*, f, f*, g ou g* sont identiques ou différents, avec i et i* = 1 à 8, f et f* = 1, 2 ou 3, g et g* = 0, 1 ou 2, et $R^1$ correspond à un radical alkyle linéaire, cyclique et/ou ramifié de 1 à 4 atomes C, et/ou ses produits de condensation
- sont hydrolysés et l'alcool est éliminé, et
- le pH de la composition après l'élimination de l'alcool est compris entre 1,0 et 5,4.

**11.** Procédé selon l'une quelconque des revendications 5 à 10, **caractérisé en ce que** des charges inorganiques sont ajoutées.

**12.** Composition pouvant être obtenue selon l'une quelconque des revendications 5 à 11.

**13.** Utilisation d'une composition selon la revendication 1 ou 12 dans des mélanges avec des compositions à base de silane, le mélange contenant éventuellement une composition comprenant des composés de silicium bis-amino-fonctionnels conjointement avec une composition à base de silane à base de silanes alkyl-, alcényl-, aryl-, époxy-, dihydroxyalkyl-, aminoalkyl-, polyalkylglycolalkyl-, halogénoalkyl-, mercaptoalkyl-, sulfanalkyl-, uréidoalkyl-, acryloxyalkyl-fonctionnels et/ou tétraalcoxy-fonctionnels et/ou leurs mélanges.

**14.** Utilisation selon la revendication 13 pour la modification, pour le traitement de surfaces de substrats et/ou pour la formation d'une couche de barrière sur des surfaces de substrats, pour l'hydrophobation, en tant que protection contre la corrosion, pour la consolidation de pierres et/ou l'oléophobation de surfaces de substrats, pour l'hydrophobation de métaux, tels que l'acier inoxydable, l'aluminium, l'acier, le titane, de verre, de plastique, de polymères, de surfaces minérales, de béton, de briques, de mortier, de chapes, de grès, de fibres naturelles, de papier, de bois, pour l'amorçage de surfaces en verre, de surfaces métalliques, de surfaces minérales, de béton, de mortier, de chapes, de grès ou de fibres naturelles, de papier, de bois, en tant que protection contre la corrosion de métaux, de béton, de mortier et/ou de briques et/ou en tant qu'additif dans des formulations aqueuses de vernis ou de résine ou en tant que revêtement anti-empreinte, en tant que protection contre la corrosion de métaux ou de surfaces métalliques non traités ou prétraités, notamment de surfaces métalliques phosphatées, chromatées, chromitées ou galvanisées, ainsi que de surfaces métalliques galvanisées qui sont de leur côté phosphatées, chromatées ou chromitées.

**15.** Utilisation d'une composition selon la revendication 1 ou 12 pour la modification, pour le traitement de surfaces de substrats et/ou pour la formation d'une couche de barrière sur des surfaces de substrats, pour l'hydrophobation, en tant que protection contre la corrosion, pour la consolidation de pierres et/ou l'oléophobation de surfaces de substrats, pour l'hydrophobation de métaux, tels que l'acier inoxydable, l'aluminium, l'acier, le titane, de verre, de plastique, de polymères, de surfaces minérales, de béton, de briques, de mortier, de chapes, de grès, de fibres naturelles, de papier, de bois, pour l'amorçage de surfaces en verre, de surfaces métalliques, de surfaces minérales, de béton, de mortier, de chapes, de grès ou de fibres naturelles, de papier, de bois, en tant que protection contre la corrosion de métaux, de béton, de mortier et/ou de briques et/ou en tant qu'additif dans des formulations aqueuses de vernis ou de résine ou en tant que revêtement anti-empreinte, en tant que protection contre la corrosion de métaux ou de surfaces métalliques non traités ou prétraités, notamment de surfaces métalliques phosphatées, chromatées, chromitées ou galvanisées, ainsi que de surfaces métalliques galvanisées qui sont de leur côté phosphatées, chromatées ou chromitées.

Figur 1

Figur 2

**EP 2 183 321 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005004872 A1
- EP 0590270 A2
- DE 10335178 A1
- US 5051129 A
- EP 0716128 A1
- EP 1031593 A2
- WO 0039177 A2

- US 6955728 B1
- WO 2006010666 A1
- WO 2004076717 A1
- WO 2004076718 A1
- US 5206285 A
- EP 1760128 A1
- DE 102004037045 A1